(19) Europäisches Patentamt
European Patent Office
Office européen des brevets

(11) EP 2 857 860 A1

(12) **EUROPEAN PATENT APPLICATION**
published in accordance with Art. 153(4) EPC

(43) Date of publication:
**08.04.2015 Bulletin 2015/15**

(21) Application number: **13801232.3**

(22) Date of filing: **03.06.2013**

(51) Int Cl.:
***G01S 7/41*** *(2006.01)* ***G01S 13/52*** *(2006.01)*
***G01S 13/58*** *(2006.01)*

(86) International application number:
**PCT/JP2013/003477**

(87) International publication number:
**WO 2013/183271 (12.12.2013 Gazette 2013/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.06.2012 JP 2012128258**
**26.12.2012 JP 2012283357**
**28.12.2012 JP 2012286833**

(71) Applicant: **Panasonic Intellectual Property Management Co., Ltd.**
**Osaka-shi, Osaka 540-6207 (JP)**

(72) Inventors:
- **SUGINO, Satoshi**
  **Osaka 540-6207 (JP)**
- **MASUDA, Tatsuo**
  **Osaka 540-6207 (JP)**
- **MURAKAMI, Tadashi**
  **Osaka 540-6207 (JP)**

(74) Representative: **Appelt, Christian W.**
**Boehmert & Boehmert**
**Anwaltspartnerschaft mbB**
**Patentanwälte Rechtsanwälte**
**Pettenkoferstrasse 20-22**
**80336 München (DE)**

(54) **SIGNAL PROCESSING DEVICE**

(57) The signal processing device in accordance with the present invention includes: a frequency analyzer to convert a sensor signal corresponding to a radio wave reflected by an object into a frequency domain signal, and extract, by use of a group of individual filter banks with different frequency bands, signals of the individual filter banks from the frequency domain signal; a normalizer to normalize intensities of the signal passing through the individual filter banks by a sum of the signals extracted by the frequency analyzer or a sum of intensities of signals passing through predetermined filter banks, and output normalized intensities; and a recognizer to perform a recognition process of identifying the object based on at least one of a frequency distribution and a component ratio of the normalized intensities calculated from the normalized intensities of the individual filter banks outputted from the normalizer.

*FIG. 1*

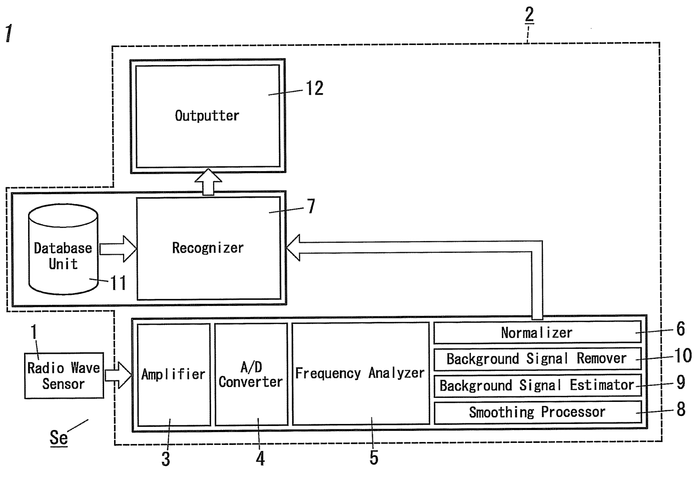


EP 2 857 860 A1

## Description

### Technical Field

The present invention relates to a signal processing device for performing signal processing on sensor signals from a radio wave sensor.

### Background Art

In the past, there has been proposed a lighting system with a configuration shown in **FIG. 56** (document 1 [JP 2011-47779 A]). This lighting system includes: an object detection device **101** including a sensor **110** configured to identify presence or absence of an intended object of detection in a detection area and output a sensor signal; and a lighting fixture **102** whose lighting state is controlled by the object detection device **101.**

The sensor **110** is a millimeter wave sensor configured to send a millimeter wave to the detection area and receive a millimeter wave reflected by the intended object of detection moving in the detection area and output a sensor signal with a Doppler frequency corresponding to a difference between frequencies of the sent millimeter wave and the received millimeter wave.

The object detection device **101** includes an amplifier circuit **111** configured to divide the sensor signal outputted from the sensor **110** into components of frequency bands and amplify the components of frequency bands, and a judging unit **112** configured to compare an output of the amplifier circuit **111** with a predetermined threshold to determine whether the intended object of detection is present. Further, the object detection device **101** includes a lighting control unit **113** configured to control the lighting state of the lighting fixture **102** according to the determination result of the judging unit **112.**

Further, the object detection device **101** includes a frequency analyzing unit **114** configured to measure intensities of signals of individual frequencies of the sensor signal outputted from the sensor **110.** Further, the object detection device **101** includes a noise remover (a noise judging unit **115** and a switching circuit **116**) configured to reduce, by use of the analysis result of the frequency analyzing unit **114,** effects of noise of a particular frequency which is present constantly. In this regard, the frequency analyzing unit **114** may include an FFT (fast Fourier transform) analyzer. The judging unit **112,** the lighting control unit **113,** and the noise remover are included in a control block **117** mainly composed of a microcomputer. The amplifier circuit **111** constitutes a signal processor configured to output signals of individual predetermined frequency bands of the sensor signal. Note that, document 1 discloses that the signal processor may be constituted by an FFT analyzer, a digital filter, and the like.

The amplifier circuit **111** includes a plurality of amplifiers **118** including operational amplifiers, and thus frequency bands for amplifying signals by the amplifiers **118** can be set by adjusting various types of parameters of circuits constituting each amplifier **118.** In short, each of the amplifiers **118** functions as a bandpass filter allowing passage of a signal with a particular frequency band. Consequently, the amplifier circuit **111** divides the sensor signal into signals of a plurality of frequency bands by the plurality of amplifiers **118** connected in parallel, and amplifies the signals of frequency bands by the amplifiers **118** and outputs the resultant signals individually.

The judging unit **112** includes comparators **119** individually corresponding to the amplifiers **118.** Each comparator **119** performs A/D conversion of an output of the corresponding amplifier **118** into a digital value and compares the resultant digital value with a predetermined threshold. Thereby the judging unit **112** identifies presence or absence of the intended object of detection. The thresholds of the comparators **119** are individually set according to the corresponding pass bands (i.e., the corresponding amplifiers **118**). When the output of the amplifier **118** is out of a range determined by the threshold, the comparator **119** outputs an H level signal. The threshold Vth of the individual pass bands set in the initial state (shipping state) is represented by **Vth=Vavg±Vppini. Vppini** denotes a maximum of a peak-to-peak **Vpp** of an output value V of the amplifier **118** which is measured in a constant period under a condition where there is no reflection of electromagnetic waves (such as inside a radio wave dark room). **Vavg** denotes an average of the output value **V.** Further, the judging unit **112** includes a logical disjunction circuit **120** configured to calculate logical disjunction of comparison results. When the signals include at least one H level signal, the logical disjunction circuit **120** outputs a detection signal indicative of "detection state" which means that the object of detection target is present. In contrast, when all of the signals are L level signals, the logical disjunction circuit **120** outputs a detection signal indicative of "non-detection state" which means that the object of detection target is not present. The detection signal shows **"1"** when being in the detection state, and shows "0" when being in the non-detection state.

The noise remover includes the noise judging unit **115** configured to determine whether noise of a particular frequency which is present constantly is present, based on the output from the frequency analyzing unit **114,** and the switching circuit **116** configured to switch output states of the amplifiers **118** with regard to the judging unit **112** according to the determination result of the noise judging unit **115.**

The switching circuit **116** includes switches **121** individually interposed between the amplifiers **118** of the amplifier circuit **111** and the comparators **119** of the judging unit **112.** In the initial state, all of the switches **121** are turned on. By individually turning on or off the switches **121** by outputs from the noise judging unit **115,** outputs from the amplifiers **118** to the judging unit **112** are individually set to valid or invalid. In short, in the switching circuit **116,** by turning off the switch **121** corresponding to the amplifier **118** associated with a desired pass band by the output from the noise judging unit **115,** it is possible to invalidate the output of the amplifier **118** of interest.

The noise judging unit **115** reads in the signal intensities (voltage intensities) of frequencies (frequency components) of the sensor signal outputted from the frequency analyzing unit **114** and store them in a memory (not shown), and determines whether noise with a particular frequency which is present constantly is present by use of the stored data.

When the noise judging unit 115 determines that noise with the particular frequency is present constantly, the noise judging unit **115** controls the switching circuit **116** so as to turn off the switch **121** between the judging unit **112** and the amplifier **118** associated with the pass band including the frequency of the noise. Consequently, when the noise with the particular frequency is present constantly, the output of the amplifier circuit **111** to the judging unit **112** is invalidated with regard to the frequency band including the frequency of the noise. The on or off state of the switch **121** is updated each time the noise judging unit **115** determines "normal state".

In the object detection device **101** disclosed in document **1,** it is considered that components other than the sensor **110** and the lighting control unit **113** constitute a signal processing device configured to perform signal processing on the sensor signal of the sensor **110** constituted by a millimeter sensor. However, when the object detection device **101** is used in outdoors for example, due to motion (e.g., motion of sway of branches and leaves of trees and motion of sway of electric wires) of an object other than a detection target (intended object of detection), false detection in which an unintended object of detection is misidentified as the intended object of detection may occur.

## Summary of Invention

In view of the above insufficiency, the present invention has aimed to propose a signal processing device capable of reducing a probability of false detection caused by motion of an object other than an intended object of detection.

The signal processing device of the first aspect in accordance with the present invention includes: a frequency analyzer configured to convert a sensor signal corresponding to a radio wave reflected by an object into a frequency domain signal, and extract, by use of a group of individual filter banks with different frequency bands, signals of the individual filter banks from the frequency domain signal; a normalizer configured to normalize intensities of the signals individually passing through the individual filter banks by a sum of the signals extracted by the frequency analyzer or a sum of intensities of signals individually passing through predetermined filter banks selected from the individual filter banks to obtain normalized intensities, and output the normalized intensities; and a recognizer configured to perform a recognition process of identifying the object based on at least one of a frequency distribution and a component ratio of the normalized intensities which are calculated from the normalized intensities of the individual filter banks outputted from the normalizer.

The signal processing device of the second aspect in accordance with the present invention realized in combination with the first aspect further includes: an amplifier configured to amplify the sensor signal; and an A/D converter configured to convert the sensor signal amplified by the amplifier into a sensor signal in digital form and output the sensor signal in digital form. The frequency analyzer is configured to convert the sensor signal outputted from the A/D converter into the frequency domain signal, and extract the signals of the individual filter banks of the group of individual filter banks.

In the signal processing device of the third aspect in accordance with the present invention realized in combination with the first or second aspect, the frequency analyzer has a function of converting the sensor signal outputted from the A/D converter into the frequency domain signal by discrete cosine transform. Each of the individual filter banks includes a plurality of frequency bins. The signal processing device further includes a smoothing processor which is interposed between the frequency analyzer and the normalizer and has at least one of a function of performing smoothing processing on intensities of signals of the individual frequency bins in a frequency domain for each of the individual filter banks and another function of performing smoothing processing on intensities of signals of the individual frequency bins in a time axis direction for each of the individual filter banks.

The signal processing device of the fourth aspect in accordance with the present invention realized in combination with any one of the first to third aspects further includes a background signal remover configured to remove a background signal from each of the signals individually passing through the individual filter banks.

In the signal processing device of the fifth aspect in accordance with the present invention realized in combination with the fourth aspect, the background signal remover is configured to remove the background signals by individually subtracting the background signals from the signals passing through the individual filter banks.

In the signal processing device of the sixth aspect in accordance with the present invention realized in combination with the fifth aspect, the background signal remover is configured to remove the background signals each of which is defined as an average in a time axis of a plurality of signals obtained in advance of a corresponding one of the individual filter banks.

In the signal processing device of the seventh aspect in accordance with the present invention realized in combination with the fifth aspect, the background signal remover is configured to remove the background signals each of which is defined as an immediately preceding signal of a corresponding one of the individual filter banks.

In the signal processing device of the eighth aspect in accordance with the present invention realized in combination with the fourth aspect, the background signal remover is an adaptive filter configured to remove the background signals by filtering the background signals in a frequency domain.

In the signal processing device of the ninth aspect in accordance with the present invention realized in combination with the fourth aspect, the background signal remover is configured to remove the background signals of individual filter banks from the signals of the individual filter banks before being normalized by the normalizer.

In the signal processing device of the tenth aspect in accordance with the present invention realized in combination with the eighth aspect, an adaptive algorithm of the adaptive filter is an LMS algorithm of discrete cosine transform.

In the signal processing device of the eleventh aspect in accordance with the present invention realized in combination with the fourth aspect, each of the individual filter banks includes a plurality of frequency bins. One of the frequency bins in which the background signal is constantly included is treated as a particular frequency bin. The background signal remover is configured to remove the background signal by not using an intensity of an actual signal of the particular frequency bin but replacing the intensity of the actual signal of the particular frequency bin by an intensity of a signal estimated based on intensities of signals of frequency bins adjacent to the particular frequency bin.

In the signal processing device of the twelfth aspect in accordance with the present invention realized in combination with any one of the first to eleventh aspects, the recognizer is configured to identify the object by performing pattern recognition by principle component analysis or KL transform as the recognition process.

In the signal processing device of the thirteenth aspect in accordance with the present invention realized in combination with any one of the first to eleventh aspects, the recognizer is configured to identify the object by performing a recognition process based on multiple linear regression analysis as the recognition process.

In the signal processing device of the fourteenth aspect in accordance with the present invention realized in combination with any one of the first to eleventh aspects, the recognizer is configured to identify the object by performing a recognition process based on a neural network as the recognition process.

In the signal processing device of the fifteenth aspect in accordance with the present invention realized in combination with any one of the first to fourteenth aspects, the recognizer is configured to determine an identification result by majority decision based on results obtained by performing the recognition process an odd number of times.

The signal processing device of the sixteenth aspect in accordance with the present invention realized in combination with any one of the first to fifteenth aspects is configured to, only when a sum of intensities of the signals of the individual filter banks before being normalized by the normalizer is equal to or more than a predetermined value, allow the recognizer to perform the recognition process or treat a result of the recognition process by the recognizer as being valid.

The signal processing device of the seventeenth aspect in accordance with the present invention realized in combination with the sixteenth aspect further includes a threshold setter configured to change the predetermined value.

In the signal processing device of the eighteenth aspect in accordance with the present invention realized in combination with the seventeenth aspect, the threshold setter is configured to set the predetermined value based on pre-normalized intensities of signals passing through the individual filter banks in a period which starts from time of activation of a radio wave sensor outputting the sensor signal and ends after a lapse of a predetermined time period.

In the signal processing device of the nineteenth aspect in accordance with the present invention realized in combination with the seventeenth or eighteenth aspect, the threshold setter is configured to, when a state where the recognizer determines presence of the object continues for a predetermined time period or more, or when a state where the recognizer determines absence of the object continues for a predetermined time period or more, reset the predetermined value.

The signal processing device of the twentieth aspect in accordance with the present invention realized in combination with any one of the first to nineteenth aspect includes: a signal component extractor configured to extract a signal component resulting from motion of the object from each of the normalized intensities of the individual filter banks; and a noise determiner configured to, when an amount of change per unit time in the signal component resulting from motion of the object of at least one of the individual filter banks is equal to or more than a first predetermined value, prohibit the recognition process by the recognizer or treat a result of the recognition process by the recognizer as being invalid.

In the signal processing device of the twenty-first aspect in accordance with the present invention realized in combination with the twenty aspect, the noise determiner is configured to prohibit the recognition process by the recognizer or treat a result of the recognition process by the recognizer as being invalid, until a lapse of a predetermined time period from time when an amount of change per unit time is equal to or more than the first predetermined value.

In the signal processing device of the twenty-second aspect in accordance with the present invention realized in combination with the twentieth or twenty-first aspect, the noise determiner is configured to prohibit the recognition process by the recognizer or treat a result of the recognition process by the recognizer as being invalid, until a lapse of a predetermined time period from time when the amount of change per unit time is equal to or less than a second predetermined value smaller than the first predetermined value.

The signal processing device of the twenty-third aspect in accordance with the present invention realized in combination with any one of the first to nineteenth aspects includes a noise determiner configured to, when an amount of change per unit time in at least one of the intensities of the signals passing through the individual filter banks is equal to or more than a first predetermined value, prohibit the recognition process by the recognizer or treat a result of the recognition process by the recognizer as being invalid.

In the signal processing device of the twenty-fourth aspect in accordance with the present invention realized in combination with the twenty-third aspect, the noise determiner is configured to prohibit the recognition process by the recognizer or treat a result of the recognition process by the recognizer as being invalid, until a lapse of a predetermined time period from time when an amount of change per unit time is equal to or more than the first predetermined value.

In the signal processing device of the twenty-fifth aspect in accordance with the present invention realized in combination with the twenty-third or twenty-fourth aspect, the noise determiner is configured to prohibit the recognition process by the recognizer or treat a result of the recognition process by the recognizer as being invalid, until a lapse of a predetermined time period from time when the amount of change per unit time is equal to or less than a second predetermined value smaller than the first predetermined value.

**Brief Description of the Drawings**

**FIG. 1** is a block diagram illustrating a sensor device including a radio wave sensor and **a** signal processing device according to the embodiment **1.**

**FIG. 2** is an explanatory view illustrating a normalizer of the signal processing device of the embodiment **1.**

**FIG. 3** is an explanatory view illustrating the normalizer of the signal processing device of the embodiment **1.**

**FIG. 4** is an explanatory view illustrating the normalizer of the signal processing device of the embodiment **1.**

**FIG. 5** is an explanatory view illustrating a smoothing processor used in the signal processing device of the embodiment **1.**

**FIG. 6** is an explanatory view illustrating the smoothing processor used in the signal processing device of the embodiment **1.**

**FIG. 7** is an explanatory view illustrating the smoothing processor used in the signal processing device of the embodiment **1.**

**FIG. 8** is an explanatory view illustrating an example of a background remover of the signal processing device according to the embodiment **1.**

**FIG. 9** is an explanatory view illustrating the example of the background remover of the signal processing device according to the embodiment **1.**

**FIG. 10** is an explanatory view illustrating the example of the background remover of the signal processing device according to the embodiment **1.**

**FIG. 11** is an explanatory view illustrating another example of the background remover of the signal processing device according to the embodiment **1.**

**FIG. 12** is an explanatory view illustrating another example of the background remover of the signal processing device according to the embodiment **1.**

**FIG. 13** is an explanatory view illustrating another example of the background remover of the signal processing device according to the embodiment **1.**

**FIG. 14** is a block diagram illustrating an adaptive filter constituting another example of the background remover of the signal processing device according to the embodiment **1.**

**FIG. 15** is an explanatory view illustrating a recognition process by principle component analysis of the signal processing device according to the embodiment **1.**

**FIG. 16** is an explanatory view illustrating the recognition process by principle component analysis of the signal processing device according to the embodiment **1.**

**FIG. 17** is an explanatory view illustrating a recognition process by principle component analysis of the signal processing device according to the embodiment **1.**

**FIG. 18** is an explanatory view illustrating a usage example of the sensor device according to the embodiment **1.**

**FIG. 19** is an explanatory view illustrating the usage example of the sensor device according to the embodiment **1.**

**FIG. 20** is a waveform chart illustrating a sensor signal from the radio wave sensor of the sensor device according to the embodiment **1.**

**FIG. 21** is an explanatory view illustrating output of the normalizer of the signal processing device according to the embodiment **1.**

**FIG. 22** is an explanatory view illustrating an output signal of the signal processing device according to the embodiment **1**

**FIG. 23** is an explanatory view illustrating a usage example of the sensor device including the radio wave sensor and the signal processing device according to the embodiment **1.**

**FIG. 24** is a waveform chart illustrating the sensor signal of the radio wave sensor of the sensor device according to the embodiment **1.**

**FIG. 25** is an explanatory view illustrating the output signal of the signal processing device according to the embodiment **1.**

**FIG. 26** is an explanatory view illustrating output of the normalizer of the signal processing device according to the embodiment **1.**

**FIG. 27** is an explanatory view illustrating the output signal of the signal processing device according to the embodiment **1.**

**FIG. 28** is an explanatory view illustrating an identification process by multiple linear regression analysis of the signal processing device according to the embodiment **1.**

**FIG. 29** is another explanatory view illustrating the identification process by multiple linear regression analysis of the signal processing device according to the embodiment **1.**

**FIG. 30** is another explanatory view illustrating the identification process by multiple linear regression analysis of the signal processing device according to the embodiment **1.**

**FIG. 31** is an explanatory view illustrating majority decision by an identifier of the signal processing device according to the embodiment **1.**

**FIG. 32** is an explanatory view illustrating the signal processing device according to the embodiment **1.**

**FIG. 33** is an explanatory view illustrating the signal processing device according to the embodiment **1.**

**FIG. 34** is an explanatory view illustrating a group of filter banks according to the embodiment **1.**

**FIG. 35** is a flow chart of operation according to the embodiment **1.**

**FIG. 36** is a waveform chart of the sensor signal from the radio wave sensor of the sensor device according to the embodiment **1.**

**FIG. 37** is a waveform chart of the sensor signal from the radio wave sensor of the sensor device according to the embodiment **1.**

**FIG. 38** is an explanatory view illustrating the output signal of the signal processing device according to the embodiment **1.**

**FIG. 39** is an explanatory view illustrating the output signal of the signal processing device according to the embodiment **1.**

**FIG. 40** is an explanatory view illustrating the output signal of the signal processing device according to the embodiment **1.**

**FIG. 41** is an explanatory view illustrating the output signal of the signal processing device according to the embodiment **1.**

**FIG. 42** is an explanatory view illustrating operation of a state machine of the signal processing device according to the embodiment **1.**

**FIG. 43** is an explanatory view illustrating operation of the state machine of the signal processing device according to the embodiment **1.**

**FIG. 44** is an explanatory view illustrating operation of the state machine of the signal processing device according to the embodiment **1.**

**FIG. 45** is an explanatory view illustrating operation of the state machine of the signal processing device according to the embodiment **1.**

**FIG. 46** is a schematically configuration diagram illustrating a neural network of the signal processing device according to the embodiment **1.**

**FIG. 47** is a block diagram illustrating a sensor device including a radio wave sensor and a signal processing device according to the embodiment **2.**

**FIG. 48** is a waveform chart of a signal component separated by the signal processing device according to the embodiment 2 by use of multiple linear regression analysis.

**FIG. 49** is a waveform chart of an output signal in a case where the signal processing device according to the embodiment 2 does not determine whether to perform a recognition process.

**FIG. 50** is a waveform chart of the output signal in a case where the signal processing device according to the embodiment 2 determines whether to perform the recognition process.

**FIG. 51** is a waveform chart of part of a signal component separated by the signal processing device according to the embodiment 2 by use of multiple linear regression analysis.

**FIG. 52** is a block diagram illustrating another sensor device including the radio wave sensor and the signal processing device according to the embodiment 2 **FIG. 53** is a waveform chart of a signal intensity according to the embodiment 2.

**FIG. 54 is** a waveform chart of the output signal in a case where the signal processing device according to the embodiment 2 does not determine whether to perform a recognition process.

**FIG. 55** is a waveform chart of the output signal in a case where the signal processing device according to the embodiment 2 determines whether to perform the recognition process.

**FIG. 56** is a block diagram illustrating a configuration of a conventional lighting system.

**Description of Embodiments**

**(Embodiment 1)**

Hereinafter, a signal processing device **2** of the present embodiment is described with reference to **FIG. 1** to **FIG. 46.**

The signal processing device **2** is configured to perform signal processing on a sensor signal outputted from a radio wave sensor **1** which is configured to send a radio wave and receive the radio wave reflected by an object. Note that, **FIG. 1** is a block diagram illustrating a sensor device Se including the radio wave sensor **1** and the signal processing device **2.**

The radio wave sensor 1 may be a Doppler sensor. The Doppler sensor sends a radio wave with a predetermined frequency to a detection area, and receives a radio wave reflected by an object moving in the detection area, and outputs a sensor signal with a Doppler frequency corresponding to a difference between frequencies of the sent radio wave and the received radio wave. Therefore, a sensor signal (sensor signal outputted from the radio wave sensor **1**) is an analog time axis signal corresponding to motion of the object. As described above, the radio wave sensor **1** sends a radio wave to a predetermined detection area. When receiving a radio wave from the detection area, the radio wave sensor **1** outputs a sensor signal (analog sensor signal) corresponding to the received radio wave.

The radio wave sensor **1** includes a transmitter for sending a radio wave to the detection area, a receiver for receiving a radio wave reflected by the object in the detection area, and a mixer for outputting a sensor signal with a frequency corresponding to a difference between frequencies of the sent radio wave and the received radio wave. The transmitter includes an antenna for transmission. Further, the receiver includes an antenna for reception.

Note that, a radio wave sent from the transmitter may be a millimeter wave with the predetermined frequency of 24.15 GHz, for example. The radio wave sent from the transmitter is not limited to a millimeter wave and may be a micro wave. Further, the predetermined frequency of the radio wave to be sent is not limited particularly. When the object reflecting the radio wave is moving in the detection area, a frequency of a reflection wave is shifted by the Doppler effect. Further, the radio wave sensor **1** is not limited to having a particular configuration, and may be a double frequency (multiple frequency) Doppler sensor, an FMCW (Frequency Modulated Continuous Wave) Doppler sensor, or the like.

The signal processing device **2** includes an amplifier **3** configured to amplify the sensor signal (analog sensor signal outputted from the radio wave sensor **1**), and an A/D converter **4** configured to convert the sensor signal (analog sensor signal) amplified by the amplifier **3** into a digital sensor signal, and output the digital sensor signal.

The amplifier **3** may be constituted by an amplifier including an operational amplifier, for example.

The A/D converter **4** converts the analog sensor signal amplified by the amplifier **3** into the digital sensor signal, and outputs the digital sensor signal. The A/D converter **4** has a sampling rate of $1 \times 10^{3s}$ sps (sample per second). However, the sampling rate is not limited particularly.

Further, the signal processing device 2 includes a frequency analyzer **5** configured to convert the sensor signal outputted from the A/D converter **4** into a frequency domain signal (frequency axis signal) and extract, by use of a group of individual filter banks 5a (see **FIG. 2**) with different frequency bands (pass frequency bands), signals of the individual filter banks 5a (signals corresponding to the filter banks 5a) from the frequency domain signal.

In other words, the frequency analyzer **5** is configured to convert the sensor signal corresponding to the radio wave reflected by the object into the frequency domain signal, and sends the frequency domain signal to the group (filter) of filter banks **5a** to extract a plurality of signals individually corresponding to a plurality of filter banks **5a.** In this regard, the signals corresponding to the individual filter banks 5a means signals passing through the individual filter banks **5a.**

As described above, the frequency analyzer **5** divides the sensor signal (frequency domain signal) in a frequency axis, and thereby generates a plurality of signals with different frequency bands.

In the frequency analyzer **5,** the group of filter banks 5a is a predetermined number of (for example, sixteen) filter banks **5a.** However, the number of filter banks **5a** is not limited particularly.

Further, the signal processing device **2** includes a normalizer 6 configured to normalize intensities of the signals individually passing through the individual filter banks **5a** by a sum (sum of intensities) of the signals extracted by the frequency analyzer 5 or a sum of intensities of signals individually passing through a plurality of predetermined filter banks **5a** (for example, four filter banks on a lower frequency side) selected from the individual filter banks **5a** to obtain normalized intensities, and output the normalized intensities.

In other words, the normalizer **6** normalizes intensities of the plurality of signals extracted by the frequency analyzer **5.** By doing so, the normalizer **6** calculates normalized intensities of the plurality of signals extracted by the frequency analyzer **5.** For example, the normalizer **6** performs normalization by use of a sum of intensities of a plurality of certain signals individually corresponding to a plurality of certain filter banks **5a** of the plurality of filter banks **5a.** Note that, the plurality of certain filter banks **5a** may be all of the plurality of filter banks **5a.** In this case, the plurality of certain signals are all of the plurality of signals extracted by the frequency analyzer **5.**

As described above, the normalizer **6** is configured to normalize intensities of the plurality of signals by use of the sum of intensities of the plurality of certain signals individually corresponding to the plurality of certain filter banks **5a** of the plurality of filter banks **5a,** and thereby calculate the normalized intensities of the plurality of signals.

Further, the signal processing device **2** includes a recognizer **7** configured to perform a recognition process of identifying the object based on a frequency distribution calculated from the normalized intensities of the individual filter banks **5a** outputted from the normalizer **6.** In summary, the recognizer **7** is configured to perform the recognition process of identifying the object based on a feature regarding the normalized intensity of the sensor signal (frequency domain signal) determined by the normalized intensities calculated by the normalizer **6.** In this regard, the feature regarding the normalized intensity of the sensor signal (frequency domain signal) is a frequency distribution determined by the normalized intensities of the individual filter banks **5a** outputted from the normalizer **6,** which means a frequency distribution of the normalized intensity of the sensor signal (frequency domain signal).

The aforementioned frequency analyzer 5 has a function of converting the sensor signal outputted from the A/D converter **4** into the frequency domain signal by Discrete Cosine Transform (DCT). Further, as shown in **FIG. 2,** each of the individual filter banks 5a includes a plurality of (in the illustrated example, five) frequency bins **5b.** The frequency bin **5b** of the filter bank 5a using DCT may be referred to as a DCT bin, in some cases. Each of the filter banks 5a has resolution depending on widths ($\Delta f$ in **FIG. 2**) of the frequency bins **5b.** With regard to each of the filter banks 5a, the number of frequency bins **5b** is not limited particularly and may be two or more other than **5** or may be one. Orthogonal transform for converting the sensor signal outputted from the A/D converter **4** into the frequency domain signal is not limited to DCT, and, for example may be Fast Fourier Transformation (FFT). The frequency bin **5b** of the filter bank 5a using FFT may be referred to as an FFT bin, in some cases. Further, the orthogonal transform for converting the sensor signal outputted from the A/D converter **4** into the frequency domain signal may be Wavelet Transform (WT).

When each of the filter banks **5a** includes a plurality of frequency bins **5b,** it is preferable that the signal processing device **2** include a smoothing processor **8** between the frequency analyzer **5** and the normalizer **6.** It is preferable that this smoothing processor **8** have at least one of a function of performing smoothing processing on intensities of signals of the individual frequency bins **5b** in a frequency domain (frequency axis direction) for each of the individual filter banks 5a and another function of performing smoothing processing on intensities of signals of the individual frequency bins **5b** in a time axis direction for each of the individual filter banks **5a.** Accordingly, the signal processing device **2** can reduce undesired effects caused by noises, and more reduce the undesired effects caused by noises when the both functions are included.

The function of performing smoothing processing on intensities of signals of the individual frequency bins **5b** in the frequency domain for each of the individual filter banks 5a (hereinafter, referred to as "first smoothing processing function", if necessary) can be realized by use of, for example, an average filter, a weighted average filter, a median filter, a weighted median filter, or the like. When the first smoothing processing function is realized by use of an average filter, as shown in **FIG. 2** and **FIG. 5,** it is assumed that, at time $t_1$, intensities of signals of the individual five frequency bins **5b** of the filter bank 5a which is the first one from the lower frequency side are represented by s1, s2, s3, s4, and s5, respectively. In this regard, with regard to the first filter bank 5a, when it is assumed that the intensity of the signal obtained by the smoothing processing by the first smoothing processing function is **m11** (see **FIG. 3** and **FIG. 6**), the intensity **m11** can be calculated by the following formula **(1).**

**[FORMULA 1]**

$$m_{11} = \frac{s1 + s2 + s3 + s4 + s5}{5} \qquad (1)$$

Similarly, as shown in **FIG. 3** and **FIG. 6,** the signals of the second filter bank 5a, the third filter bank 5a, the fourth filter bank 5a, and the fifth filter bank 5a are represented by $m_{21}$, $m_{31}$, $m_{41}$ and, $m_{51}$, respectively. In summary, in the present embodiment, for convenience of explanation, mji represents the intensity of the signal obtained by the smoothing processing realized by the first smoothing processing function on the signal of the j-th (**"j"** is a natural number) filter bank **5a** at time $t_i$ ("i" is a natural number) in the time axis.

The normalizer 6 normalizes the intensities of the signals passing through the individual filter banks **5a** by the sum of the intensities of the signals passing through the plurality of predetermined filter banks **5a** used in the recognition process by the recognizer **7.** In this regard, in the following explanation, it is assumed that, for example, the total number of filter banks **5a** in the frequency analyzer **5** is sixteen, and the plurality of predetermined filter banks **5a** used for the recognition process are only the five filter banks which are the first to fifth filter banks from the lower frequency side. When the normalized intensity of the intensity **m11** of the signal passing through the first filter bank **5a** at the time t1 is **n11** (see **FIG. 4**), the normalized intensity **n11** can be calculated by the following formula (2) in the normalizer **6.**

**[FORMULA 2]**

$$n_{11} = \frac{m_{11}}{m_{11} + m_{21} + m_{31} + m_{41} + m_{51}} \qquad (2)$$

Further, when each of the filter banks **5a** is constituted by one frequency bin 5b, the normalizer **6** extracts the intensities of the signals passing through the individual filter banks **5a,** and normalizes the intensities of the signals passing through the individual filter banks 5a by the sum of the intensities of these.

Further, the function of performing smoothing processing on intensities of signals of the individual frequency bins 5b in the time axis direction for each of the individual filter banks **5a** (hereinafter, referred to as "second smoothing processing function", if necessary), which is performed by the smoothing processor **8,** can be realized by use of, for example, an average filter, a weighted average filter, a median filter, a weighted median filter, or the like. In a case where the second smoothing processing function is realized by use of an average filter of calculating an average of intensities of a signal at a plurality of (for example, three) points in the time axis direction, as shown in **FIG. 7,** with regard to the first filter bank 5a, when it is assumed that the intensity of the signal obtained by the smoothing processing by the second smoothing processing function is $m_1$, the intensity $m_1$ can be calculated by the following formula (3).

**[FORMULA 3]**

$$m_1 = \frac{m_{10} + m_{11} + m_{12}}{3} \qquad (3)$$

Similarly, when it is assumed that the intensities of the signals of the second filter bank **5a,** the third filter bank **5a,** the fourth filter bank **5a** and the fifth filter bank **5a** are represented by $\mathbf{m_2}$, $\mathbf{m_3}$, $\mathbf{m_4}$ and $\mathbf{m_5}$, the intensities $\mathbf{m_2}$, $\mathbf{m_3}$, $\mathbf{m_4}$ and $\mathbf{m_5}$ can be calculated by the following formulae **(4), (5), (6)** and **(7).**

**[FORMULA 4]**

$$m_2 = \frac{m_{20} + m_{21} + m_{22}}{3} \qquad (4)$$

$$m_3 = \frac{m_{30} + m_{31} + m_{32}}{3} \qquad (5)$$

$$m_4 = \frac{m_{40} + m_{41} + m_{42}}{3} \qquad (6)$$

$$m_5 = \frac{m_{50} + m_{51} + m_{52}}{3} \qquad (7)$$

In summary, in the present embodiment, for convenience of explanation, mn represents the intensity of the signal obtained by performing the smoothing processing by the first smoothing processing function on the signal of the **n**-th ("**n**" is a natural number) filter bank **5a** and further performing the smoothing processing by the second smoothing processing function.

Further, it is preferable that the signal processing device 2 include a background signal estimator **9** configured to estimate background signals (i.e., noise) included in the signals outputted from the individual filter banks **5a,** and a background signal remover **10** configured to remove the background signals from the signals passing through the individual filter banks **5a.**

It is preferable that the signal processing device 2 have operational modes including, for example, a first mode of estimating the background signals and a second mode of performing the recognition process and the first mode and the second mode be switched alternately at a predetermined time period (for example, 30 seconds) timed by a timer (not shown). In this regard, it is preferable that the signal processing device **2** operate the background signal estimator **9** in a period of the first mode, and remove the background signals by the background signal remover **10** and then perform the recognition process by the recognizer **7** in a period of the second mode. The period of the first mode and the period of the second mode are not limited to having the same length (for example, 30 seconds) but may be different lengths.

The background signal remover 10 may be configured to remove the background signals by subtracting the background signals from the signals outputted from the filter banks 5a, for example. In this case, the background signal remover 10 may be constituted by, for example, a subtractor configured to subtract the intensities $b_1$, $b_2$, ..., (see **FIG. 8**) of the background signals estimated by the background signal estimator **9** from the intensities of the signals $\mathbf{m_1}$, $\mathbf{m_2}$, ..., (see **FIG. 9**) passing through the individual filter banks 5a. **FIG. 10** shows the intensities of the signals obtained by subtracting the background signals from the signals in the same filter bank **5a.** In this regard, when $L_1$ represents the intensity of the signal of the first filter bank **5a** from left, the intensity $L_1$ can be calculated by the following formula **(8).**

**[FORMULA 5]**

$$L_1 = m_1 - b_1 \qquad (8)$$

Similarly, when it is assumed that the intensities of the signals obtained by subtraction of the background signals of the second filter bank **5a,** the third filter bank **5a,** the fourth filter bank **5a** and the fifth filter bank **5a** are represented by $\mathbf{L_2}$, $\mathbf{L_3}$, $\mathbf{L_4}$ and $\mathbf{L_5}$, the intensities $\mathbf{L_2}$, $\mathbf{L_3}$, $\mathbf{L_4}$ and $\mathbf{L_5}$ can be calculated by the following formulae **(9), (10), (11)** and **(12).**

[FORMULA 6]

$$L_2 = m_2 - b_2 \qquad (9)$$

$$L_3 = m_3 - b_3 \qquad (10)$$

$$L_4 = m_4 - b_4 \qquad (11)$$

$$L_5 = m_5 - b_5 \qquad (12)$$

The background signal estimator 9 may estimate the intensities of the signals obtained in the period of the first mode with regard to the individual filter banks **5a** as the intensities of the background signals of the individual filter banks **5a,** and then updates the background signals as needed. Further, the background signal estimator **9** may estimate an average of intensities of a plurality of signals obtained in the first mode with regard to each of the individual filter banks **5a** as the intensity of the background signal of each of the individual filter banks **5a.** In other words, the background signal estimator **9** may treat an average in a time axis of a plurality of signals obtained in advance for each of the individual filter banks **5a** as the background signal. In this case, the background signal estimator **9** can have an improved estimation accuracy of the background signals.

Further, the background signal remover **10** may treat an immediately preceding signal (i.e., a previous signal) of each of the filter banks 5a as the background signal. In this case, the signal processing device **2** may have a function of removing the background signals by subtracting the immediately preceding signals in the time axis before the signals are subjected to the normalization process by the normalizer **6.** In summary, with regard to the signals passing through the individual filter banks 5a, the background signal remover **10** may have a function of removing the background signals by subtracting, from the intensities of the signals to be subjected to the normalization process, intensities of signals sampled at one point in the time axis before the signals to be subjected to the normalization process. In this case, for example, as shown in **FIG. 11,** when it is assumed that the signals of the individual filter banks **5a** at the time **t1** to be subjected to the normalization process are represented by $\mathbf{m_1}$ **($\mathbf{t_1}$)**, $\mathbf{m_2}$ **($\mathbf{t_1}$)**, $\mathbf{m_3}$ **($\mathbf{t_1}$)**, $\mathbf{m_4}$ ($t_1$) and $\mathbf{m_5}$ **($\mathbf{t_1}$)**, and the signals at the time to immediately before the time **t1** are represented by $\mathbf{m_1}$ **(to)**, $\mathbf{m_2}$ **(to)**, $\mathbf{m_3}$ **(to)**, $\mathbf{m_4}$ **(to)** and $\mathbf{m_5}$ **(to)**, and the intensities of the signals after the subtraction are represented by $\mathbf{L_1}$, $\mathbf{L_2}$, $\mathbf{L_3}$, $\mathbf{L_4}$ and $\mathbf{L_5}$, the intensities $\mathbf{L_1}$, $\mathbf{L_2}$, $\mathbf{L_3}$, $\mathbf{L_4}$ and $\mathbf{L_5}$ can be calculated by the following formulae **(13), (14), (15), (16)** and **(17),** respectively.

**[FORMULA 7]**

$$L_1 = m_1(t_1) - m_1(t_0) \qquad (13)$$

$$L_2 = m_2(t_1) - m_2(t_0) \qquad (14)$$

$$L_3 = m_3(t_1) - m_3(t_0) \qquad (15)$$

$$L_4 = m_4(t_1) - m_4(t_0) \qquad (16)$$

$$L_5 = m_5(t_1) - m_5(t_0) \qquad (17)$$

In some case, depending on circumstances of use of the signal processing device **2,** there is a possibility that the frequency bin **5b** in which a relatively large background signal (noise) are included can be known in advance. For example, in a case where apparatus to be energized by a commercial power source is present in a vicinity of the sensor device Se including the radio wave sensor 1 and the signal processing device **2,** there is a high possibility that relatively large background noise is included in the signal of the frequency bin **5b** whose frequency band including a frequency (for example, 60 Hz, and 120 Hz) which is a relatively small multiple of a frequency of commercial power supply (for example, 60 Hz). In contrast, with regard to the sensor signal outputted from the radio wave sensor **1** when the intended object of detection moves in the detection area, a frequency (Doppler frequency) of this sensor signal changes continuously according to a distance between the radio wave sensor 1 and the object and a moving speed of the object, and therefore the sensor signal does not occur constantly at a specific frequency.

In view of this, when the signal processing device **2** is configured so that each of the individual filter banks **5a** includes a plurality of frequency bins **5b,** one of the frequency bins **5b** in which the background signal is constantly included may be treated as a particular frequency bin 5bi, and the background signal remover **10** may be configured to remove the background signal by not using an intensity of an actual signal of the particular frequency bin **5bi** but replacing the intensity of the actual signal of the particular frequency bin **5bi** by an intensity of a signal estimated based on intensities of signals of two frequency bins 5b adjacent to the particular frequency bin **5bi.** In the example shown in **FIG. 12** and **FIG. 13,** the third frequency bin **5b** from left in **FIG. 12** is treated as the particular frequency bin **5b$_i$,** the signal (signal intensity $b_3$) of the particular frequency bin **5b$_i$** is treated as invalid, and as shown in **FIG. 13,** is replaced with the intensity **$b_3$** of the signal component estimated based on the intensities $b_2$ and **$b_4$** of the signal components of the two frequency bins **5b** adjacent to the particular frequency bin **5b$_i$.** In the estimation, the estimated intensity $b_3$ of the signal is an average of the intensities **$b_2$** and **$b_4$** of the signal components of the two frequency bins **5b** adjacent to the particular frequency bin **5b$_i$**, that is, **($b_2$+$b_4$)/2.** In summary, when it is assumed that the i-th frequency bin 5b from the lower frequency side in the filter bank 5a is treated as the particular frequency bin **5b$_i$** and the intensity of the signal of the particular frequency bin **5b$_i$** is represented by **bi,** $b_i$ can be defined by the following estimation formula **(18).**

**[FORMULA 8]**

$$b_i = \frac{b_{i-1} + b_{i+1}}{2} \qquad (18)$$

Accordingly, the signal processing device **2** can reduce, in a short time, undesired effects caused by background signals (noise) of a particular frequency which occurs constantly. Therefore, the signal processing device 2 can have the improved detection accuracy of the intended object of detection.

The background signal remover **10** may be an adaptive filter configured to remove the background signal by filtering the background signal in a frequency domain (frequency axis).

The adaptive filter is a filter configured to adjust by itself a transfer function (filter coefficient) according to an adaptive algorithm (optimization algorithm), and can be realized by use of a digital filter. This type of adaptive filter may preferably be an adaptive filter using DCT (Discrete Cosine Transform). In this case, the adaptive algorithm of the adaptive filter may be an LMS (Least Mean Square) algorithm of DCT. Alternatively, the adaptive filter may be an adaptive filter using FFT. In this case, the adaptive algorithm of the adaptive filter may be an LMS algorithm of FFT. The LMS algorithm gives an advantage of reducing a calculation amount relative to a projection algorithm and an RLS (Recursive Least Square) algorithm, and the LMS algorithm of DCT requires only calculation of real numbers, and therefore gives an advantage of reducing an amount of calculation relative to the LMS algorithm of FFT which requires calculation of complex numbers.

The adaptive filter has a configuration shown in **FIG. 14,** for example. This adaptive filter includes a filter **57a** with a variable filter coefficient, a subtractor **57b,** and an adaptive processor **57c.** The subtractor **57b** outputs an error signal defined by a difference between an output signal of the filter **57a** and a reference signal. The adaptive processor **57c** generates a correction coefficient of a filter coefficient based on an input signal and the error signal according to the adaptive algorithm, and updates the filter coefficient. When background signals caused by thermal noises are given as an input signal of the filter **57a** and the reference signal is a desired white noise, the adaptive filter can remove undesired background signals by filtering undesired background signals.

Further, by appropriately setting a forgetting factor of the adaptive filter, the background signal remover **10** may extract a frequency distribution of a signal obtained by filtering a long-term average background signal in a frequency axis. The forgetting coefficient is used in the calculation of updating the filter coefficient in order to exponentially decrease weights of previous data (filter coefficient) as the previous data is further away from the current data (filter coefficient), and exponentially increase weights of the previous data (filter coefficient) as the previous data is closer to the current data in the calculation of updating the filter coefficient. The forgetting coefficient is a positive number less than one, and for example is selected from a range of about 0.95 to 0.99.

The recognizer **7** performs the recognition process of identifying the object based on the distribution in the frequency domain of the normalized intensities obtained by filtering by the filter banks **5a** and normalizing by the normalizer **6.** In this regard, the meaning of "identify" includes "classify" and "recognize".

The recognizer **7** can identify the object by performing a pattern recognition process by principle component analysis, for example. This recognizer **7** operates according to a recognition algorithm using the principle component analysis. In order to use such a type of recognizer **7,** learning sample data of a case where the intended object of detection is not present in the detection area of the radio wave sensor **1** and pieces of learning sample data individually corresponding to different motions of the intended object of detection are obtained and data obtained by performing the principle component analysis on pieces of the learning data is stored in a database unit (database device) **11,** in advance. In this regard, the data stored in the database unit **11** in advance is data used for pattern recognition, which means category data associating the motion of the object, the projection vector, and a determination border value (threshold) with each other.

For convenience of explanation, it is assumed that **FIG. 15** shows a distribution in the frequency domain of the normalized intensities corresponding to the learning sample data of the case where the intended object of detection is not present in the detection area of the radio wave sensor **1,** and **FIG. 16** shows a distribution in the frequency domain of the normalized intensities corresponding to the learning sample data of the case where the intended object of detection is present in the detection area of the radio wave sensor **1.** In **FIG. 15,** the normalized intensities of the signals passing through the individual filter banks **5a** are represented by $\mathbf{m_{10}}$, $\mathbf{m_{20}}$, $\mathbf{m_{30}}$, $\mathbf{m_{40}}$ and $\mathbf{m_{50}}$ from the lower frequency side. In **FIG. 16,** the normalized intensities of the signals passing through the individual filter banks **5a** are represented by $\mathbf{m_{11}}$, $\mathbf{m_{21}}$, $\mathbf{m_{31}}$, $\mathbf{m_{41}}$ and $\mathbf{m_{51}}$ from the lower frequency side. In each of **FIG. 15** and **FIG. 16,** the sum of the normalized intensities of the signals passing through the three filter banks 5a on the lower frequency side is defined as a variable $\mathbf{m_1}$, and the sum of the normalized intensities of the signals passing through the two filter banks 5a on the higher frequency side is defined as a variable $\mathbf{m_2}$. In short, in **FIG. 15,** the variables $m_1$ and $\mathbf{m_2}$ can be calculated by the following formulae **(19)** and **(20),** respectively.

**[FORMULA 9]**

$$m_1 = m_{10} + m_{20} + m_{30} \qquad (19)$$

$$m_2 = m_{40} + m_{50} \qquad (20)$$

Further, in **FIG. 16,** the variables $\mathbf{m_1}$ and $\mathbf{m_2}$ can be calculated by the following formulae **(21)** and **(22),** respectively.

**[FORMULA 10]**

$$m_1 = m_{11} + m_{21} + m_{31} \qquad (21)$$

$$m_2 = m_{41} + m_{51} \qquad (22)$$

To imaginarily explain a two dimensional scatter diagram with orthogonal coordinate axes representing the two variables of $m_1$ and $m_2$, a projection axis, and an identification border, **FIG. 17** shows a two-dimensional graph of them. In **FIG. 17,** a coordinate position of a scatter point ("+" in **FIG. 17**) inside a region encircled by a broken line is represented by $\mu_0$ **($m_2$, $m_1$)** and a coordinate position of a scatter point ("+" in **FIG. 17**) inside a region encircled by a solid line is represented by $\mu_1$ **($m_2$, $m_1$).** In the principle component analysis, a group **Gr0** of data corresponding to the learning sample data of the case where the intended object of detection is not present in the detection area of the radio wave sensor **1** and a group **Gr1** of data corresponding to the learning sample data of the case where the intended object of detection is present in the detection area of the radio wave sensor **1** are decided in advance. Further, in the principle component analysis, in **FIG. 17,** the projection axis is determined to satisfy a condition that a difference between averages of distributions (schematically shown by a broken line and a solid line) of data obtained by projecting, onto the projection axis, the scatter points inside the regions encircled by the broken line and the solid line is maximized, and a further condition that variances of the distributions are maximized. Thus, in the principle component analysis, a projection vector can be obtained for each learning sample.

Besides, the signal processing device **2** includes an outputter **12** configured to output the identification result by the identifier (recognizer) **7.** When the recognizer **7** recognizes the intended object of detection, the signal processing device 2 allows the outputter **12** to output an output signal **("1")** indicating that the object is detected. When the recognizer **7** does not recognize the intended object of detection, the signal processing device **2** allows the outputter **12** to output an output signal ("0") indicating that the object is not detected.

The signal processing device **2** includes an arithmetic processing unit (for example, a microcomputer) not shown. This arithmetic processing unit functions as the frequency analyzer **5,** the normalizer **6,** the background signal estimator **9,** the background signal remover **10,** the smoothing processor **8,** and the recognizer **7.** In summary, in **FIG. 1,** components of the signal processing device **2** except the amplifier **3,** the A/D converter **4,** the outputter **12** and the database unit **11** can be realized by the microcomputer performing appropriate programs.

Hereinafter, a relation between one example of the sensor signal outputted from the radio wave sensor **1** and the output signal outputted from the outputter **12** is described with reference to **FIG. 18** to **FIG. 22.**

**FIG. 18** and **FIG. 19** show a usage example of the sensor device Se including the radio wave sensor 1 and the signal processing device **2,** and indicate that the object **Ob** of detection interest is a person and a tree Tr which is not of detection interest is present in the detection area in the outdoors. **FIG. 20** shows, in the usage example, one instance of the sensor signal outputted from the radio wave sensor **1** when the object **Ob** moves a distance of 6.7 m at the moving speed of 1 m/s in front of the tree **Tr** while branches and leaves of the tree **Tr** sway. Note that, a distance between the radio wave sensor **1** and the tree **Tr** is about 10 m, and a distance between the radio wave sensor **1** and the object **Ob** is about 8 m. **FIG. 21** is a diagram illustrating distributions in the frequency domain and the time axis domain of the normalized intensities. **FIG. 22** shows the output signal of the outputter **12,** and it is confirmed that the probability of the false detection caused by motion of the unintended object of detection can be reduced.

In view of the distribution in the frequency domain of the normalized intensities, when the object in the detection area is a tree, branches and leaves of the tree may sway but the tree itself does not move. Hence, compared with a case where the object is a person walking in the detection area, the frequency distribution shows signal components on the lower frequency region. Whereas, in the case where the object is a person walking in the detection area, the frequency distribution shows a mountain shape distribution with a center frequency near a frequency corresponding to the walking speed. Therefore, there may be seen a clear difference between the frequency distributions.

The unintended object of detection in the detection area is mainly an object which is not movable as a whole but can make motion. When the detection area of the radio wave sensor **1** is set in the outdoors, the unintended object of detection present in the detection area is not limited to the tree **Tr** and may be, for example, an electric wire swaying in the wind.

Hereinafter, a relation between another example of the sensor signal outputted from the radio wave sensor **1** and the output signal outputted from the outputter **12** is described with reference to **FIG. 23** to **FIG. 26.**

**FIG. 23** shows a usage example of the sensor device Se including the radio wave sensor **1** and the signal processing device **2,** and indicates that the object **Ob** of detection interest is a person and it rains in the detection area in the outdoors. **FIG. 24** shows, in the usage example, one instance of the sensor signal outputted from the radio wave sensor 1 when the object **Ob** moves a distance **of 6.7** m at the moving speed of **1** m/s. **FIG. 25** shows the output signal of the outputter **12** in a case where the removal of the background signals by the background signal remover **10** is not conducted. **FIG. 26** shows the distributions in the frequency domain and the time axis domain of the normalized intensities in a case where the removal of the background signals by the background signal remover **10** is conducted. **FIG. 27** shows the output signal of the outputter **12** in the case where the removal of the background signals by the background signal remover **10** is conducted. As apparent from comparison between **FIG. 27** and **FIG. 25,** it is understood that the probability of false detection caused by motion of the unintended object of detection (in this instance, raindrop) can be reduced by removing the background signals by the background signal remover **10.**

Further, when the detection area of the radio wave sensor **1** is set in the indoors, the unintended object of detection present in the detection area may be, for example, a device (e.g., an electric fan) including a movable body (e.g., a blade in a case of an electric fan).

It is preferable that the signal processing device **2** allows change of the aforementioned threshold according to settings inputted from the outside. Accordingly, the signal processing device **2** can adjust required probabilities of miss detection and false detection according to usage. For example, with regard to a usage example where the intended object of detection is a person, and a lighting load is turned on and off according to the output signal from the outputter **12,** false detection may be acceptable to some extent to avoid such miss detection that detection of a person coming into the detection area of the radio wave sensor **1** is failed.

The signal processing device **2** of the present embodiment described above includes, as mentioned above, the amplifier **3,** the A/D converter **4,** the frequency analyzer **5,** the normalizer **6,** and the recognizer **7.** In this regard, the frequency analyzer **5** converts the sensor signal outputted from the A/D converter **4** into the frequency domain signal, and extracts, by use of the group of individual filter banks **5a** with different frequency bands, the signals of the individual filter banks **5a.** Further, the normalizer **6** normalizes the intensities of the signals passing through the individual filter banks 5a by the sum of the signals extracted by the frequency analyzer **5** or the sum of the intensities of the signals individually passing through the plurality of predetermined filter banks **5a,** and outputs the normalized intensities. Further, the recognizer **7** performs the recognition process of identifying the object based on the frequency distribution calculated from the normalized intensities of the individual filter banks 5a from the normalizer **6.**

Therefore, the signal processing device of the present embodiment can reduce the probability of false detection caused by motion of the unintended object of detection. In summary, the signal processing device **2** of the present embodiment can separate and identity the objects which are statistically different in the frequency distribution calculated from the normalized intensities obtained by normalizing the signals individually passing through the plurality of predetermined filter banks **5a,** and thus the probability of false detection can be reduced.

Further, in the filter bank 5a using FFT, in some case, there is need to perform a process of multiplying a predetermined window function with the sensor signal before the FFT process, in order to reduce a side-lobe outside a desired frequency band (pass band). The window function may be selected from a rectangular window, a Gauss window, a hann window, and a hamming window, for example. In contrast, in the filter bank 5a using DCT, there is no need to use the window function, or the window function can be realized by a simple digital filter.

Further, the filter bank 5a using DCT is a process based on calculation of real numbers whereas the filter bank 5a using FFT is a process based on calculation of complex numbers (i.e., calculation of intensities and phases), and hence according to the filter bank 5a using DCT, an amount of calculation can be reduced. Further, in comparison between DCT and FFT with the same processing points, the frequency resolution of DCT is half of the frequency resolution of FFT. Hence, according to DCT, hardware resource such as the database unit **11** can be down sized. For example, in the signal processing device **2,** when the sampling rate of the A/D converter **4** is 128 per second (in other words, the sampling frequency is 1 kHz), a DCT bin 5b has a width of **4** Hz whereas an FFT bin **5b** has a width of 8 Hz. Note that, these numerical values are merely examples, and there is no intent of limitations.

Further, in a period when the recognizer **7** continues to identify the intended object of detection in the time axis, the signal processing device **2** can use the normalized intensities outputted from the normalizer **6** in the period as the background signals and remove them. Therefore, the recognition accuracy can be improved.

The recognizer **7** is not limited as being configured to identify the object based on the pattern recognition process by the principle component analysis, and may be configured to identify the object based on a pattern recognition process by KL transform, for example. When the signal processing device **2** is configured so that the recognizer **7** performs the pattern recognition process by the principle component analysis or the pattern recognition process by KL transform, an amount of calculation at the recognizer **7** and an amount of a capacity (storage capacity) of the database unit **11** can be reduced.

The recognizer **7** may be configured to perform the recognition process of identifying the object based on a component ratio of the normalized intensities of the individual filter banks **5a** outputted from the normalizer **6.** In summary, the recognizer **7** may be configured to perform the recognition process of identifying the object based on the feature regarding the normalized intensity of the sensor signal (frequency domain signal) determined by the normalized intensities calculated by the normalizer **6.** In this regard, the feature regarding the normalized intensity of the sensor signal (frequency domain signal) is a component ratio of the normalized intensity calculated from the normalized intensities of the individual filter banks **5a** outputted from the normalizer **6,** which means a component ratio of the normalized intensity of the sensor signal (frequency domain signal).

This type of recognizer **7** may be, for example, configured to identify the object by performing the recognition process based on multiple linear regression analysis. In this case, the recognizer **7** operates according to a recognition algorithm using the multiple linear regression analysis.

In order to use such a type of recognizer **7,** learning sample data corresponding to different motions of the intended object of detection in the detection area of the radio wave sensor **1** is obtained, and data obtained by performing the multiple linear regression analysis on the learning data is stored in the database unit **11,** in advance. According to the multiple linear regression analysis, as shown in **FIG. 28,** with regard to a synthetic waveform **Gs** of synthesis of a signal component **s1,** a signal component **s2,** and a signal component **s3,** even when types of the signal components **s1, s2,** and **s3,** the number of signal components, and intensities of the signal components **s1, s2,** and **s3** are unknown, the synthetic waveform can be separated into the signal components **s1, s2,** and **s3** by presumption. In **FIG. 28, [S]** denotes a matrix whose matrix elements are the signal components **s1, s2,** and **s3,** and $[S]^{-1}$ denotes an inverse matrix of **[S],** and **"I"** denotes the component ratio (coefficient) of the normalized intensity. In more detail, **"I"** denotes a matrix whose matrix elements are the component ratios (coefficients) **i1, i2,** and **i3** of the normalized intensities. In this regard, the data preliminarily stored in the database unit **11** is data used in the recognition process, and is data associating the motion of the object with the signal components **s1, s2,** and **s3.**

FIG. 29 shows a lateral axis denoting the time and a vertical axis denoting the normalized intensity, and shows **A1** which is data (corresponding to the aforementioned synthetic waveform **Gs)** in the time axis of the normalized intensities outputted from the normalizer **6** when a person who is the intended object of detection moves a distance of 10 m at the moving speed of 2 m/s under an electric wire swaying in the detection area in the outdoors. Further, **FIG. 29** also shows signal components **A2** and **A3** which are separated from data **A1** by the multiple linear regression analysis. In this regard, the signal component **A2** is a signal component derived from motion of the person, and the signal component **A3** is a signal component derived from sway of the electric wire. **FIG. 30** shows the output signal of the outputter **12.** In a case where **A2>A3,** the recognizer **7** determines that the intended object of detection is present, and sets the output signal of the outputter **12** to "1". In other cases, the recognizer **7** determines that the intended object of detection is not present, and sets the output signal of the outputter **12** to "0". As apparent from **FIG. 30,** it is confirmed that the probability of false detection caused by motion of the unintended object of detection (in this instance, the electric wire) can be reduced.

It is preferable that the signal processing device 2 allows change of the aforementioned determination condition **(A2>A3)** according to settings inputted from the outside. For example, it is preferable that the determination condition is set to $\mathbf{A2}>\alpha\times\mathbf{A3}$ and the coefficient $\alpha$ be allowed to be changed according to the settings inputted from the outside. Accordingly, the signal processing device **2** can adjust required probabilities of miss detection and false detection according to usage.

Note that, the recognizer **7** may identify the intended object of detection based on the feature of the aforementioned frequency distribution and the component ratio of the normalized intensities. In summary, the recognizer **7** may be configured to perform the recognition process of identifying the object based on the feature regarding the normalized intensity of the sensor signal (frequency domain signal) determined by the normalized intensities calculated by the normalizer **6.** In this regard, the feature regarding the normalized intensity of the sensor signal (frequency domain signal) is the frequency distribution of the normalized intensity of the sensor signal (frequency domain signal) and the component ratio of the normalized intensity.

The recognizer **7** may identify the object based on majority decision based on results obtained by performing the recognition process an odd number of times. For example, in **FIG. 31,** based on the majority decision based on the results of the three recognition processes with regard to region surrounded by a dashed-dotted line, the output signal of the outputter **12** is set to **"1".**

Therefore, the signal processing device **2** can have the improved identification accuracy by the recognizer **7.**

Further, the signal processing device **2** may be configured to allow the recognizer **7** to perform the recognition process or treat the recognition result by the recognizer **7** as being valid, only when the sum or weighted sum of intensities of signal components of a plurality of predetermined filter banks 5a before normalization by the normalizer **6** is equal to or more than a predetermined value. **FIG. 32** and **FIG. 33** relates to examples in which the intensities of the signals of the individual filter banks **5a** before being normalized by the normalizer **6** are represented by $\mathbf{m_1}$, $\mathbf{m_2}$, $\mathbf{m_3}$, $\mathbf{m_4}$ and $\mathbf{m_5}$ from the lower frequency side. **FIG. 32** shows an example in which the sum of intensities $\mathbf{(m_1+m_2+m_3+m_4+m_5)}$ is equal to or more than the predetermined value **(Eth1),** and **FIG. 33** shows an example in which the sum of intensities $(m_1+m_2+m_3+m_4+m_5)$ is less than the predetermined value (Eth1).

Accordingly, the signal processing device **2** can reduce the probability of false detection. For example, in a case where the recognizer **7** is configured to identify the object by the frequency distribution derived based on the normalized intensities of the signal components, when the intended object of detection is not present in the detection area of the radio wave sensor **1** but background noise is inputted, there is a probability that the recognizer **7** determines that the feature of the frequency distribution of the intensities of the signals at this time resembles the feature of the frequency distribution of a case where the intended object of detection is present in the detection area, and thus causes false detection. In view of this, to reduce the probability of false detection, the signal processing device **2** determines whether to perform the recognition process, based on pre-normalized intensities of signals.

Further, the signal processing device **2** may treat a plurality of predetermined filter banks **5a** before normalization by the normalizer **6,** as one group **50** of filter banks (see **FIG. 34),** and determine whether the sum or weighted sum of pre-normalized intensities of signal components is equal to or more than a predetermined value (Eth2) for each of a plurality of groups 50 of filter banks. In more detail, the signal processing device **2** may be configured to, only when, with regard to any of the groups 50 of filter banks, the sum of pre-normalized intensities of signal components is equal to or more than the predetermined value **(Eth2),** allow the recognizer **7** to perform the recognition process or treat a result of the recognition process by the recognizer **7** as being valid. Or, the signal processing device **2** may be configured to, only when, with regard to all of the groups 50 of filter banks, the sum or weighted sum of pre-normalized intensities of signal components is equal to or more than the predetermined value **(Eth2),** allow the recognizer **7** to perform the recognition process or treat a result of the recognition process by the recognizer **7** as being valid. Hereinafter, a series of processes including this determination process is described with reference to a flow chart shown in **FIG. 35.** Note that, hereinafter, the phrase "the sum or weighted sum of pre-normalized intensities of signal components" is abbreviated as the sum of pre-normalized intensities of signal components.

First, the A/D converter **4** performs an A/D conversion process of converting the sensor signal amplified by the amplifier **3** into the digital sensor signal and outputting the digital sensor signal (X1). Next, the frequency analyzer **5** performs a filter bank process of converting the sensor signal outputted from the A/D converter **4** into the frequency domain signal (frequency axis signal) by DCT process **(X2)** and extracting signals of the individual filter banks **5a (X3).** For example, in a case of DCT with **128** points, it is considered that one hundred twenty eight frequency bins **5b** are divided into bundles of five frequency bins **5b** and thus twenty five filter banks **5a** are obtained.

Next, for example, as shown in **FIG. 34,** with regard to each of two groups 50 of filter bank on the lower frequency side and the higher frequency side, the signal processing device 2 calculates the sum of pre-normalized intensities of signals of a plurality of filter banks 5a constituting the group **50** of filter banks. Thereafter, the signal processing device **2** performs a threshold-based determination process of determining whether the sum of intensities of signals is equal to or more than the predetermined value (Eth2) for each group 50 of filter banks **(X4).**

In short, the signal processing device **2** functions as a threshold-based determiner configure to determine whether the sum of intensities of signals of a plurality of filter banks **5a** before being subjected to normalization by the normalizer **6** is equal to or more than the predetermined value (in other words, the signal processing device **2** includes the threshold-based determiner).

When the sum of intensities of signals of any of the groups 50 of filter banks is equal to or more than the predetermined value **(Eth2),** the signal processing device **2** determines that the amplitude of the sensor signal outputted from the radio wave sensor **1** is large and therefore the possibility that the sensor signal is derived from background noise is low, and performs a normalization process by the normalizer **6 (X5).** In short, the normalizer **6** normalizes intensities of signals passing through the individual filter banks **5a** and outputs normalized intensities.

Thereafter, the recognizer **7** of the signal processing device **2** performs the recognition process of recognizing the feature of the distribution of intensities of signal of individual frequency components of the plurality of filter banks 5a obtained by normalization, and determining whether the feature is derived from the intended object of detection **(X6).** When the recognizer **7** detects the intended object of detection, the outputter **12** performs an output process of outputting the detection signal (X7).

In contrast, when the sum of intensities of signals of each of all the groups **50** of filter banks is less than the predetermined value **(Eth2),** the signal processing device **2** determines that the amplitude of the sensor signal outputted from the radio wave sensor **1** is small and therefore the possibility that the sensor signal is derived from background noise is high. When determining that the possibility that the sensor signal is derived from background noise is high, the signal processing device **2** does not perform subsequent processes including the normalization process by the normalizer **6 (X5** to **X7).**

**FIG. 36** shows one example of the sensor signal (a signal pattern of background noise) outputted from the radio wave sensor **1** in a case where the intended object of detection is not present. Further, **FIG. 37** shows one example of the sensor signal outputted from the radio wave sensor 1 in a case where the intended object of detection is present. The sensor signal derived from the background noise shown in **FIG. 36** is smaller in amplitude than the sensor signal at the time of detection shown in **FIG. 37.** Note that, in each of **FIG. 36** and **FIG. 37,** a lateral axis denotes the time and a vertical axis denotes the intensity (voltage) of the sensor signal.

In a case where the signal processing device **2** performs the threshold-based determination process of the aforementioned step **X4,** the output signal of the outputter **12** resulting from the sensor signal (background noise) of **FIG. 36** is shown as in **FIG. 38,** and the output signal of the outputter 12 resulting from the sensor signal (the intended object of detection is present) of **FIG. 37** is shown as in **FIG. 39.** Therefore, it is confirmed that by appropriately selecting the predetermined value **(Eth2),** it is possible to reduce the probability of false detection caused by the background noise, and to, when the intended object of detection is present, detect the object successfully. Note that, in **FIG. 38** and **FIG. 39,** the output signal of the outputter **12** shows **"1"** when the recognizer **7** recognizes the intended object of detection, and shows "0" when the recognizer **7** does not recognize the intended object of detection.

In contrast, when the predetermined value **(Eth2)** is set to zero, the output signal of the outputter **12** resulting from the sensor signal (background noise) of **FIG. 36** is shown as in **FIG. 40,** and the output signal of the outputter **12** resulting from the sensor signal (the intended object of detection is present) of **FIG. 37** is shown as in **FIG. 41.** In a case where the signal processing device **2** does not perform the threshold-based determination process of the aforementioned step **X4,** false detection caused by background noise may frequently occur. Further, also in a case where the intended object of detection is present, the output signal of the outputter **12** is switched to "1" frequently. As understood from the above, when the signal processing device **2** does not perform the threshold-based determination process of the aforementioned step **X4,** there is a probability of occurrence of false detection caused by background noise.

The signal processing device **2** includes a state machine for performing the aforementioned processes. Hereinafter, basic operation of this state machined is shown in **FIG. 42.**

First, at the time of supplying power or immediately after the time of canceling reset, the state machine starts to operate from an idle state **J11.** Thereafter, the state machine changes from the idle state **J11** to a state **S11,** and in the state **S11,** when a state (hereinafter referred to as "detection state") in which the recognizer **7** detects the intended object of detection occurs, the state machine further changes to a state **W11.** In contrast, in the state **S11,** when a state (hereinafter referred to as "non-detection state") in which the recognizer **7** does not detect the intended object of detection occurs, the state machine changes to a state **S16** after a lapse of a predetermined time period from time of changing to the state **S11.** Thereafter, at the state **S16,** when the non-detection state occurs, the state machine changes to the state **S11.** In short, when the non-detection state continues from the state **S11,** the state machine shows repeating transitions between the state **S11** and the state **S16.**

When the detection state occurs in the state **S11** or the state **S16,** the state machine changes to the state **W11.** After waiting for a preliminarily determined time period at the state **W11,** the state machine changes to a state **S12** and further changes to a state S13 unconditionally. In the state **S13,** when the non-detection state occurs, or when the detection state continues for a predetermined time period or more, the state machine changes to a state **S14.** Thereafter, when the detection state occurs in the state **S14,** the state machine changes to the state **S13.** In short, when the detection state continues from the state **S13,** the state machine shows repeating transitions between the state **S13** and the state **S14.**

When the non-detection state occurs in the state **S14,** the state machine changes to a state **S15.** When the non-detection state occurs in the state **S15,** the state machine changes to the state **S11.** When the detection state occurs in the state **S15,** the state machine changes to the state **W11.**

The aforementioned operation is the operation of the basic structure of the state machine. While the non-detection state occurs, the state machine changes around the state **S11.** While the detection state occurs, the state machine changes around the state **S13.** The signal processing device **2** performs the processes of the aforementioned steps **X1** to **X7** while the state machine changes between the states.

The following explanation with reference to operation of the state machine shown in **FIG. 43** is made to a threshold setting process of setting the predetermined value (Eth2) for the threshold-based determination process in a period (hereinafter referred to as "activating period") which starts from activation of the radio wave sensor 1 and ends after a lapse of a predetermined time period. In short, the signal processing device **2** functions as a threshold setter configured to change the predetermined value (Eth2) (in other words, the signal processing device **2** includes the threshold setter).

**FIG. 43** shows an example in which a state **I00** is interposed between the idle state **J11** and the state **S11** in the state transition diagram of **FIG. 42.**

In some case, a level of background noise in an ambient environment of the radio wave sensor **1** may change depending on causes such as increase or decrease in an element changing the level of the background noise. Hence, even after the predetermined value **(Eth2)** for the threshold-based determination process is set, once the level of the background noise changes, the current setting cannot lead expected operation. As a result, false detection may occur, or the non-detection state may occur even when the intended object of detection exists.

In view of this, in the state **I00** changed from the idle state **J11,** operation of setting the predetermined value **(Eth2)** for the threshold-based determination process is conducted in the activating period, and after setting of the predetermined value **(Eth2),** the state machine changes to the state **S11.** In more detail, in the state **I00,** the A/D conversion process, the DCT process, and the filter bank process are conducted on the sensor signal (the steps **X1** to **X3** in **FIG. 35**), and thus intensities of signals of the individual filter banks **5a** are measured. Thereafter, the predetermined value **(Eth2)** is calculated by multiplying the average of the intensities of the signals of all of or a plurality of filter banks **5a** by a predetermined coefficient, the calculated predetermined value **(Eth2)** is used as a threshold in the subsequent threshold-based determination process. Further, an available range of the predetermined value **(Eth2)** may be delimited by predetermined upper and lower limits. The upper limit of the predetermined value **(Eth2)** is selected for ensuring the detection accuracy of the intended object of detection. The lower limit of the predetermined value **(Eth2)** is selected for ensuring the effect of preventing false detection caused by background signal.

Immediately after the state machine starts to operate, it is considered that the intended object of detection is not present in the detection area of the radio wave sensor **1** and the sensor signal resulting from background signal is outputted from the radio wave sensor **1.** Hence, the predetermined value **(Eth2)** set in the state **I00** is a value based on background noise. Therefore, it can be considered that the predetermined value **(Eth2)** set in the state **I00** is reasonable as the threshold used in the subsequent threshold-based process.

As described above, in the state machine of **FIG. 43,** the predetermined value **(Eth2)** for the threshold-based determination process is set according to an environment of ambient background noise in the activating period. In more detail, rather than the recognition process is performed immediately after activation, the level of the ambient background noise is measured from the sensor signal first and then the predetermined value **(Eth2)** is calculated by multiplying the measured value by the predetermined coefficient. Therefore, the predetermined value **(Eth2)** can be changed appropriately in the activating period, and thereby it is possible to reduce the probability of false detection caused by the background noise even when the ambient environment of the radio wave sensor **1** changes and also the level of the background noise changes.

In short, the signal processing device **2** (threshold setter) sets the predetermined value (Eth2) based on pre-normalized intensities of signals passing through the individual filter banks 5a in the period which starts from activation of the radio wave sensor **1** and ends after a lapse of the predetermined time period.

Next, a threshold setting process of resetting the predetermined value **(Eth2)** for the threshold-based determination process while the state machine is in operation is explained with reference to operation of the state machine shown in **FIG. 44.**

**FIG. 44** shows an example in which a state **I11** changed from the state **S14** and a state **I12** changed from the state **S11** are added to the state transition diagram of **FIG. 43.**

Even in a case where the predetermined value **(Eth2)** used in the threshold-based determination process is set in the activating period, when a state of background noise at time of measuring background noise levels is different from a normal state, in some cases the set predetermined value **(Eth2)** may not be suitable for the subsequent sensing operation. Further, even in a case where the predetermined value **(Eth2)** can be appropriately selected in the activating period, when an element (e.g., power supply and bending machine) which causes noise regularly is present, the selected predetermined value **(Eth2)** may become inappropriate. Consequently, false detection and miss detection may occur. The miss detection means that though the intended object of detection is present, the non-detection state occurs.

In the state machine shown in **FIG. 44,** when the detection state continues from the state **S13,** repeat transitions between the state **S13** and the state **S14** are shown. In view of this, when the repeat transitions between the state **S13** and the state **S14** occur, it is possible to measure continuous time of the detection state by counting the number of times of passing through the state **S14.** In consideration of this, an upper limit of the continuous time of the detection state or the number of times of passing through the state **S14** is selected in advance. When the continuous time or the number of times of passing through the state **S14** exceeds its upper limit at the state **S14,** even when the detection state continues, the state machine does not change to the state **S13** but changes to the state **I11.**

When the predetermined value **(Eth2)** used in the threshold-based determination process is excessively small, such continuation of the detection state is likely to occur. Therefore, in the state **I11,** operation of resetting the predetermined value **(Eth2)** is performed. In more detail, in the state **I11,** the A/D conversion process, the DCT process, and the filter bank process are conducted on the sensor signal (the steps **X1** to **X3** in **FIG. 35**), and thus intensities of signals of the individual filter banks 5a are measured. Thereafter, the predetermined value **(Eth2)** is calculated by multiplying the average of the intensities of the signals of all of or a plurality of filter banks 5a by a predetermined coefficient, the calculated predetermined value **(Eth2)** is used as the threshold in the subsequent threshold-based determination process. Further, the available range of the predetermined value **(Eth2)** may be delimited by predetermined upper and lower limits.

Note that, only when the predetermined value **(Eth2)** newly calculated in the state **I11** is more than the predetermined value **(Eth2)** currently used, the predetermined value **(Eth2)** currently used is replaced with the predetermined value **(Eth2)** newly calculated in the state **I11.** In contrast, when the predetermined value **(Eth2)** newly calculated in the state **I11** is not more than the predetermined value **(Eth2)** currently used, the predetermined value **(Eth2)** newly calculated in the state **I11** is not used, and the predetermined value **(Eth2)** currently used is continuously used. After the process in the state **I11** ends, the state machine changes to the state **S11.**

Further, in the state machine shown in **FIG. 44,** when the non-detection state continues from the state **S11,** repeat transitions between the state **S11** and the state **S16** are shown. In view of this, when the repeat transitions between the state **S11** and the state **S16** occur, it is possible to measure continuous time of the non-detection state by counting the number of times of passing through the state **S16.** In consideration of this, an upper limit of the continuous time of the detection state or the number of times of passing through the state **S16** is selected in advance. When the continuous time or the number of times of passing through the state **S16** exceeds its upper limit at the state **S11,** even when the non-detection state continues, the state machine does not change to the state **S16** but changes to the state **I12.**

When the predetermined value **(Eth2)** used in the threshold-based determination process is excessively large, such continuation of the non-detection state is likely to occur. Therefore, in the state **I12,** operation of resetting the predetermined value **(Eth2)** is performed. In more detail, in the state **I12,** the A/D conversion process, the DCT process, and the filter bank process are conducted on the sensor signal (the steps **X1** to **X3** in **FIG. 35**), and thus intensities of signals of the individual filter banks **5a** are measured. Thereafter, the predetermined value **(Eth2)** is calculated by multiplying the average of the intensities of the signals of all of or a plurality of filter banks **5a** by a predetermined coefficient, the calculated predetermined value **(Eth2)** is used as the threshold in the subsequent threshold-based determination process. Further, the available range of the predetermined value **(Eth2)** may be delimited by predetermined upper and lower limits.

Note that, only when the predetermined value **(Eth2)** newly calculated in the state **I12** is less than the predetermined value **(Eth2)** currently used, the predetermined value (Eth2) currently used is replaced with the predetermined value **(Eth2)** newly calculated in the state **I12.** In contrast, when the predetermined value **(Eth2)** newly calculated in the state **I12** is not less than the predetermined value **(Eth2)** currently used, the predetermined value **(Eth2)** newly calculated in the state **I12** is not used, and the predetermined value **(Eth2)** currently used is continuously used. After the process in the state **I12** ends, the state machine changes to the state **S11** when the non-detection state occurs, and changes to the state **W11** when the detection state occurs.

As described above, when the detection state or non-detection state continues for a predetermined period or more, it is determined that the current predetermined value **(Eth2)** is set to an inappropriate value for current background or ambient noise, and therefore the reset of the predetermined value **(Eth2)** is performed. Therefore, when false detection frequently occurs due to an excessively small value of the predetermined value **(Eth2),** the current predetermined value **(Eth2)** is replaced with a larger one, and thus probability of false detection can be reduced. Further, the object of detection target cannot be detected due to an excessively large value of the predetermined value **(Eth2),** the current predetermined value **(Eth2)** is replaced with a smaller one, and thus detection sensitivity can be improved and probability of failure of detection can be reduced.

In summary, the signal processing device **2** (threshold setter) is configured to, when a state where the recognizer **7** determines presence of the object continues for a predetermined time period or more, or when a state where the recognizer **7** determines absence of the object continues for a predetermined time period or more, reset the predetermined value **(Eth2).**

The following explanation referring to operation of the state machine shown in **FIG. 45** is made to the background signal removal process in which the background signal remover **10** removes background signals of the individual filter banks **5a** from signals of the individual filter bank **5a** before being subjected to the normalization by the normalizer **6.**

The state machine shown in **FIG. 45** includes states **S21** to **S26** corresponding to the states **S11** and **S16,** a state **W21** corresponding to the state **W11,** and states **I21** and **I22** corresponding to the states **I11** and **I12,** in addition to the states shown in the state transition diagram of **FIG. 44.** In short, the state S21 to **S26,** the state **W21,** and the state **I21** and **I22** perform the same process as the states **S11** to **S16,** the state **W11,** and the states **I11** and **I12,** respectively. Further, the states **S21** to **S26** perform the same process as the corresponding states **S11** to **S16** and additionally perform the background signals removal process. Further, the states **S12** and **S22** of **FIG. 45** act to determine whether to perform the background removal process.

First, it is checked whether constant background signals are present, and when it is determined that the constant background signals are present, the background removal process is performed. In this case, efficiency of extraction of desired signals can be improved and thus false detection can be prevented. However, the background signal removal process is likely to cause decreases in intensities of signal components and thus decrease the detection sensitivity. Therefore the background signal removal process should be performed when really needed, and it is not preferable that the background signal removal process be always performed.

In view of this, in the state **S12** of **FIG. 45,** only when at least one filter bank **5a** with the signal intensity larger than a predetermined value is present and it is determined that the intended object of detection is not present, the state machine changes to the state **S22,** and in the subsequent states **S21** to **S26,** the background signal removal process is performed for each of the filter banks **5a.**

In the state **S22,** only when at least one filter bank 5a with the signal intensity larger than a predetermined value is present and it is determined that the intended object of detection is not present, the state machine changes to the state **S23,** and in the subsequent states **S21** to **S26,** the background signal removal process is performed for each of the filter banks **5a.** Further, in the state **S22,** when at least one filter bank **5a** with the signal intensity larger than a predetermined value is not present or when it is determined that the intended object of detection is present, the state machine changes to the state **S12,** and thus the background signal removal process is not performed.

Consequently, the background signal removal process is performed only when really needed, and therefore it is possible to prevent the detection sensitivity from decreasing due to needless decreasing of intensities of signal components.

The states **S12** and **S22** change from the state **W11** and **W21,** respectively. Therefore, when the non-detection state ends and the detection state starts, determination of whether to perform the background removal process is always performed.

Further, even in a case where the detection state continues, an opportunity of determining whether to perform the background removal process is provided. First, in the state **S13,** when the non-detection state occurs or the detection state continues for a predetermined time period or more, the state machine changes to the state **S14.** In short, at least one of two conditions is satisfied, the state machine changes from the state **S13** to the state **S14.** One of the two conditions is that the non-detection state occurs, and the other is that the detection state continues for the predetermined time period or more.

In a case where the state machine changes from the state **S13** to the state **S14** based on the latter condition (the detection state continues for the predetermined time period or more), when the detection state continues from the state **S13,** repeat transitions between the state **S13** and the state **S14** are shown. In consideration of this, an upper limit of the continuous time of the detection state or the number of times of passing through the state **S14** is selected in advance. When the continuous time or the number of times of passing through the state **S14** exceeds its upper limit at the state **S14,** even when the detection state continues, the state machine does not change to the state **S13** but changes to the state **I11**, and thereby performs the reset of the predetermined value **(Eth2).**

In contrast, in a case where the state machine changes from the state **S13** to the state **S14** based on the former condition (the non-detection state occurs), the state machine changes to the state **S15** when the non-detection state occurs at the state **S14,** but changes to the state **S12** when the detection state occurs at the state **S14.** Similarly, in the state **S24,** in a case where the state machine changes from the state **S23** to the state **S24** based on the former condition (the non-detection state occurs), the state machine changes to the state **S25** when the non-detection state occurs at the state **S24,** but changes to the state **S22** when the detection state occurs at the state **S24.**

Further, in the state **I12,** the state machine changes to the state **S11** when the non-detection state occurs, but changes to the state **W11** when the detection state occurs.

Further, in the state **I22,** the state machine changes to the state **S22** when the non-detection state occurs, but changes to the state **W21** when the detection state occurs. In summary, also by increasing the opportunity of determining whether to perform the background removal process in the state **S22,** a decrease in the detection sensitivity resulting from performing the background signal removal process is reduced as possible.

Further, the recognizer **7** may have a function of identifying the object by performing the recognition process by a neural network instead of the aforementioned recognition process. In this case, in the signal processing device **2,** the identification accuracy by the identifier (the recognizer) **7** can be improved.

The neural network may be an unsupervised competitive learning neural network, for example. Alternatively, the neural network may be a supervised backpropagaton neural network. However, the competitive learning neural network has a simpler configuration than the backpropagation neural network. In the competitive learning neural network, it is sufficient that learning is performed by use of learning data of individual categories, and even after the learning is performed once, the learning can be enhanced by additional learning.

The learning data may include outputs of the normalizer **6** which are in advance obtained in accordance with different motions of the intended object of detection in the detection area of the radio wave sensor **1.**

For example, as shown in **FIG. 46,** the neural network includes an input layer **71** and an output layer **72,** and has a configuration in which neurons **N2** of the output layer **72** are individually coupled with all neurons **N1** of the input layer **71.** It is assumed that the neural network is realized by a microcomputer executing an appropriate application program. However, the neural network may be realized by a dedicated neuron computer.

Operation of the neural network includes a learning mode and a detection mode. The neural network learns with the appropriate learning data in the learning mode and thereafter performs the recognition process in the detection mode.

The degrees of coupling (weight coefficients) between the neurons **N1** of the input layer **71** and the neurons **N2** of the output layer **72** are variable. When the learning data is inputted into the neural network in the learning mode, the neural network starts to learn, and thereby determines the weight coefficients between the neurons **N1** of the input layer **71** and the neurons **N2** of the output layer **72.** In other words, the individual neurons **N2** of the output layer **72** are associated with weight vectors whose components are weight coefficients regarding the individual neurons **N1** of the input layer **71.** Thus, the number of components of the weight vector is equal to the number of neurons **N1** of the input layer **71,** and the number of parameters of a feature amount to be inputted into the input layer **71** is equal to the number of components of the weight vector.

In contrast, in the detection mode, when detection data outputted from the normalizer **6** to be categorized is given to the input layer **71** of the neural network, the neuron **N2** which is smallest, in a distance between the weight vector and the detection data, of the neurons **N2** of the output layer **72** fires. When in the learning mode the neurons **N2** of the output layer **72** are associated with categories, the category of the detection data can be known from the category associated with the fire neuron **N2.** In the neural network of the present embodiment, the categories are set so that all of states other than "detection" of the object are determined as "non-detection".

As described above, the signal processing device **2** of the present embodiment includes the amplifier **3,** the A/D converter **4,** the frequency analyzer **5,** the normalizer **6,** and the recognizer **7.** The amplifier **3** is configured to amplify a sensor signal which is according to motion of the object and is outputted from the radio wave sensor **1** configured to send a radio wave and receive a reflected radio wave. The A/D converter **4** is configured to convert the sensor signal amplified by the amplifier **3** into a sensor signal in digital form and output the sensor signal in digital form. The frequency analyzer **5** is configured to convert the sensor signal outputted from the A/D converter **4** into the frequency domain signal, and extract, by use of a group of individual filter banks **5a** with different frequency bands, signals of the individual filter banks **5a** from the frequency domain signal. The normalizer **6** is configured to normalize intensities of the signals individually passing through the individual filter banks **5a** by a sum of the signals extracted by the frequency analyzer **5**

or a sum of intensities of signals individually passing through predetermined filter banks **5a** selected from the individual filter banks **5a** to obtain normalized intensities, and output the normalized intensities. The recognizer **7** is configured to perform a recognition process of identifying the object based on at least one of a frequency distribution and a component ratio of the normalized intensities which are calculated from the normalized intensities of the individual filter banks **5a** outputted from the normalizer **6.**

In other words, the signal processing device **2** of the present embodiment includes the following first feature. In the first feature, the signal processing device **2** includes a frequency analyzer **5,** a normalizer **6,** and a recognizer **7.** The frequency analyzer 5 is configured to convert a sensor signal corresponding to a radio wave reflected by an object into a frequency domain signal, and extract, by use of a group of individual filter banks **5a** with different frequency bands, signals of the individual filter banks **5a** from the frequency domain signal. The normalizer **6** is configured to normalize intensities of the signals individually passing through the individual filter banks **5a** by a sum of the signals extracted by the frequency analyzer **5** or a sum of intensities of signals individually passing through predetermined filter banks **5a** selected from the individual filter banks **5a** to obtain normalized intensities, and output the normalized intensities. The recognizer **7** is configured to perform a recognition process of identifying the object based on at least one of a frequency distribution and a component ratio of the normalized intensities which are calculated from the normalized intensities of the individual filter banks **5a** outputted from the normalizer **6.**

Further, the signal processing device **2** of the present embodiment may include the following second feature. In the second feature, the signal processing device **2** includes an amplifier **3** configured to amplify the sensor signal and an A/D converter **4** configured to convert the sensor signal amplified by the amplifier **3** into a sensor signal in digital form and output the sensor signal in digital form. The frequency analyzer **5** is configured to convert the sensor signal outputted from the A/D converter **4** into the frequency domain signal, and extract the signals of the individual filter banks 5a of the group of individual filter banks **5a.**

Further, the signal processing device **2** of the present embodiment may include the following third feature. In the third feature, the frequency analyzer **5** has a function of converting the sensor signal outputted from the A/D converter **4** into the frequency domain signal by discrete cosine transform. Each of the individual filter banks **5a** includes a plurality of frequency bins **5b.** The signal processing device **2** further includes a smoothing processor **8** which is interposed between the frequency analyzer **5** and the normalizer **6.** The smoothing processor **8** has at least one of a function of performing smoothing processing on intensities of signals of the individual frequency bins **5b** in a frequency domain for each of the individual filter banks **5a** and another function of performing smoothing processing on intensities of signals of the individual frequency bins **5b** in a time axis direction for each of the individual filter banks **5a.**

Further, the signal processing device **2** of the present embodiment may include the following fourth feature. In the fourth feature, the signal processing device **2** further includes a background signal remover **10** configured to remove background signals from the signals individually passing through the individual filter banks **5a.**

Further, the signal processing device **2** of the present embodiment may include the following fifth feature in addition to the fourth feature. In the fifth feature, the background signal remover **10** is configured to remove the background signals by individually subtracting the background signals from the signals passing through the individual filter banks **5a.** Further, the signal processing device **2** of the present embodiment may include the following sixth and seventh features selectively in addition to the fifth feature. In the sixth feature, the background signal remover **10** is configured to remove the background signals each of which defined as an average in a time axis of a plurality of signals obtained in advance of a corresponding one of the individual filter banks **5a.** In the seventh feature, the background signal remover **10** is configured to remove the background signals each of which is defined as an immediately preceding signal of a corresponding one of the individual filter banks 5a.

Further, the signal processing device **2** of the present embodiment may include the following eighth and ninth features selectively as an alternative to the fifth feature. In the eighth feature, the background signal remover **10** is an adaptive filter configured to remove the background signals by filtering the background signals in a frequency domain. In the ninth feature, the background signal remover **10** is configured to remove the background signals of individual filter banks **5a** from the signals of the individual filter banks **5a** before being normalized by the normalizer **6.**

Note that, the signal processing device **2** of the present embodiment may include the following tenth feature in addition to the eighth feature. In the tenth feature, an adaptive algorithm of the adaptive filter is an LMS algorithm of discrete cosine transform.

Further, the signal processing device **2** of the present embodiment may include the following eleventh feature as an alternative to any one of the fifth, eighth, and ninth features. In the eleventh feature, each of the individual filter banks **5a** includes a plurality of frequency bins **5b.** One of the frequency bins **5b** in which the background signal is constantly included is treated as a particular frequency bin **5b.** The background signal remover **10** is configured to remove the background signal by not using an intensity of an actual signal of the particular frequency bin but replacing the intensity of the actual signal of the particular frequency bin by an intensity of a signal estimated based on intensities of signals of frequency bins adjacent to the particular frequency bin.

Further, the signal processing device **2** of the present embodiment may include the following twelfth to fourteenth features selectively. In the twelfth feature, the recognizer **7** is configured to identify the object by performing pattern recognition by principle component analysis or KL transform as the recognition process. In the thirteenth feature, the recognizer **7** is configured to identify the object by performing a recognition process based on multiple linear regression analysis as the recognition process. In the fourteenth feature, the recognizer **7** is configured to identify the object by performing a recognition process based on a neural network as the recognition process.

Further, the signal processing device **2** of the present embodiment may include the following fifteenth feature. In the fifteenth feature, the recognizer **7** is configured to determine an identification result by majority decision based on results obtained by performing the recognition process an odd number of times.

Further, the signal processing device **2** of the present embodiment may include the following sixteenth feature. In the sixteenth feature, the signal processing device **2** is configured to, only when a sum of intensities of the signals of the individual filter banks **5a** before being normalized by the normalizer **6** is equal to or more than a predetermined value, allow the recognizer **7** to perform the recognition process or treat a result of the recognition process by the recognizer **7** as being valid.

Further, the signal processing device **2** of the present embodiment may include the following seventeenth feature in addition to the sixteenth feature. In the seventeenth feature, the signal processing device **2** further include a threshold setter configured to change the predetermined value (i.e., the signal processing device **2** performs the threshold setting process).

Further, the signal processing device **2** of the present embodiment may include the following eighteenth feature in addition to the seventeenth feature. In the eighteenth feature, the threshold setter is configured to set the predetermined value based on pre-normalized intensities of signals passing through the individual filter banks 5a in a period which starts from time of activation of a radio wave sensor **1** outputting the sensor signal and ends after a lapse of a predetermined time period.

Further, the signal processing device **2** of the present embodiment may include the following nineteenth feature in addition to the seventeenth or eighteenth feature. In the nineteenth feature, the threshold setter is configured to, when a state where the recognizer **7** determines presence of the object continues for a predetermined time period or more, or when a state where the recognizer **7** determines absence of the object continues for a predetermined time period or more, reset the predetermined value.

As described above, according to the signal processing device **2** of the present embodiment, it is possible to reduce the probability of false detection caused by motion of the object other than the intended object of detection.

**(Embodiment 2)**

The present embodiment relates to a signal processing device for performing signal processing on sensor signals from a sensor for receiving a wireless signal reflected by an object.

In the object detection device **101** disclosed in document 1, it is considered that components other than the sensor **110** and the lighting control unit **113** constitute a signal processing device for performing signal processing in a frequency domain on sensor signals of the sensor **110** which is a millimeter wave sensor.

Generally, the signal processing device performing signal processing on a sensor signal in a frequency domain performs a recognition process of an intended object of detection based on a distribution feature of a frequency domain signal. Alternatively, the signal processing device extracts a signal component resulting from motion of the intended object of detection from a frequency domain signal, and performs a recognition process of the intended object of detection based on a ratio of the extracted signal component.

However, with regard to the signal processing device performing the above recognition process, when a rapid temporal change occurs in the frequency domain signal due to motion of an unintended object of detection, false detection which means the unintended object of detection is misidentified as the intended object of detection may occur.

To avoid this false detection, it is considered to use whole information in a prescribed time period of the feature of the distribution of the frequency domain signal or the ratio of the signal component in the recognition process. However, such a method requires a lot of time for the recognition process. Additionally, the signal processing device becomes more complex and larger in scale.

Note that, the motion of the unintended object of detection may include motion of sway of branches and leaves of trees and motion of sway of electric wires, for example.

In view of the above insufficiency, the present embodiment has aimed to propose a signal processing device which is simple and small and can detect the intended object of detection accurately irrespective of presence or absence of a rapid temporal change in a signal resulting from motion of the unintended object of detection.

Hereinafter, a signal processing device **2** of the present embodiment is described with reference to **FIG. 47** to **FIG. 55.** The signal processing device **2** shown in **FIG. 47** is different from the signal processing device **2** of the embodiment 1 in including a signal component extractor **13** and a noise determiner **14.**

The signal processing device **2** is configured to perform signal processing on a sensor signal outputted from a radio wave sensor **1.** The radio wave sensor **1** is a sensor configured to send a radio wave to a detection area and receive the radio wave (wireless signal) reflected by an object in the detection area and thus output the sensor signal according to motion of this object. Note that, **FIG. 47** is a block diagram illustrating a sensor device Se including the radio wave sensor **1** and the signal processing device **2.**

As described in text relating to the embodiment **1,** the signal processing device **2** is configured to perform signal processing on the sensor signal in the frequency domain. In more detail, a recognizer **7** is configured to perform a recognition process of identifying the intended object of detection based on at least one of the feature of the distribution of the frequency domain signal and the component ratio of normalized intensities of signals passing through individual filter banks 5a. The signal processing on the sensor signal in the frequency domain may include a recognition process by principle component analysis, KL transform, multiple linear regression analysis, or a neural network, for example.

With regard to the signal processing device **2** performing such a recognition process, the following explanation is made to a configuration of reducing probability of misidentifying the unintended object of detection as the intended object of detection even when a rapid temporal change occurs in the frequency domain signal due to motion of the unintended object of detection. In this regard, the motion of the unintended object of detection may include motion of sway of branches and leaves of trees and motion of sway of electric wires, for example.

First, it is assumed that the recognizer **7** performs the recognition process of identifying the object based on the component ratio of the normalized intensities of the individual filter banks **5a** outputted from a normalizer **6. FIG. 48** shows a lateral axis denoting the time and a vertical axis denoting the normalized intensity, and shows signal components **A2** and **A3** separated by multiple linear regression analysis from data (corresponding to data **A1** in **FIG. 29)** in the time axis of the normalized intensities outputted from the normalizer **6.** When at least one predetermined filter bank **5a** fulfils a condition where the signal component **A2** resulting from human movement is greater than the signal component **A3** resulting from motion of the unintended object of detection, the recognizer **7** determines that the intended object of detection is present. Hereinafter, the signal component **A2** resulting from human movement is referred to as a detection object signal component **A2**, and the signal component **A3** resulting from motion of the unintended object of detection is referred to as a noise signal component **A3**.

However, the detection object signal component **A2** possibly includes a rapid temporal change resulting from the unintended object of detection. When such a rapid temporal change is included in the detection object signal component **A2**, the recognizer **7** is likely to misidentify the unintended object of detection as the intended object of detection even when performing an averaging process.

In view of this, the recognizer **7** includes the signal component extractor **13** and the noise determiner **14** (see **FIG. 47).**

The signal component extractor **13** extracts the detection object signal components **A2** from the signals of the individual filter banks **5a** with the normalized intensities outputted from the normalizer **6.**

The noise determiner **14** is configured to, when an amount of change per unit time in the extracted detection object signal component **A2** of at least one of the predetermined filter bank **5a** is equal to or more than a predetermined value **(Eth11)** (first predetermined value), prohibit the recognition process by the recognizer **7** or treat a result of the recognition process by the recognizer **7** as being invalid.

In more detail, the signal component extractor **13** extracts the detection object signal component **A2** by multiple linear regression analysis from the data in the time axis of the normalized intensity outputted from the normalizer **6,** for each of the filter banks 5a. Thereafter, the signal component extractor **13** outputs data of the detection object signal component **A2** (see **FIG. 48)** to the noise determiner **14.**

The noise determiner 14 calculates differentials of the detection object signal component **A2** from a distribution in time axis region of the detection object signal component **A2** to obtain temporal differential intensities (= dA2/dt) of the detection object signal component **A2** at predetermined time intervals. Thereafter, when the temporal differential intensity of the detection object signal component **A2** of at least one of the predetermined filter bank **5a** is equal to or more than the predetermined value **(Eth11),** the noise determiner **14** prohibits the recognition process by the recognizer **7** or treats a result of the recognition process by the recognizer **7** as being invalid.

In this regard, as the predetermined filter banks **5a** used for determining whether to perform the recognition process by use of the signal component extractor **13** and the noise determiner **14,** at least one filter bank 5a is appropriately selected according to the intended object of detection. When the amount of change per unit time in the detection object signal component **A2** is equal to or more than the predetermined value **(Eth11)** with regard to all of the predetermined filter banks **5a** of interest, the recognition process is prohibited or the result of the recognition process is treated as being invalid.

FIG. 49 relates to the detection object signal component **A2** shown in **FIG. 48,** and shows the output signal outputted from an outputter **12** in a case where determination of whether to perform the recognition process by use of the signal component extractor **13** and the noise determiner **14** is not performed. **FIG. 50** relates to the detection object signal component **A2** shown in **FIG. 48,** and shows the output signal outputted from an outputter **12** in a case where determination of whether to perform the recognition process by use of the signal component extractor **13** and the noise determiner **14** is performed. The detection object signal component **A2** shown in **FIG. 48** shows a rapid temporal change resulting from the motion of the unintended object of detection. Consequently, it is confirmed that false detection of misidentifying the unintended object of detection as the intended object of detection can be prevented by performing determination of whether to perform the recognition process by use of the signal component extractor **13** and the noise determiner **14.**

Therefore, the signal processing device **2** can accurately detect the intended object of detection by signal analysis in the frequency domain irrespective of presence or absence of a rapid temporal change in the detection object signal component **A2** resulting from the motion of the unintended object of detection. Further, time necessary for a process of comparing the time differential intensity of the detection object signal component **A2** with the predetermined value **(Eth11)** is relatively short, and the signal processing device **2** including the present configuration can be realized by a simple and small structure.

Further, the noise determiner **14** may prohibit the recognition process by the recognizer **7** or treat the result of the recognition process by the recognizer **7** as being invalid, until a lapse of a predetermined time period from time when the temporal differential intensity of the detection object signal component **A2** becomes equal to or more than the predetermined value **(Eth11).** For example, as shown in **FIG. 51,** it is assumed that the detection object signal component **A2** rapidly changes at the time ta and the temporal differential intensity of the detection object signal component **A2** becomes equal to or more than the predetermined value **(Eth11)** at this time ta. In this case, even when the temporal differential intensity shows a flat waveform (the temporal differential intensity becomes less than the predetermined value **(Eth11))** after the time ta, the recognition process by the recognizer **7** is prohibited throughout the predetermined time period Ta after the time ta. Alternatively, the result of the recognition process by the recognizer **7** is treated as being invalid. Consequently, it is possible to successfully reduce false detection caused by a rapid temporal change in the detection object signal component **A2** resulting from the motion of the unintended object of detection.

Further, when the temporal differential intensity of the detection object signal component **A2** is equal to or less than a predetermined value **(Eth12),** the noise determiner **14** may prohibit the recognition process by the recognizer **7** or treat the result of the recognition process by the recognizer **7** as being invalid. The predetermined value **(Eth12)** used in this procedure is smaller than the predetermined value **(Eth11),** and is used to reduce false detection caused by the detection object signal component **A2** which has a substantially constant signal intensity with a slight fluctuation.

Further, the noise determiner **14** may prohibit the recognition process by the recognizer **7** or treat the result of the recognition process by the recognizer **7** as being invalid, until a lapse of a predetermined time period from time when the temporal differential intensity of the detection object signal component **A2** becomes equal to or less than the predetermined value **(Eth12).** In this case, it is possible to successfully reduce false detection resulting from the detection object signal component **A2** which has a substantially constant signal intensity with a slight fluctuation.

As described above, the signal processing device **2** of the present embodiment includes a frequency analyzer **5,** the normalizer **6,** the recognizer **7,** the signal component extractor **13,** and the noise determiner **14.** The frequency analyzer **5** is configured to convert the sensor signal according to motion of the object and outputted from the sensor (radio wave sensor) **1** receiving a wireless signal reflected by the object, into the frequency domain signal, and extract, by use of a group of individual filter banks **5a** with different frequency bands, signals of the individual filter banks **5a** from the frequency domain signal. The normalizer **6** is configured to normalize intensities of the signals individually passing through the individual filter banks **5a** by a sum of the signals extracted by the frequency analyzer **5** or a sum of intensities of signals individually passing through predetermined filter banks **5a** selected from the individual filter banks **5a** to obtain normalized intensities, and output the normalized intensities. The recognizer **7** is configured to perform a recognition process of identifying the object based on at least one of a frequency distribution and a component ratio of the normalized intensities which are calculated from the normalized intensities of the individual filter banks **5a** outputted from the normalizer **6.** The signal component extractor **13** is configured to extract a signal component resulting from motion of the object from each of the normalized intensities of the individual filter banks **5a.** The noise determiner **14** is configured to, when an amount of change per unit time in the signal component resulting from motion of the object of at least one of the individual filter banks **5a** is equal to or more than the first predetermined value, prohibit the recognition process by the recognizer **7** or treat a result of the recognition process by the recognizer **7** as being invalid.

In other words, the signal processing device **2** of the present embodiment includes the following twentieth feature in addition to the aforementioned first feature. In the twentieth feature, the signal processing device **2** further includes a signal component extractor **13** and a noise determiner **14.** The signal component extractor **13** is configured to extract a signal component resulting from motion of the object from each of the normalized intensities of the individual filter banks **5a.** The noise determiner **14** is configured to, when an amount of change per unit time in the signal component resulting from motion of the object of at least one of the individual filter banks **5a** is equal to or more than a first predetermined value, prohibit the recognition process by the recognizer **7** or treat a result of the recognition process by the recognizer **7** as being invalid.

Further, the signal processing device **2** of the present embodiment may include the following twenty-first feature in addition to the twentieth feature. In the twenty-first feature, the noise determiner **14** is configured to prohibit the recognition process by the recognizer **7** or treat a result of the recognition process by the recognizer **7** as being invalid, until a lapse of a predetermined time period from time when an amount of change per unit time is equal to or more than the first predetermined value.

Further, the signal processing device **2** of the present embodiment may include the following twenty-second feature in addition to the twentieth or twenty-first feature. In the twenty-second feature, the noise determiner **14** is configured to prohibit the recognition process by the recognizer **7** or treat a result of the recognition process by the recognizer **7** as being invalid, until a lapse of a predetermined time period from time when the amount of change per unit time is equal to or less than a second predetermined value smaller than the first predetermined value.

Note that, the signal processing device **2** of the present embodiment may appropriately include at least one of the aforementioned second to nineteenth features.

As described above, according to the present embodiment, it is possible to propose a signal processing device which is simple and small and can detect the intended object of detection accurately irrespective of presence or absence of a rapid temporal change in a signal resulting from motion of the unintended object of detection.

Next, another aspect of determining whether to perform the recognition process (i.e., a modification of the signal processing device **2** of the present embodiment) is described.

First, the signal processing device **2** includes a noise determiner **15** shown in **FIG. 52.** In short, the modification of the signal processing device **2** shown in **FIG. 52** is different from the signal processing device **2** of the embodiment 1 in including the noise determiner **15.**

The noise determiner **15** is configured to, when an amount of change per unit time in an intensity of at least one signal (pre-normalized signal) passing through at least one predetermined filter bank **5a** is equal to or more than a predetermined value **(Eth21),** prohibit the recognition process by the recognizer **7** or treat a result of the recognition process by the recognizer **7** as being invalid. In this regard, the filter banks **5a** used for determining whether to perform the recognition process by use of the noise determiner **15** is appropriately selected according to the intended object of detection.

In more detail, the noise determiner **15** calculates, from a distribution in the time axis domain of the intensity of the at least one signal passing through the at least one predetermined filter bank **5a,** differentials of the signal intensity of the filter bank 5a to obtain temporal differential intensities (dy/dt, wherein y denotes the signal intensity) of the signal intensity at predetermined time intervals. Thereafter, when the temporal differential intensity of the signal intensity of the at least one predetermined filter bank **5a** is equal to or more than the predetermined value **(Eth21),** the noise determiner **15** prohibits the recognition process by the recognizer **7** or treats a result of the recognition process by the recognizer **7** as being invalid.

In this regard, as the predetermined filter banks **5a** used for determining whether to perform the recognition process by use of the noise determiner **15,** at least one filter bank **5a** is appropriately selected according to the intended object of detection. When the amount of change per unit time in the signal intensity is equal to or more than the predetermined value **(Eth21)** with regard to all of the predetermined filter banks **5a** of interest, the recognition process is prohibited or the result of the recognition process is treated as being invalid.

**FIG. 53** shows an example of a waveform of the signal intensity of the predetermined filter bank **5a. FIG. 54** relates to the waveform of the signal intensity shown in **FIG. 53,** and shows the output signal outputted from the outputter **12** in a case where determination of whether to perform the recognition process by use of the noise determiner **15** is not performed. **FIG. 55** relates to the waveform of the signal intensity shown in **FIG. 53,** and shows the output signal outputted from the outputter **12** in a case where determination of whether to perform the recognition process by use of the noise determiner **15** is performed. The waveform of the signal intensity shown in **FIG. 53** shows a rapid temporal change resulting from the motion of the unintended object of detection. Consequently, it is confirmed that false detection of misidentifying the unintended object of detection as the intended object of detection can be prevented by performing determination of whether to perform the recognition process by use of the noise determiner **15.**

Therefore, the signal processing device **2** can accurately detect the intended object of detection by signal analysis in the frequency domain irrespective of presence or absence of a rapid temporal change in the signal intensity resulting from the motion of the unintended object of detection. Further, time necessary for a process of comparing the signal intensities of the individual filter banks **5a** with the predetermined value **(Eth21)** is relatively short, and the signal processing device **2** including the present configuration can be realized by a simple and small structure.

Further, the noise determiner **15** may prohibit the recognition process by the recognizer **7** or treat the result of the recognition process by the recognizer **7** as being invalid, until a lapse of a predetermined time period from time when the signal intensity of the filter bank **5a** becomes equal to or more than the predetermined value **(Eth21).** In this case, it is possible to successfully reduce false detection caused by a rapid temporal change in the signal intensity resulting from the motion of the unintended object of detection.

Further, when the temporal differential intensity of the signal intensity is equal to or less than a predetermined value **(Eth22),** the noise determiner **15** may prohibit the recognition process by the recognizer **7** or treat the result of the recognition process by the recognizer **7** as being invalid. The predetermined value **(Eth22)** used in this procedure is smaller than the predetermined value **(Eth21),** and is used to reduce false detection caused by a substantially constant signal intensity with a slight fluctuation.

Further, the noise determiner **15** may prohibit the recognition process by the recognizer **7** or treat the result of the recognition process by the recognizer **7** as being invalid, until a lapse of a predetermined time period from time when the temporal differential intensity of the signal intensity becomes equal to or less than the predetermined value **(Eth22).** In this case, it is possible to successfully reduce false detection resulting from the detection object signal component **A2** which has a substantially constant signal intensity with a slight fluctuation.

As described above, the modification of the signal processing device **2** of the present embodiment includes a frequency analyzer **5,** the normalizer **6,** the recognizer **7,** and the noise determiner **15.** The frequency analyzer **5** is configured to convert the sensor signal according to motion of the object and outputted from the sensor (radio wave sensor) 1 receiving a wireless signal reflected by the object, into the frequency domain signal, and extract, by use of a group of individual filter banks **5a** with different frequency bands, signals of the individual filter banks **5a** from the frequency domain signal. The normalizer **6** is configured to normalize intensities of the signals individually passing through the individual filter banks **5a** by a sum of the signals extracted by the frequency analyzer **5** or a sum of intensities of signals individually passing through predetermined filter banks **5a** selected from the individual filter banks **5a** to obtain normalized intensities, and output the normalized intensities. The recognizer **7** is configured to perform a recognition process of identifying the object based on at least one of a frequency distribution and a component ratio of the normalized intensities which are calculated from the normalized intensities of the individual filter banks **5a** outputted from the normalizer **6.** The noise determiner **15** is configured to, when an amount of change per unit time in at least one of the intensities of the signals passing through the individual filter banks **5a** is equal to or more than a first predetermined value, prohibit the recognition process by the recognizer **7** or treat a result of the recognition process by the recognizer **7** as being invalid.

In other words, the modification of the signal processing device **2** of the present embodiment includes the following twenty-third feature in addition to the aforementioned first feature. In the twenty-third feature, the signal processing device **2** further includes a noise determiner **15** configured to, when an amount of change per unit time in at least one of the intensities of the signals passing through the individual filter banks **5a** is equal to or more than a first predetermined value, prohibit the recognition process by the recognizer **7** or treat a result of the recognition process by the recognizer **7** as being invalid.

Further, the modification of the signal processing device **2** of the present embodiment may include the following twenty-fourth feature in addition to the twenty-third feature. In the twenty-fourth feature, the noise determiner **15** is configured to prohibit the recognition process by the recognizer **7** or treat a result of the recognition process by the recognizer **7** as being invalid, until a lapse of a predetermined time period from time when an amount of change per unit time is equal to or more than the first predetermined value.

Further, the modification of the signal processing device **2** of the present embodiment may include the following twenty-fifth feature in addition to the twenty-third or twenty-fourth feature. In the twenty-fifth feature, the noise determiner **15** is configured to prohibit the recognition process by the recognizer **7** or treat a result of the recognition process by the recognizer **7** as being invalid, until a lapse of a predetermined time period from time when the amount of change per unit time is equal to or less than a second predetermined value smaller than the first predetermined value.

Note that, the modification of the signal processing device **2** of the present embodiment may appropriately include at least one of the aforementioned second to nineteenth features.

As described above, according to the present embodiment, it is possible to propose a signal processing device which is simple and small and can detect the intended object of detection accurately irrespective of presence or absence of a rapid temporal change in a signal resulting from motion of the unintended object of detection.

Note that, in the embodiments **1** and **2,** the radio wave sensor **1** is used, however, a type of sensor is not limited providing that sensors can receive wireless signals such as radio waves or sound waves reflected by objects.

## Claims

**1.** A signal processing device comprising:

a frequency analyzer configured to convert a sensor signal corresponding to a radio wave reflected by an object into a frequency domain signal, and extract, by use of a group of individual filter banks with different frequency bands, signals of the individual filter banks from the frequency domain signal;

a normalizer configured to normalize intensities of the signals individually passing through the individual filter banks by a sum of the signals extracted by the frequency analyzer or a sum of intensities of signals individually passing through predetermined filter banks selected from the individual filter banks to obtain normalized intensities, and output the normalized intensities; and

a recognizer configured to perform a recognition process of identifying the object based on at least one of a frequency distribution and a component ratio of the normalized intensities which are calculated from the normalized intensities of the individual filter banks outputted from the normalizer.

**2.** The signal processing device of claim 1, further comprising:

an amplifier configured to amplify the sensor signal; and
an A/D converter configured to convert the sensor signal amplified by the amplifier into a sensor signal in digital form and output the sensor signal in digital form,
the frequency analyzer being configured to convert the sensor signal outputted from the A/D converter into the frequency domain signal, and extract the signals of the individual filter banks of the group of individual filter banks.

**3.** The signal processing device of claim 1, wherein:

the frequency analyzer has a function of converting the sensor signal outputted from the A/D converter into the frequency domain signal by discrete cosine transform;
each of the individual filter banks includes a plurality of frequency bins; and
the signal processing device further includes a smoothing processor which is interposed between the frequency analyzer and the normalizer and has at least one of a function of performing smoothing processing on intensities of signals of the individual frequency bins in a frequency domain for each of the individual filter banks and another function of performing smoothing processing on intensities of signals of the individual frequency bins in a time axis direction for each of the individual filter banks.

**4.** The signal processing device of claim 1, further comprising:

a background signal remover configured to remove a background signal from each of the signals individually passing through the individual filter banks.

**5.** The signal processing device of claim 4, wherein
the background signal remover is configured to remove the background signals by individually subtracting the background signals from the signals passing through the individual filter banks.

**6.** The signal processing device of claim 5, wherein
the background signal remover is configured to remove the background signals each of which defined as an average in a time axis of a plurality of signals obtained in advance of a corresponding one of the individual filter banks.

**7.** The signal processing device of claim 5, wherein
the background signal remover is configured to remove the background signals each of which is defined as an immediately preceding signal of a corresponding one of the individual filter banks.

**8.** The signal processing device of claim 4, wherein
the background signal remover is an adaptive filter configured to remove the background signals by filtering the background signals in a frequency domain.

**9.** The signal processing device of claim 4, wherein
the background signal remover is configured to remove the background signals of individual filter banks from the signals of the individual filter banks before being normalized by the normalizer.

**10.** The signal processing device of claim 8, wherein
an adaptive algorithm of the adaptive filter is an LMS algorithm of discrete cosine transform.

**11.** The signal processing device of claim 4, wherein:

each of the individual filter banks includes a plurality of frequency bins;
one of the frequency bins in which the background signal is constantly included is treated as a particular frequency bin; and
the background signal remover is configured to remove the background signal by not using an intensity of an actual signal of the particular frequency bin but replacing the intensity of the actual signal of the particular frequency bin by an intensity of a signal estimated based on intensities of signals of frequency bins adjacent to the particular frequency bin.

**12.** The signal processing device of claim 1, wherein
the recognizer is configured to identify the object by performing pattern recognition by principle component analysis or KL transform as the recognition process.

**13.** The signal processing device of claim 1, wherein
the recognizer is configured to identify the object by performing a recognition process based on multiple linear regression analysis as the recognition process.

**14.** The signal processing device of claim 1, wherein
the recognizer is configured to identify the object by performing a recognition process based on a neural network as the recognition process.

**15.** The signal processing device of claim 1, wherein
the recognizer is configured to determine an identification result by majority decision based on results obtained by performing the recognition process an odd number of times.

**16.** The signal processing device of claim 1, configured to, only when a sum of intensities of the signals of the individual filter banks before being normalized by the normalizer is equal to or more than a predetermined value, allow the recognizer to perform the recognition process or treat a result of the recognition process by the recognizer as being valid.

**17.** The signal processing device of claim **16,** further comprising a threshold setter configured to change the predetermined value.

**18.** The signal processing device of claim **17,** wherein
the threshold setter is configured to set the predetermined value based on pre-normalized intensities of signals passing through the individual filter banks in a period which starts from time of activation of a radio wave sensor outputting the sensor signal and ends after a lapse of a predetermined time period.

**19.** The signal processing device of claim **17,** wherein
the threshold setter is configured to, when a state where the recognizer determines presence of the object continues for a predetermined time period or more, or when a state where the recognizer determines absence of the object continues for a predetermined time period or more, reset the predetermined value.

**20.** The signal processing device of claim 1, further comprising:

a signal component extractor configured to extract a signal component resulting from motion of the object from each of the normalized intensities of the individual filter banks; and
a noise determiner configured to, when an amount of change per unit time in the signal component resulting from motion of the object of at least one of the individual filter banks is equal to or more than a first predetermined value, prohibit the recognition process by the recognizer or treat a result of the recognition process by the recognizer as being invalid.

**21.** The signal processing device of claim 20, wherein
the noise determiner is configured to prohibit the recognition process by the recognizer or treat a result of the recognition process by the recognizer as being invalid, until a lapse of a predetermined time period from time when an amount of change per unit time is equal to or more than the first predetermined value.

**22.** The signal processing device of claim 20, wherein
the noise determiner is configured to prohibit the recognition process by the recognizer or treat a result of the recognition process by the recognizer as being invalid, until a lapse of a predetermined time period from time when the amount of change per unit time is equal to or less than a second predetermined value smaller than the first predetermined value.

**23.** The signal processing device of claim 1, further comprising
a noise determiner configured to, when an amount of change per unit time in at least one of the intensities of the signals passing through the individual filter banks is equal to or more than a first predetermined value, prohibit the recognition process by the recognizer or treat a result of the recognition process by the recognizer as being invalid.

**24.** The signal processing device of claim 23, wherein
the noise determiner is configured to prohibit the recognition process by the recognizer or treat a result of the recognition process by the recognizer as being invalid, until a lapse of a predetermined time period from time when an amount of change per unit time is equal to or more than the first predetermined value.

**25.** The signal processing device of claim 23, wherein
the noise determiner is configured to prohibit the recognition process by the recognizer or treat a result of the recognition process by the recognizer as being invalid, until a lapse of a predetermined time period from time when the amount of change per unit time is equal to or less than a second predetermined value smaller than the first predetermined value.

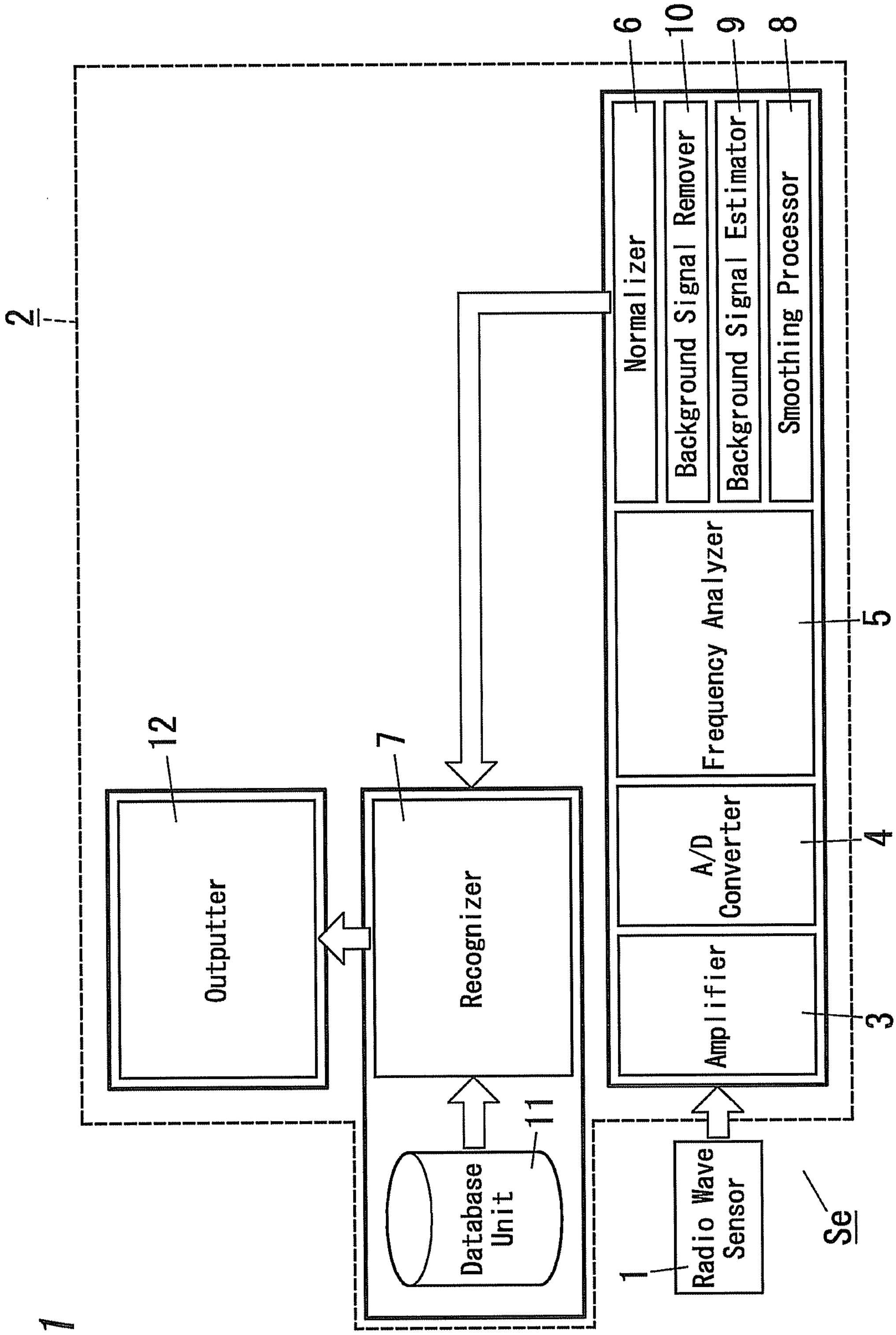
2
6
10
9
8
Normalizer
Background Signal Remover
Background Signal Estimator
Smoothing Processor
Frequency Analyzer
5
A/D Converter
4
Amplifier
3
12
Outputter
7
Recognizer
11
Database Unit
1
Radio Wave Sensor
Se

FIG. 1

FIG. 2

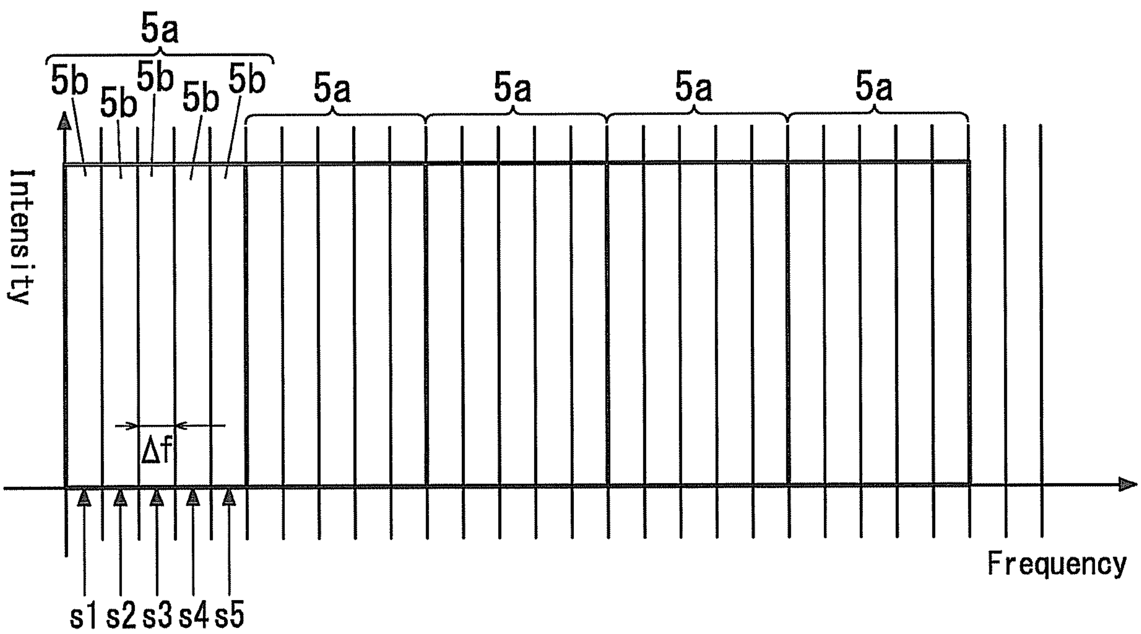
5a
5b
5b
5b
5b
5b
5a
5a
5a
5a
Intensity
Δf
s1 s2 s3 s4 s5
Frequency

FIG. 3

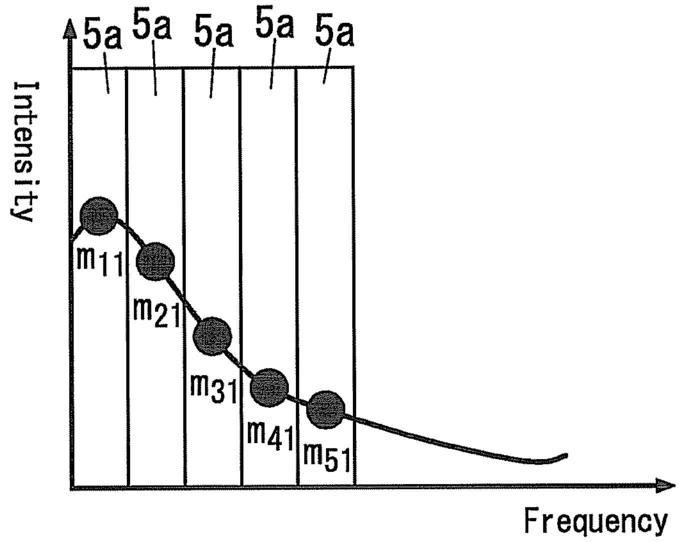

*FIG. 4*

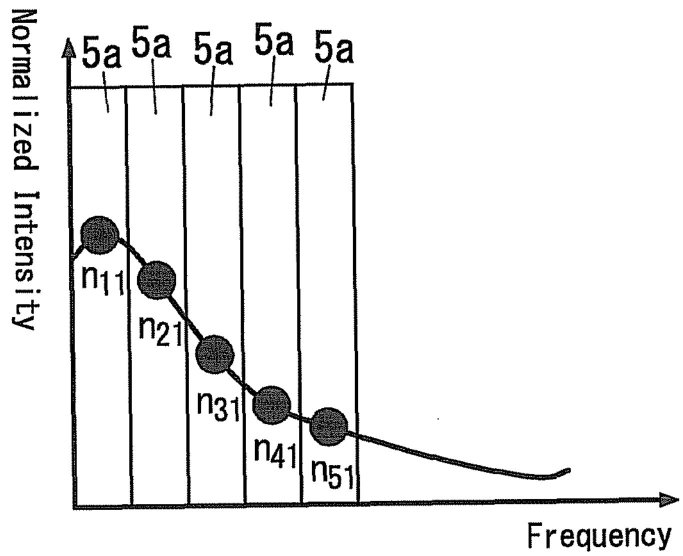
Normalized Intensity
5a
5a
5a
5a
5a
n11
n21
n31
n41
n51
Frequency

FIG. 5

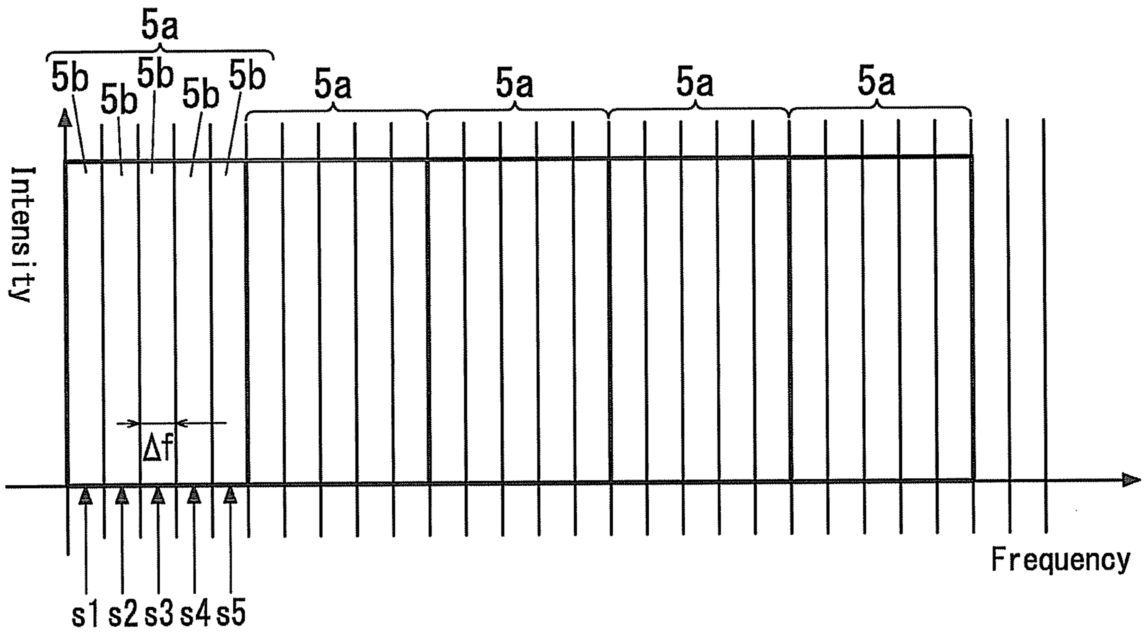

5a
5b
5b
5b
5b
5b
5a
5a
5a
5a
Intensity
Δf
Frequency
s1 s2 s3 s4 s5

FIG. 6

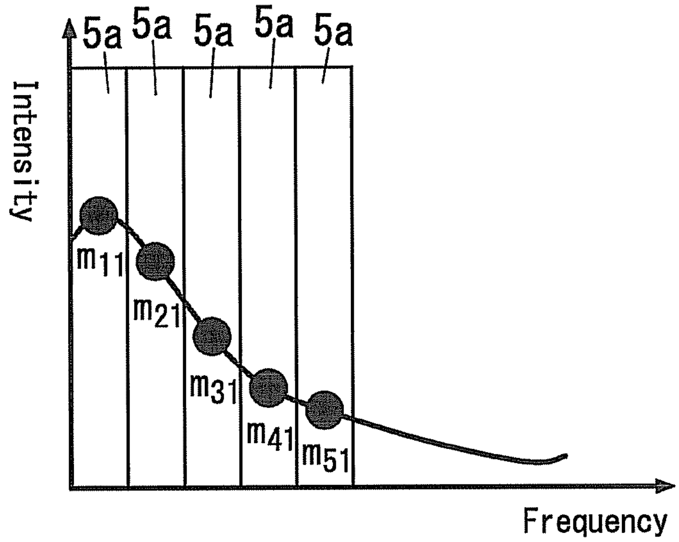

FIG. 7

(c)

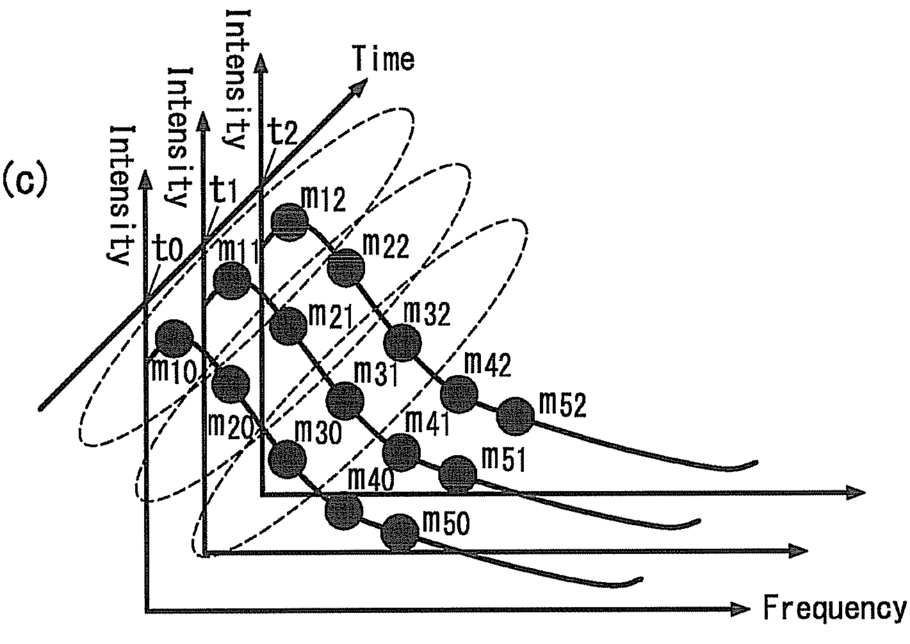
Intensity
Intensity
Intensity
Time
t0
t1
t2
m10
m11
m12
m20
m21
m22
m30
m31
m32
m40
m41
m42
m50
m51
m52
Frequency

FIG. 8

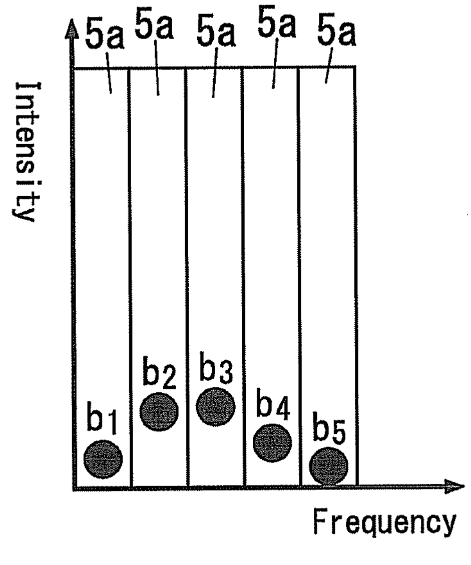

FIG. 9

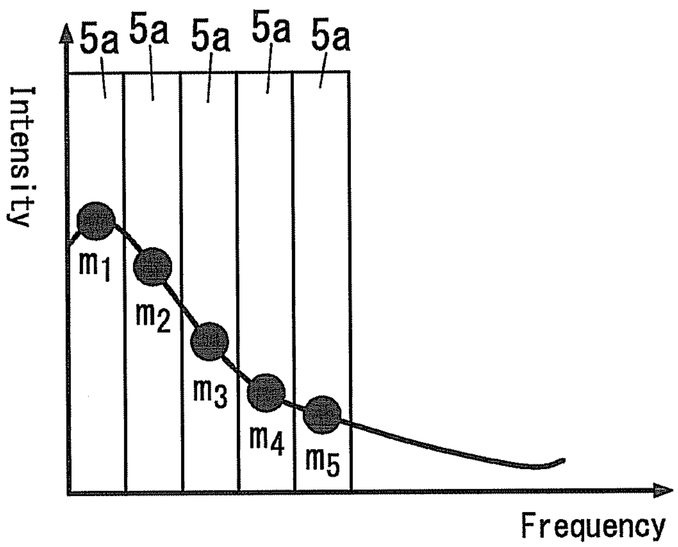

*FIG. 10*

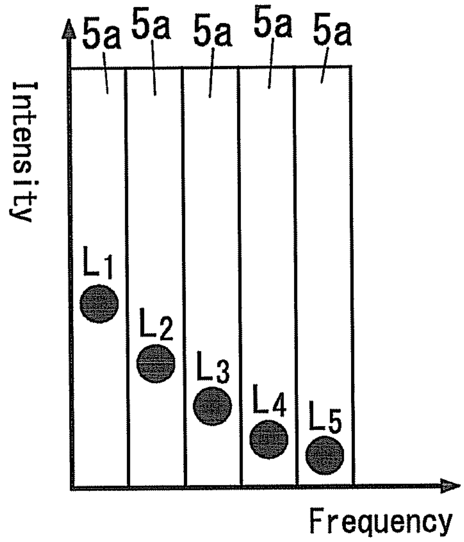

FIG. 11

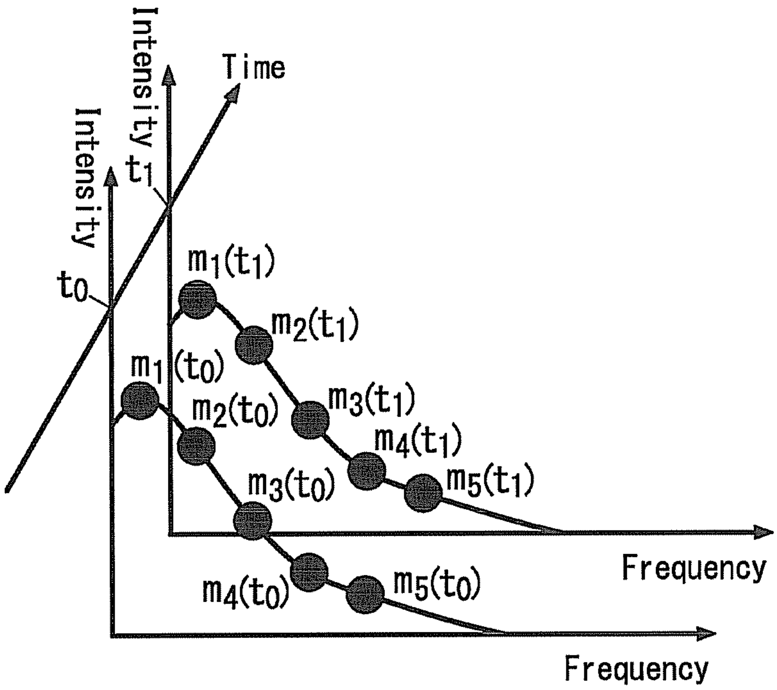
Intensity
Time
Intensity
t1
t0
m1(t1)
m2(t1)
m1(t0)
m3(t1)
m2(t0)
m4(t1)
m3(t0)
m5(t1)
Frequency
m4(t0)
m5(t0)
Frequency

FIG. 12

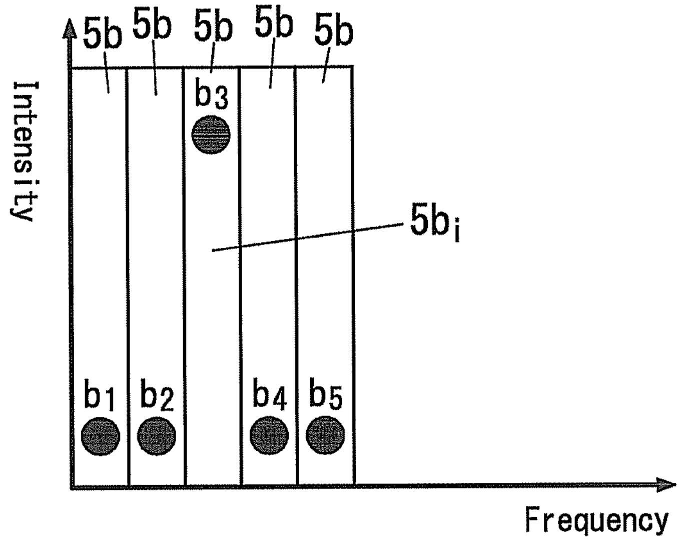

FIG. 13

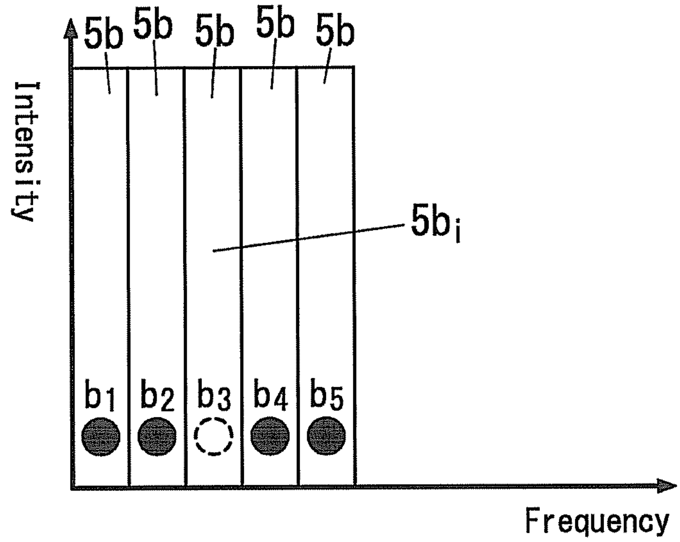

*FIG. 14*

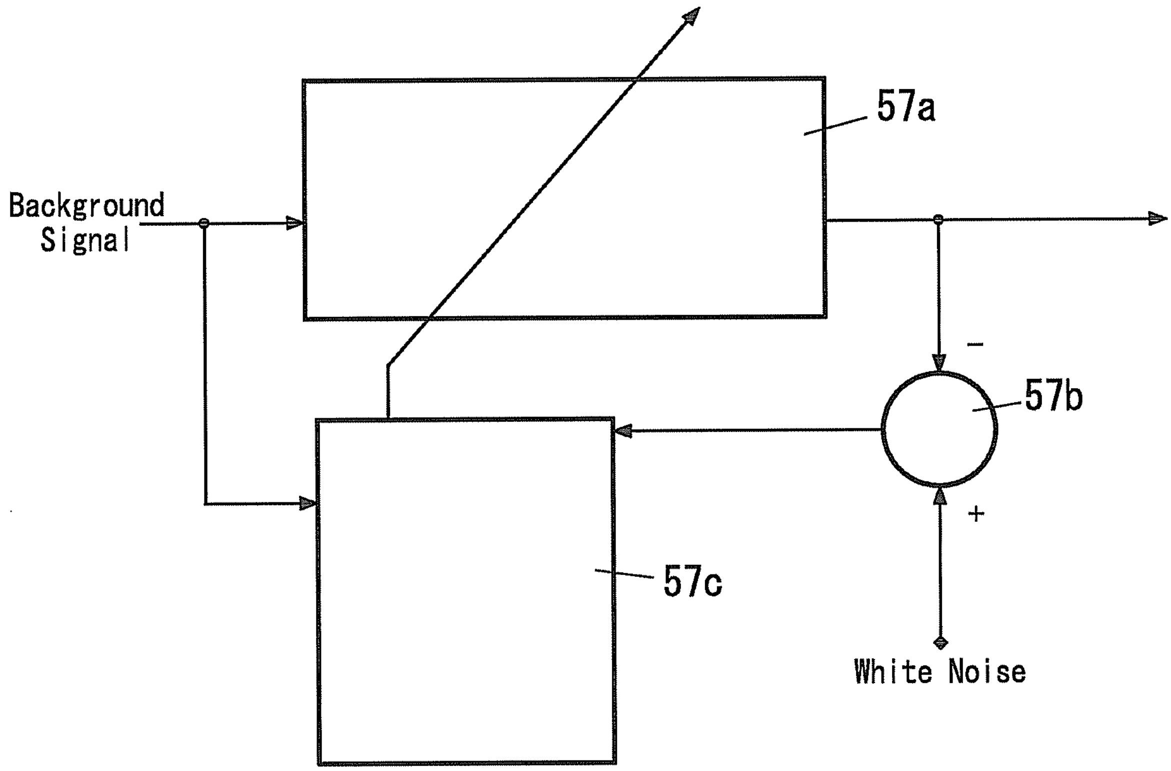

FIG. 15

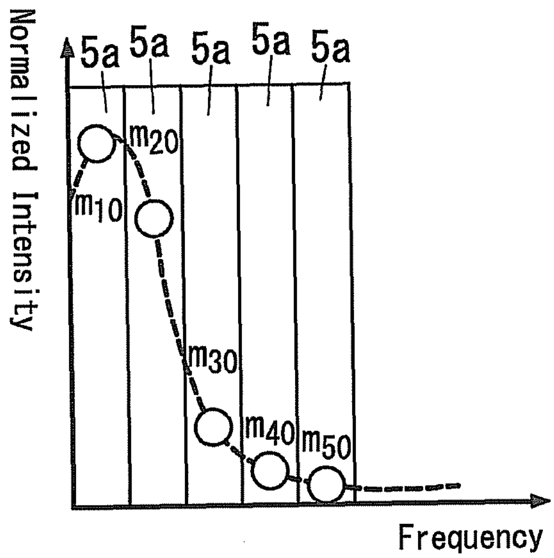
Normalized Intensity
5a
5a
5a
5a
5a
m10
m20
m30
m40
m50
Frequency

FIG. 16

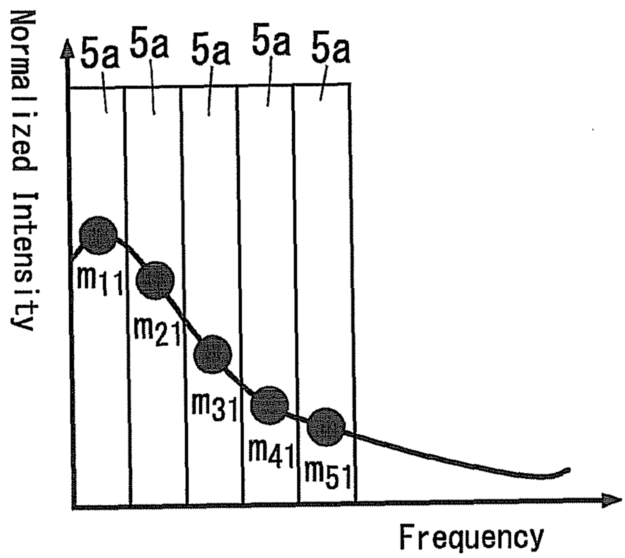
Normalized Intensity
5a
5a
5a
5a
5a
m11
m21
m31
m41
m51
Frequency

FIG. 17

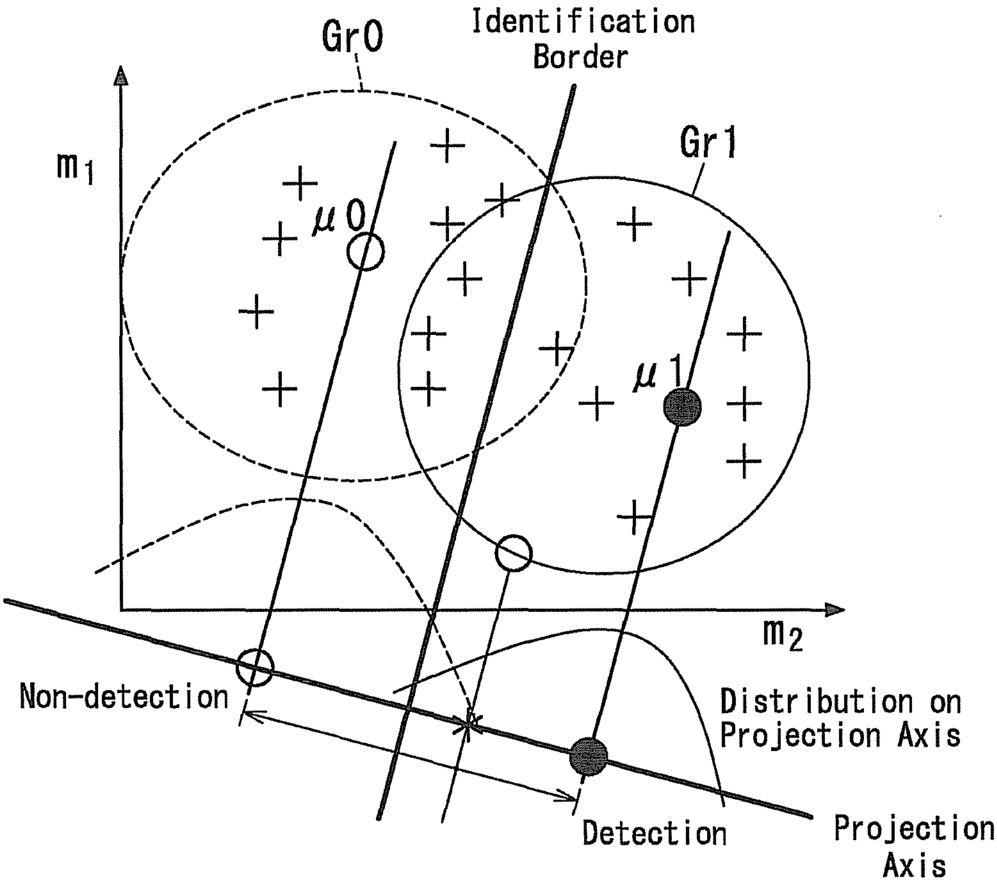
Gr0
Identification Border
Gr1
$m_1$
$\mu$0
$\mu$1
$m_2$
Non-detection
Distribution on Projection Axis
Detection
Projection Axis

FIG. 18

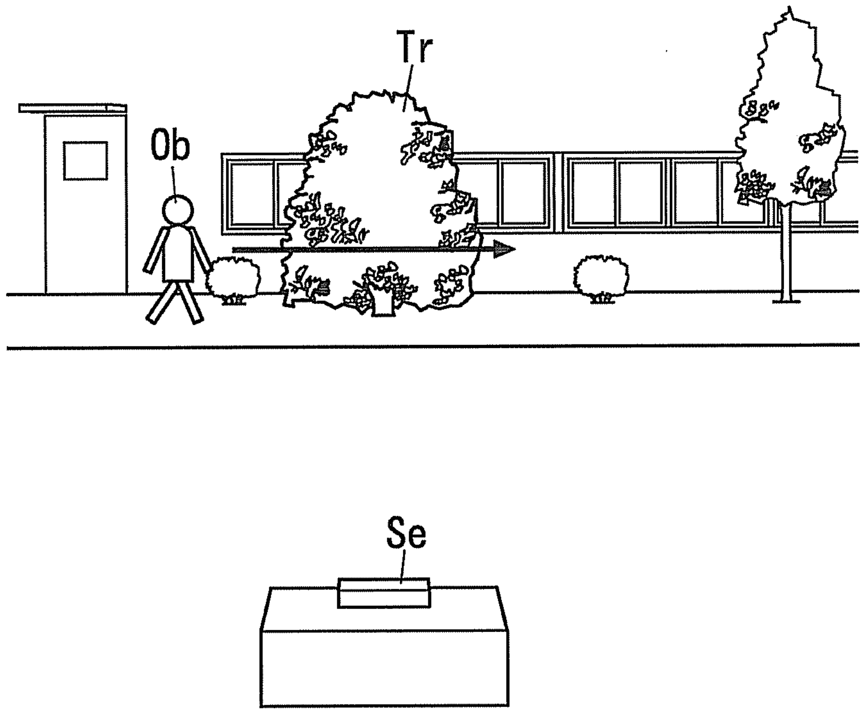

FIG. 19

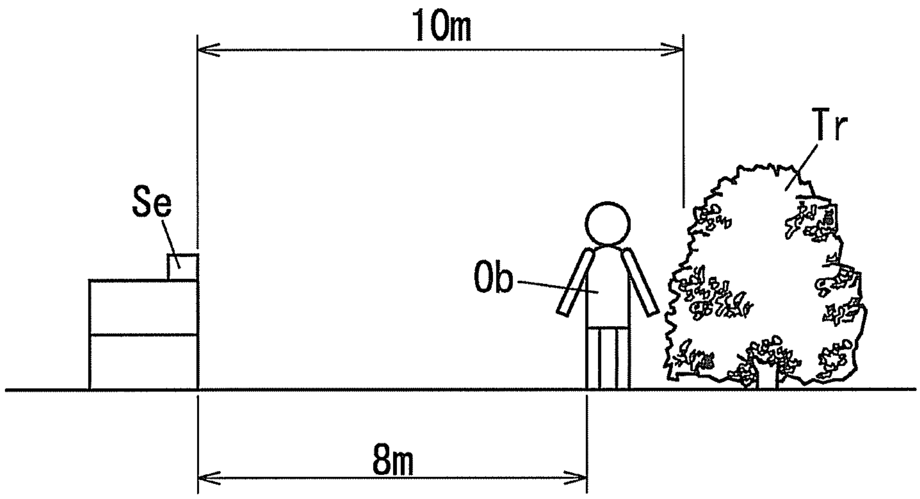

FIG. 20

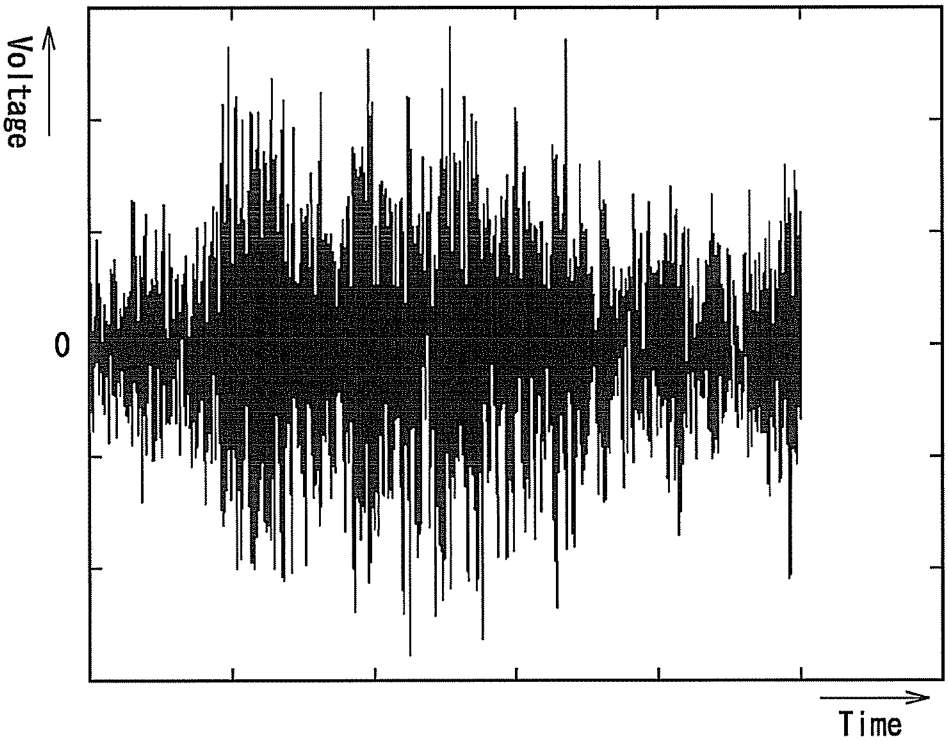

*FIG. 21*

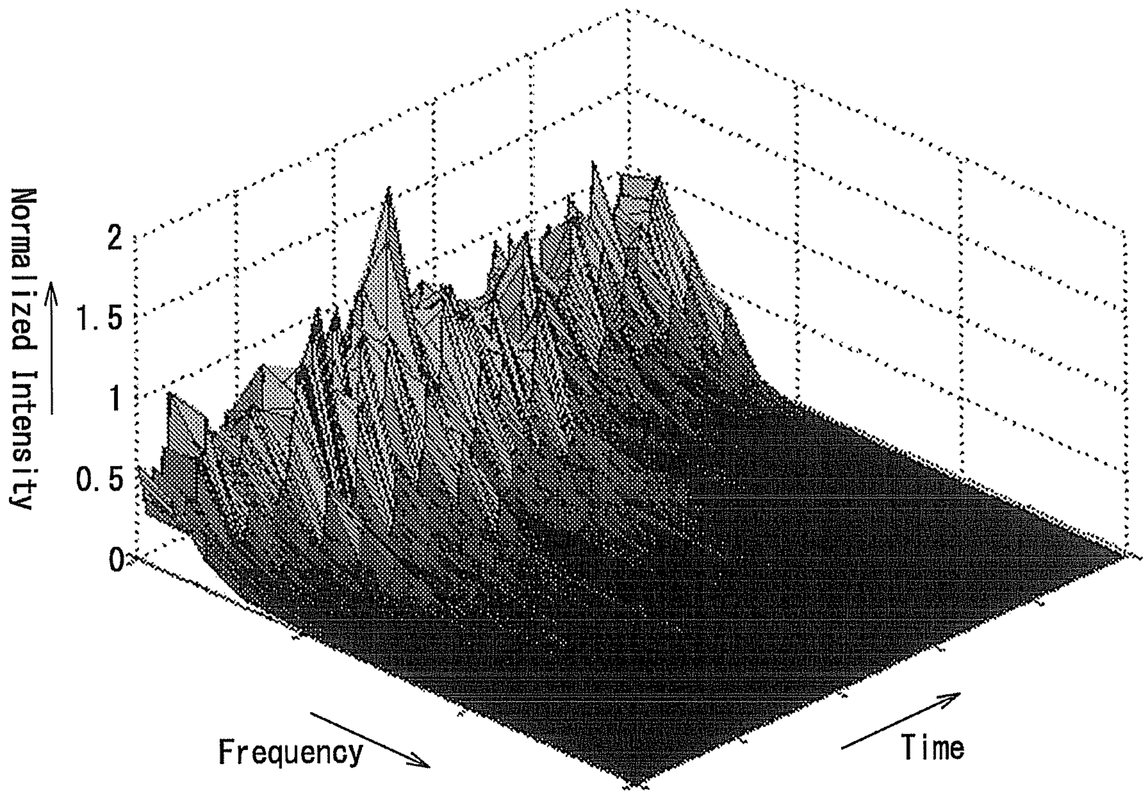

FIG. 22

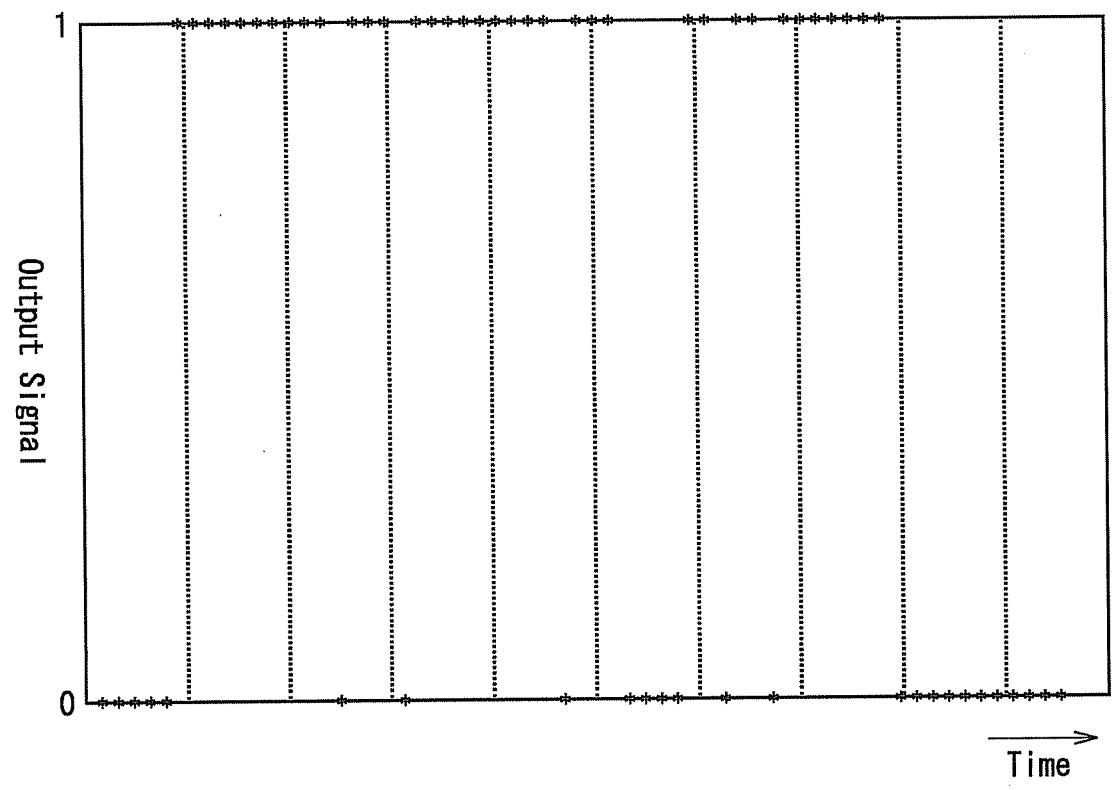

FIG. 23

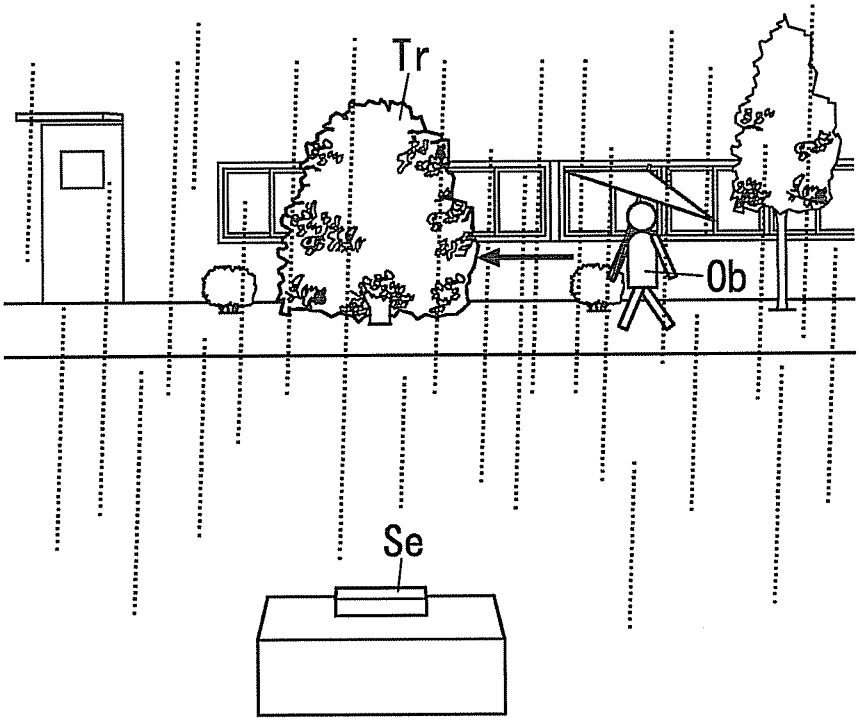

FIG. 24

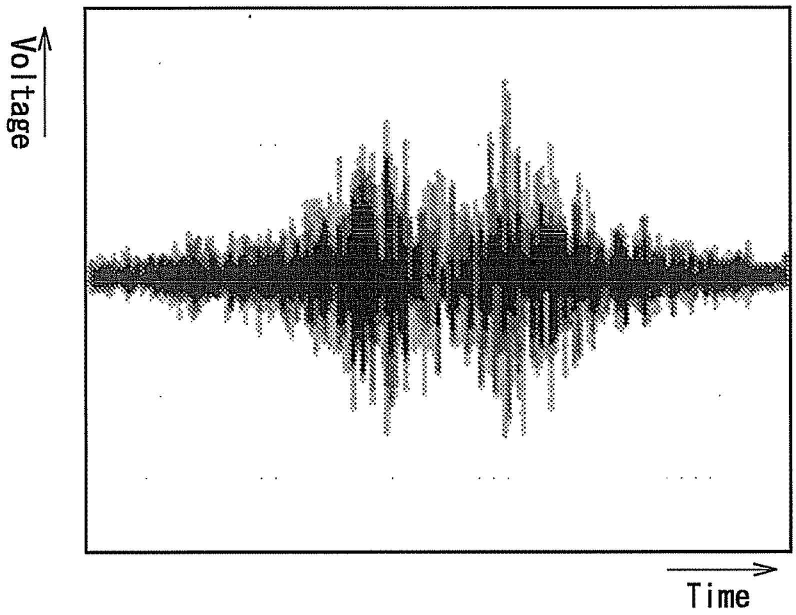

FIG. 25

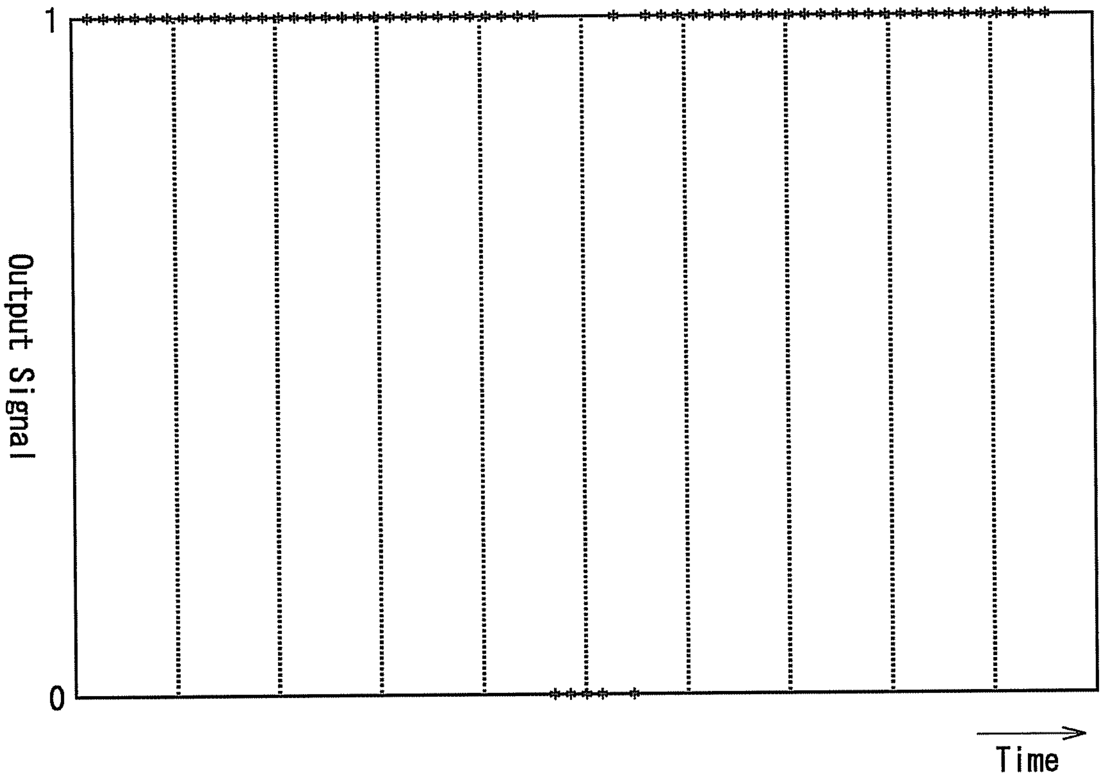

FIG. 26

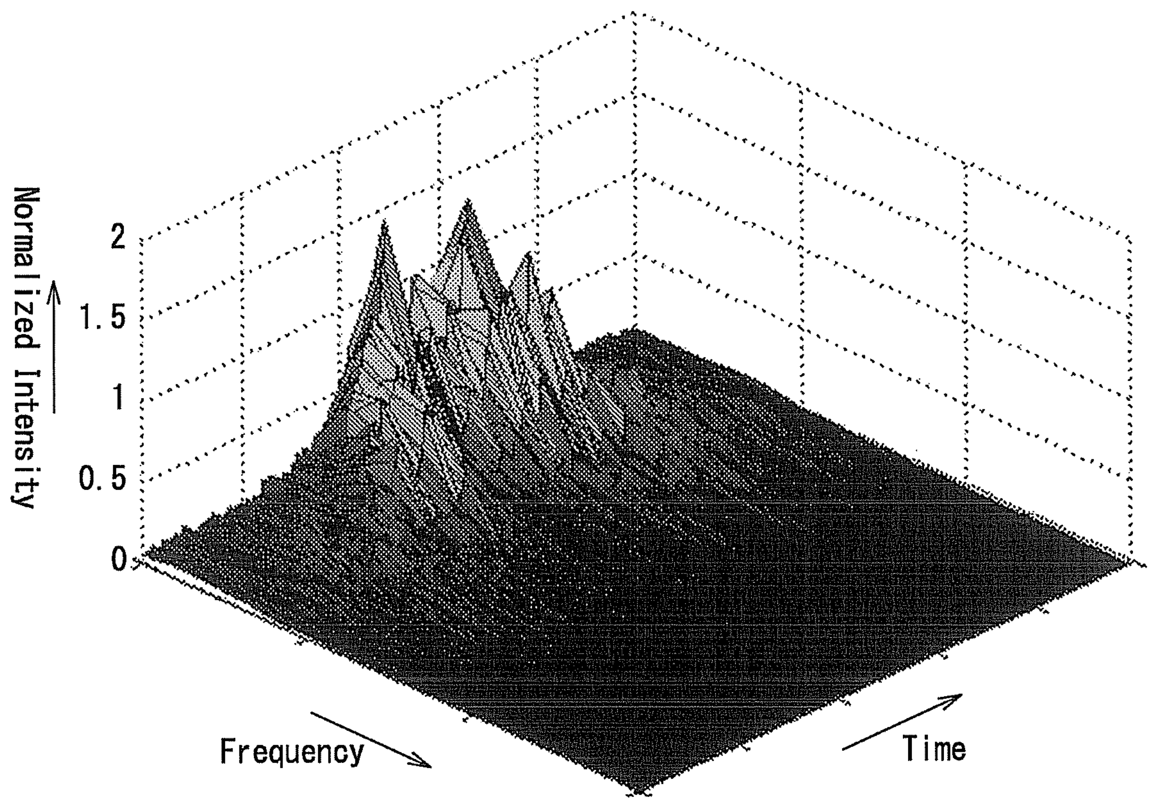

FIG. 27

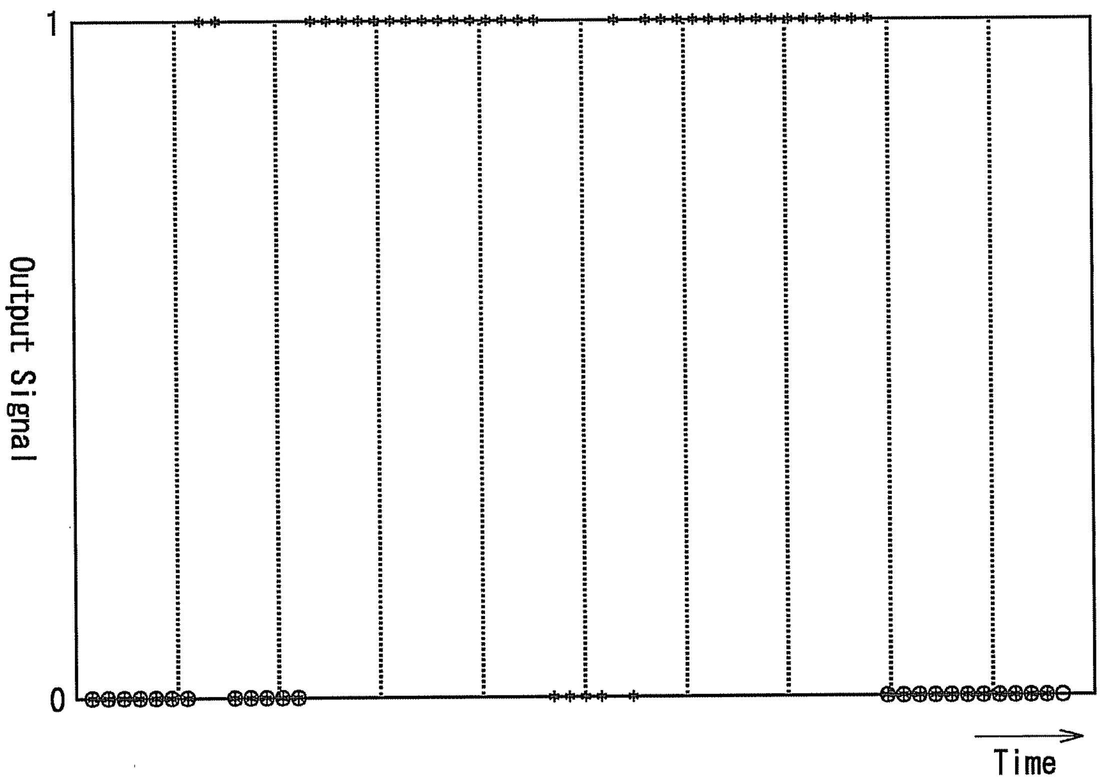

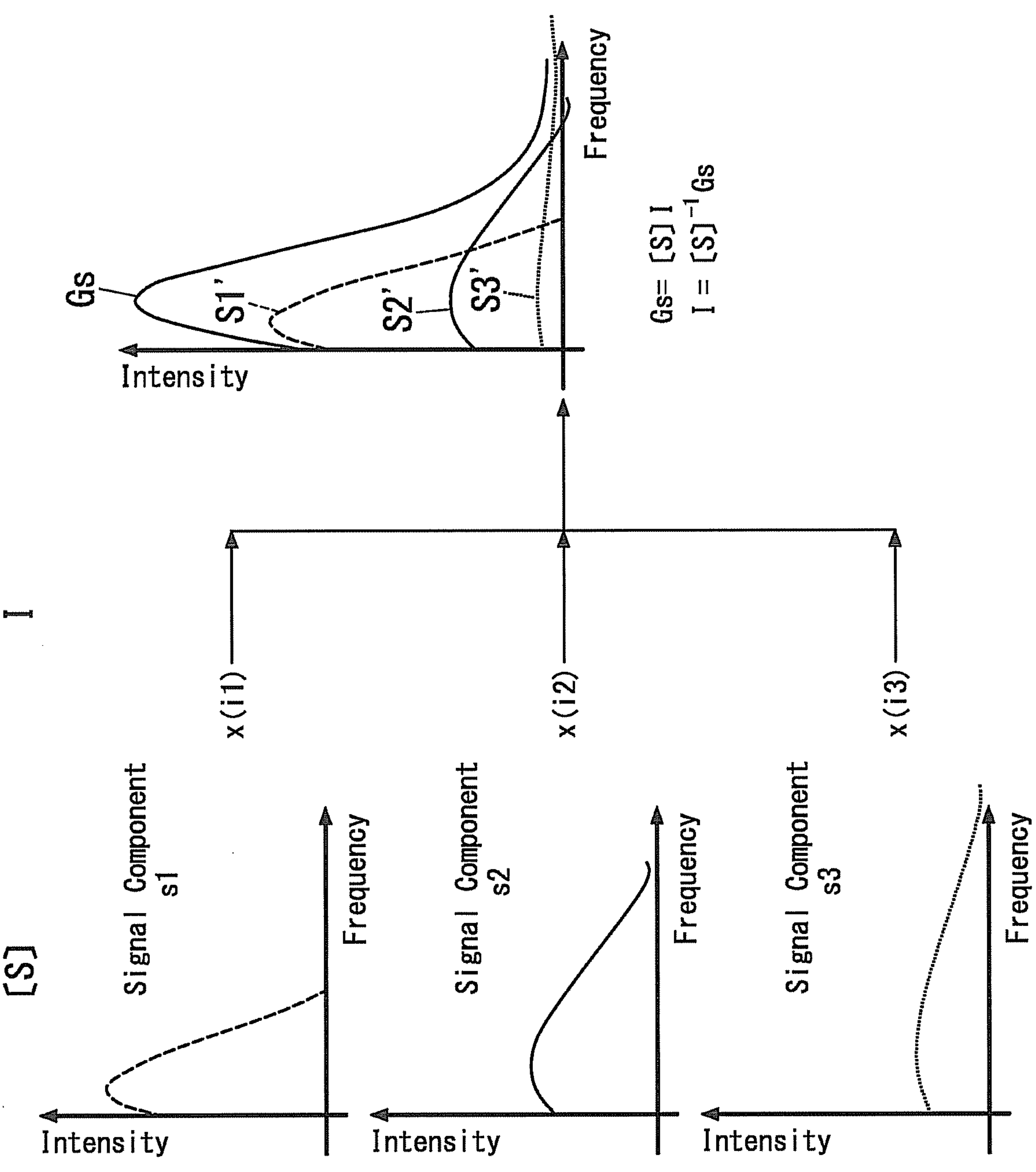
[S]
Signal Component s1
Intensity
Frequency
Signal Component s2
Intensity
Frequency
Signal Component s3
Intensity
Frequency
I
x(i1)
x(i2)
x(i3)
Gs
S1'
S2'
S3'
Intensity
Frequency
Gs= [S] I
I = [S]$^{-1}$Gs

FIG. 28

FIG. 29

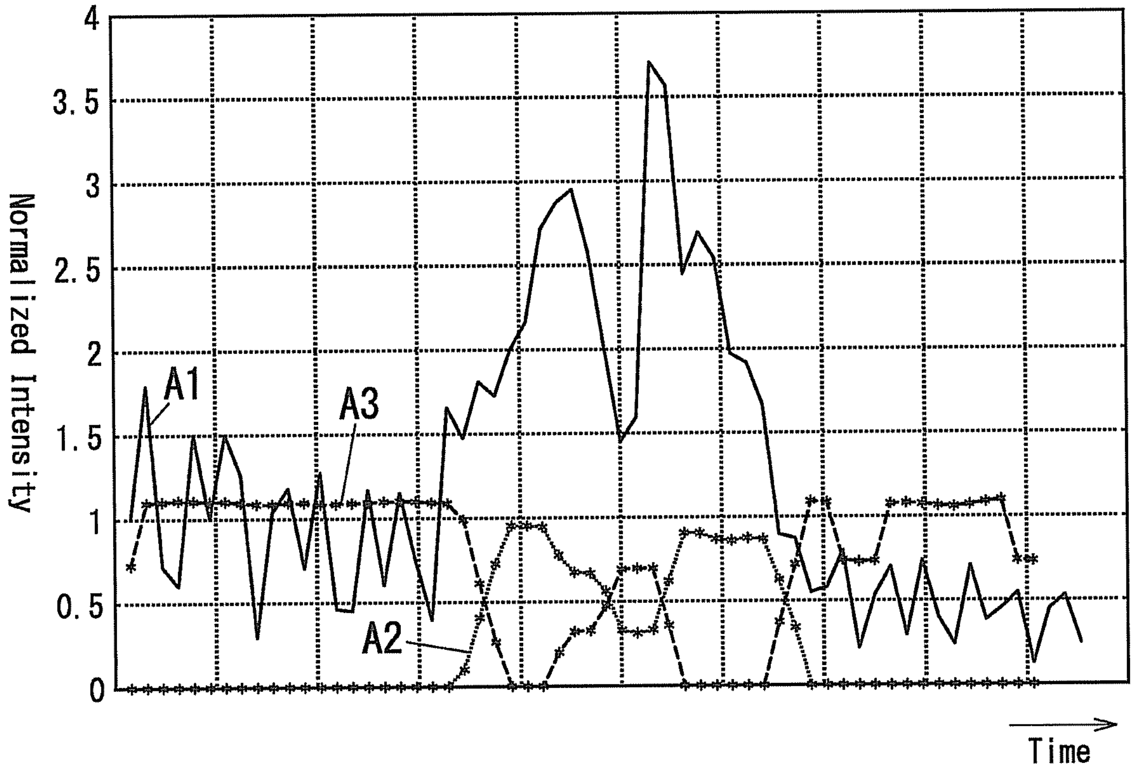

FIG. 30

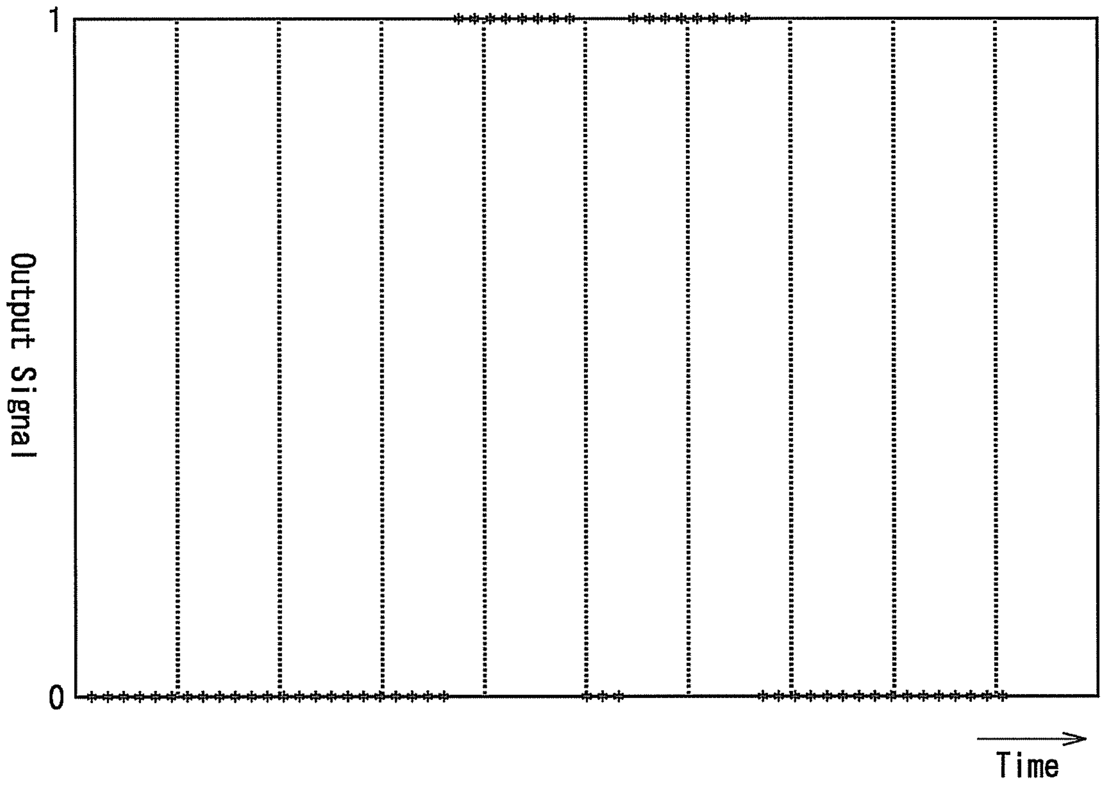

FIG. 31

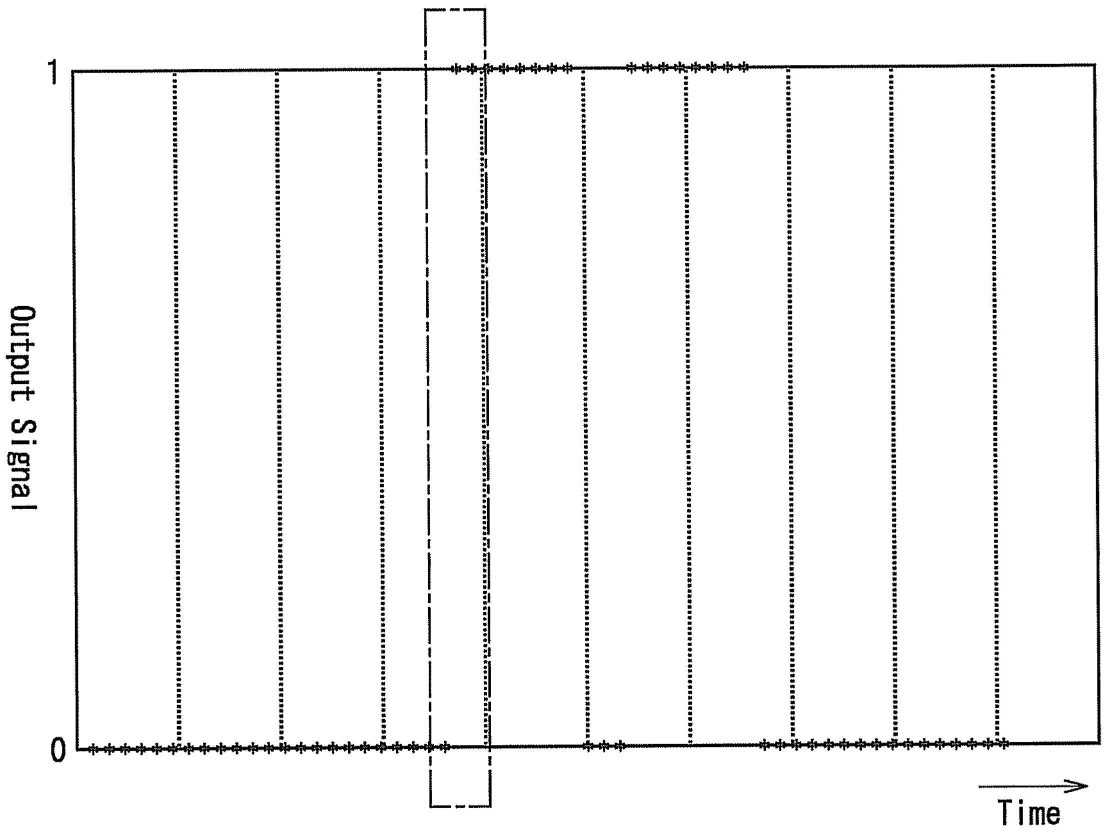

*FIG. 32*

(a)

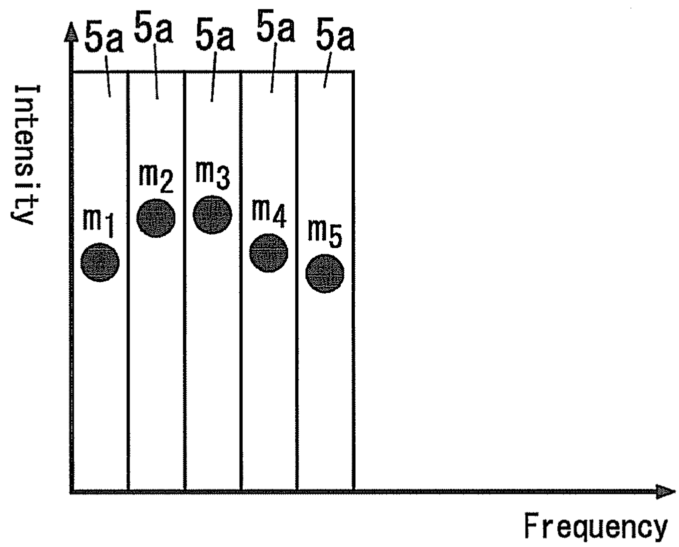

FIG. 33

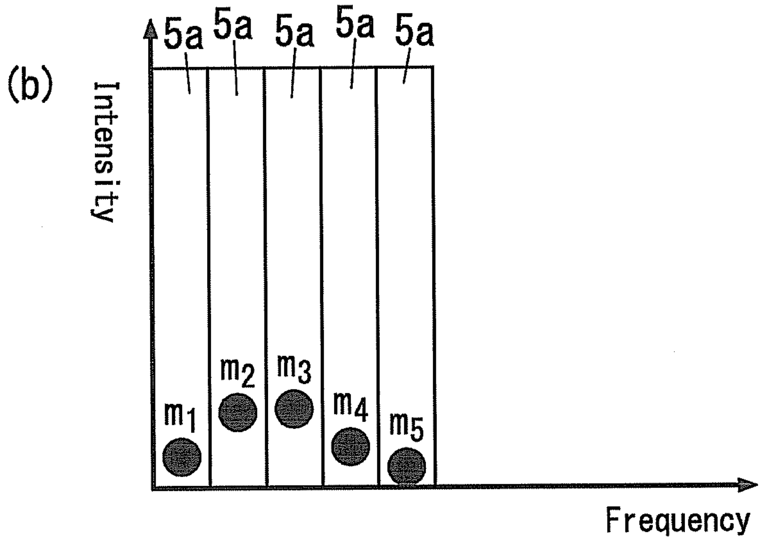

FIG. 34

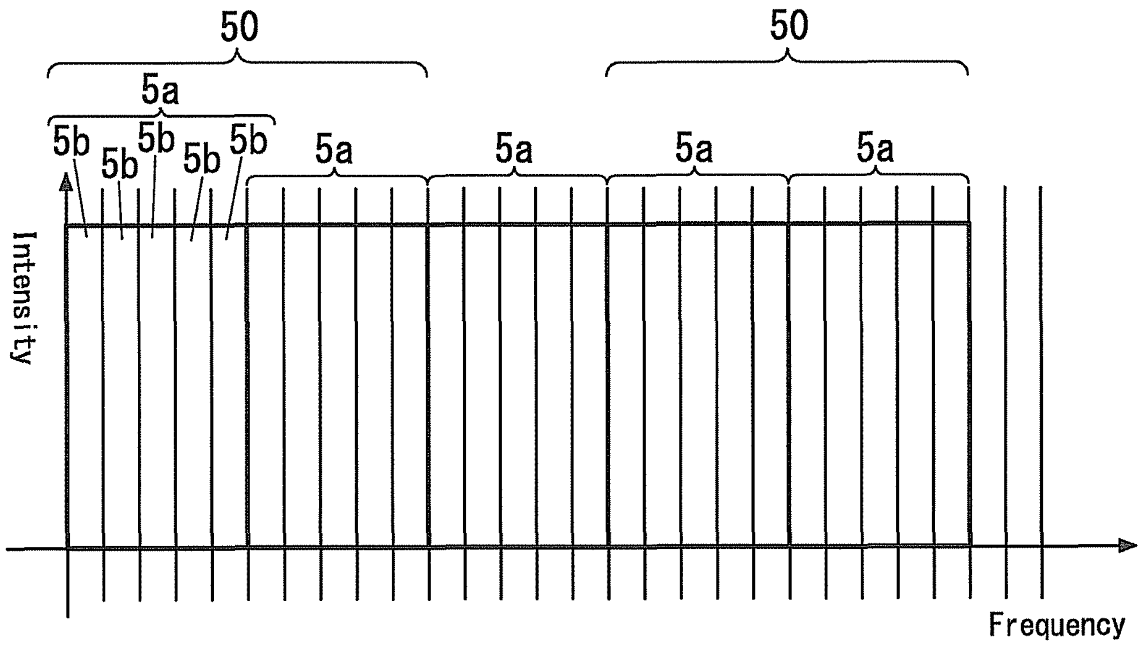

FIG. 35

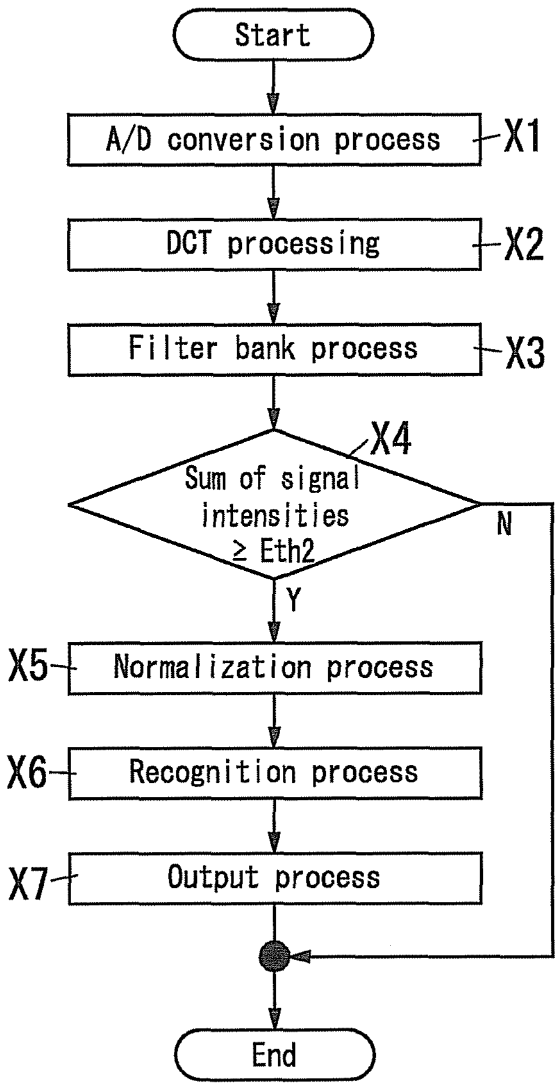
Start
A/D conversion process
X1
DCT processing
X2
Filter bank process
X3
X4
Sum of signal intensities ≥ Eth2
N
Y
X5
Normalization process
X6
Recognition process
X7
Output process
End

FIG. 36

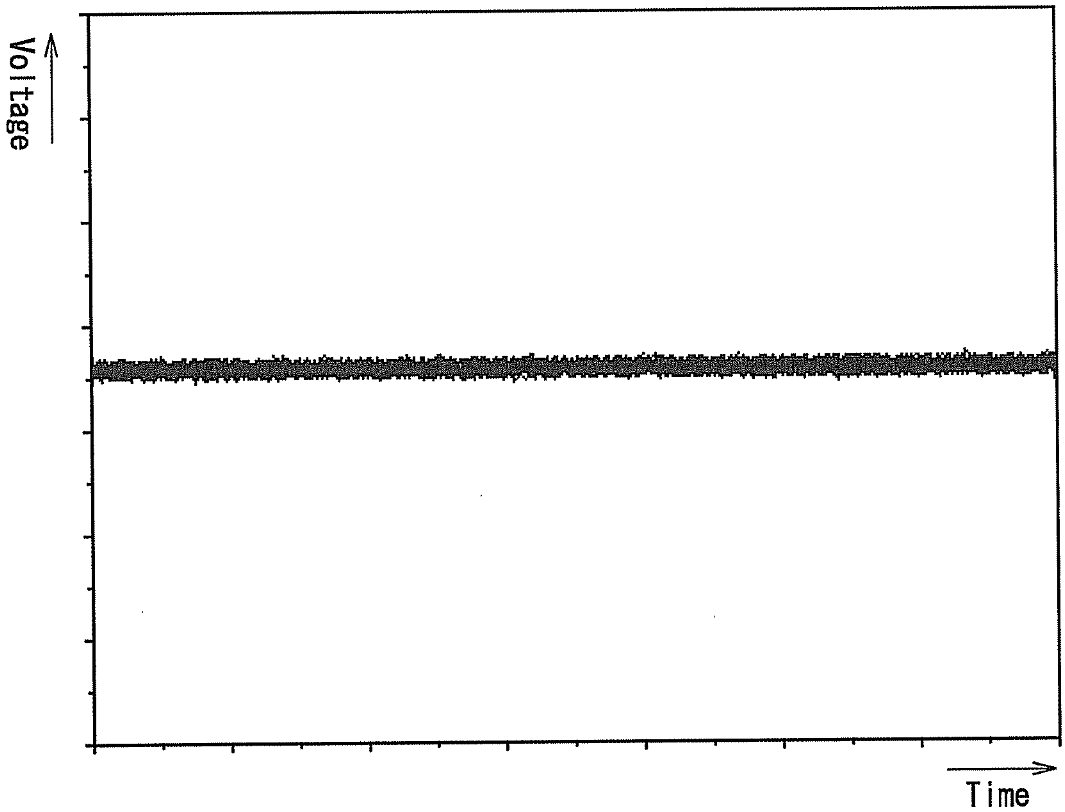

FIG. 37

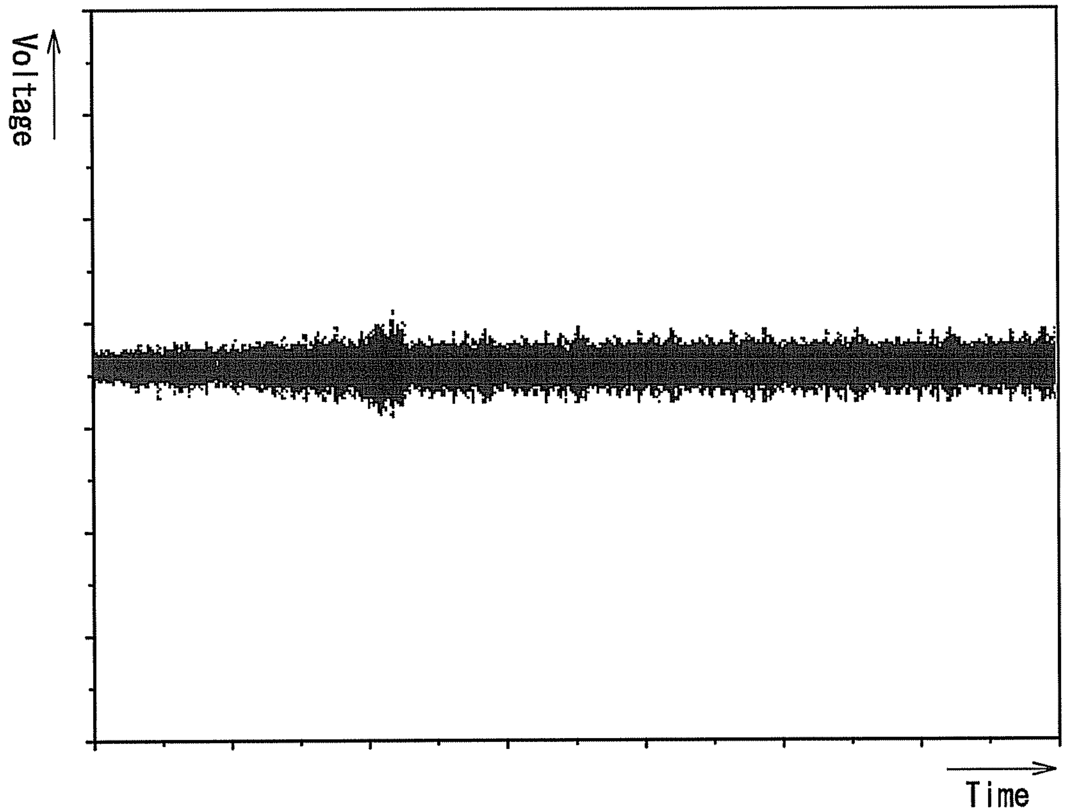

*FIG. 38*

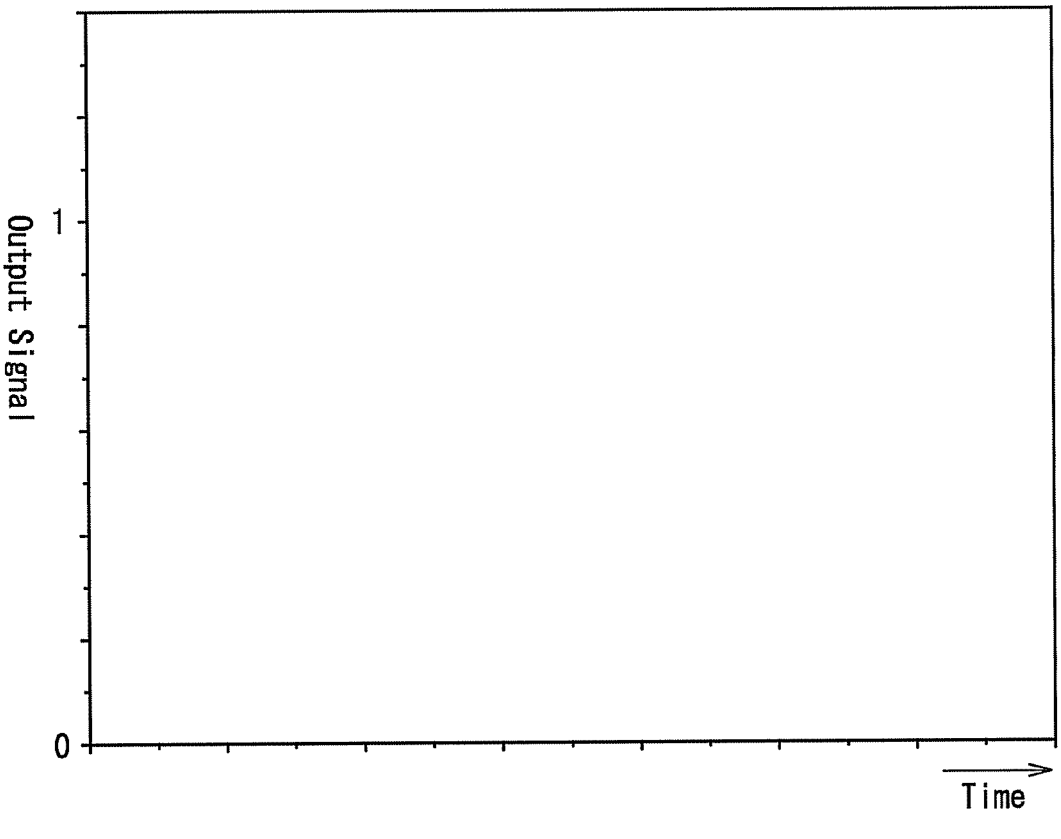

FIG. 39

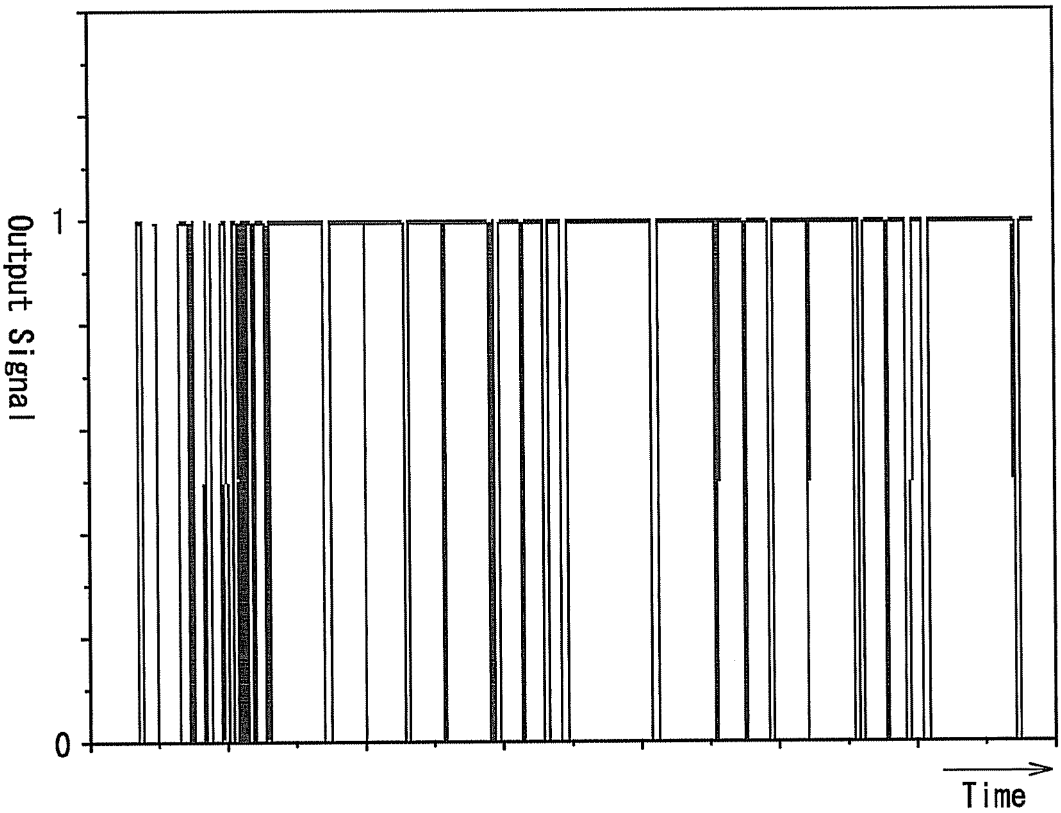

FIG. 40

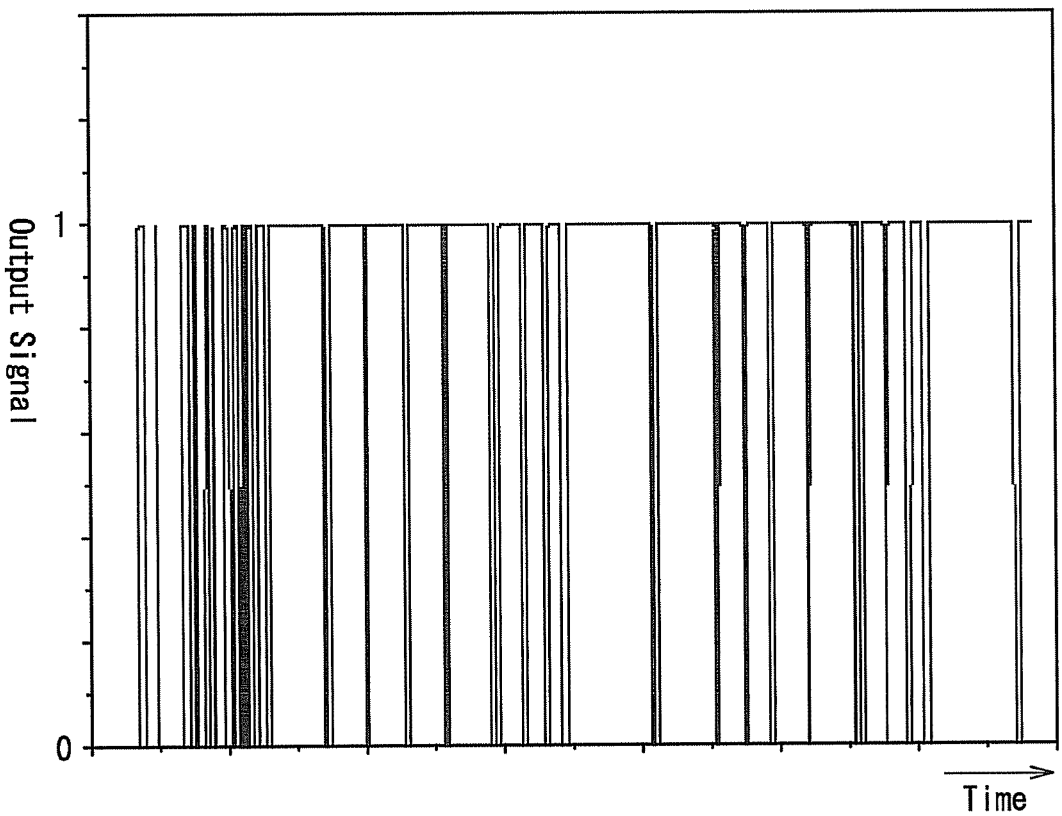

FIG. 41

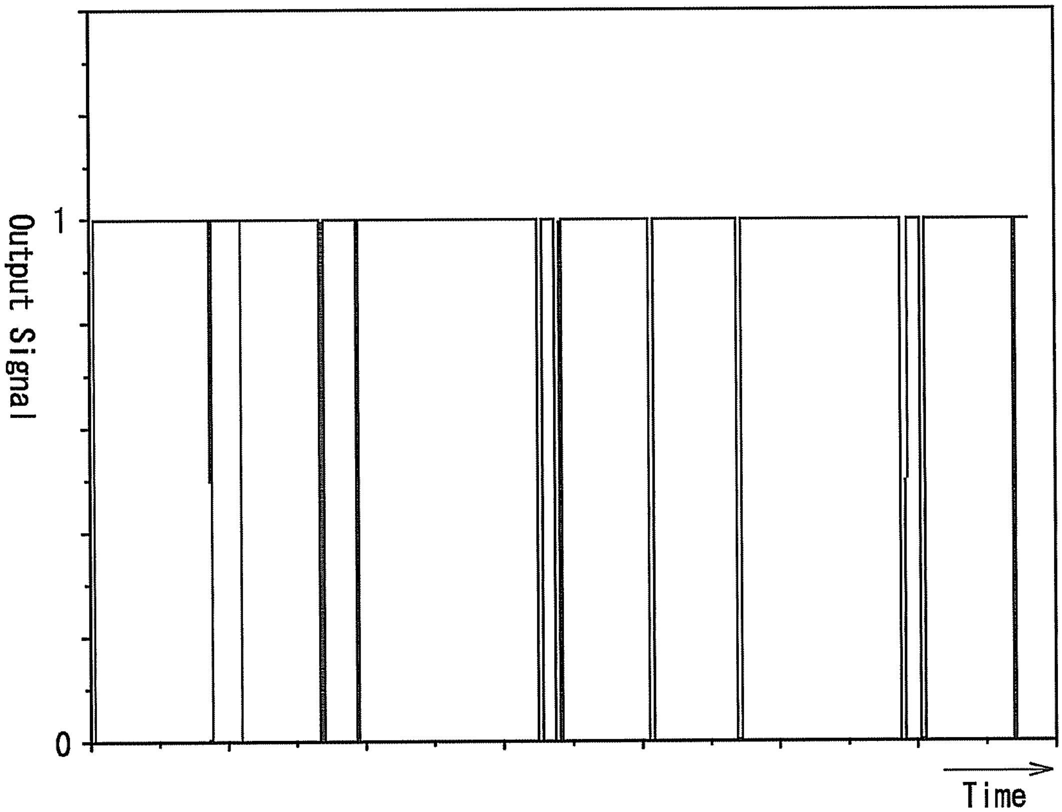

FIG. 42

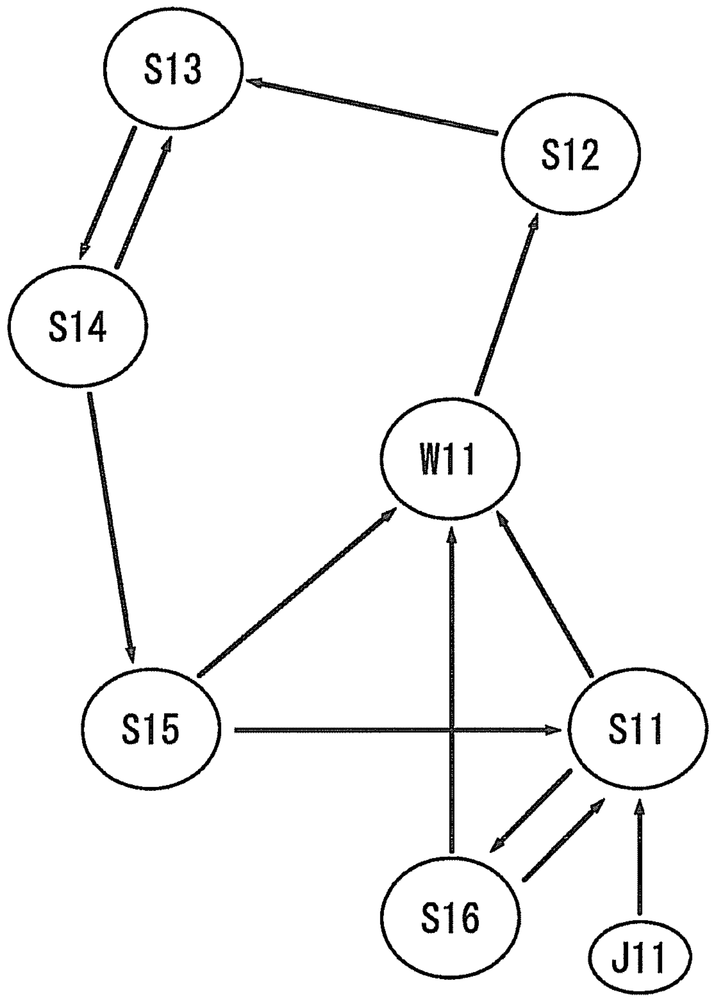

FIG. 43

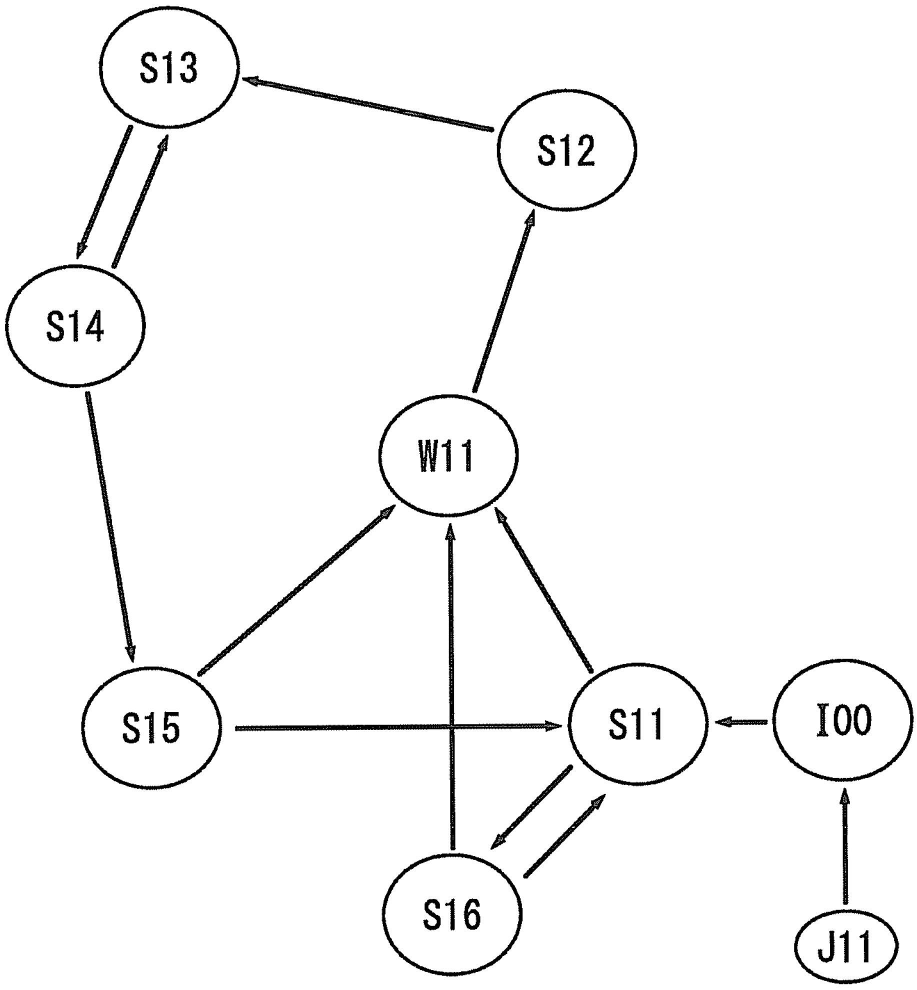

FIG. 44

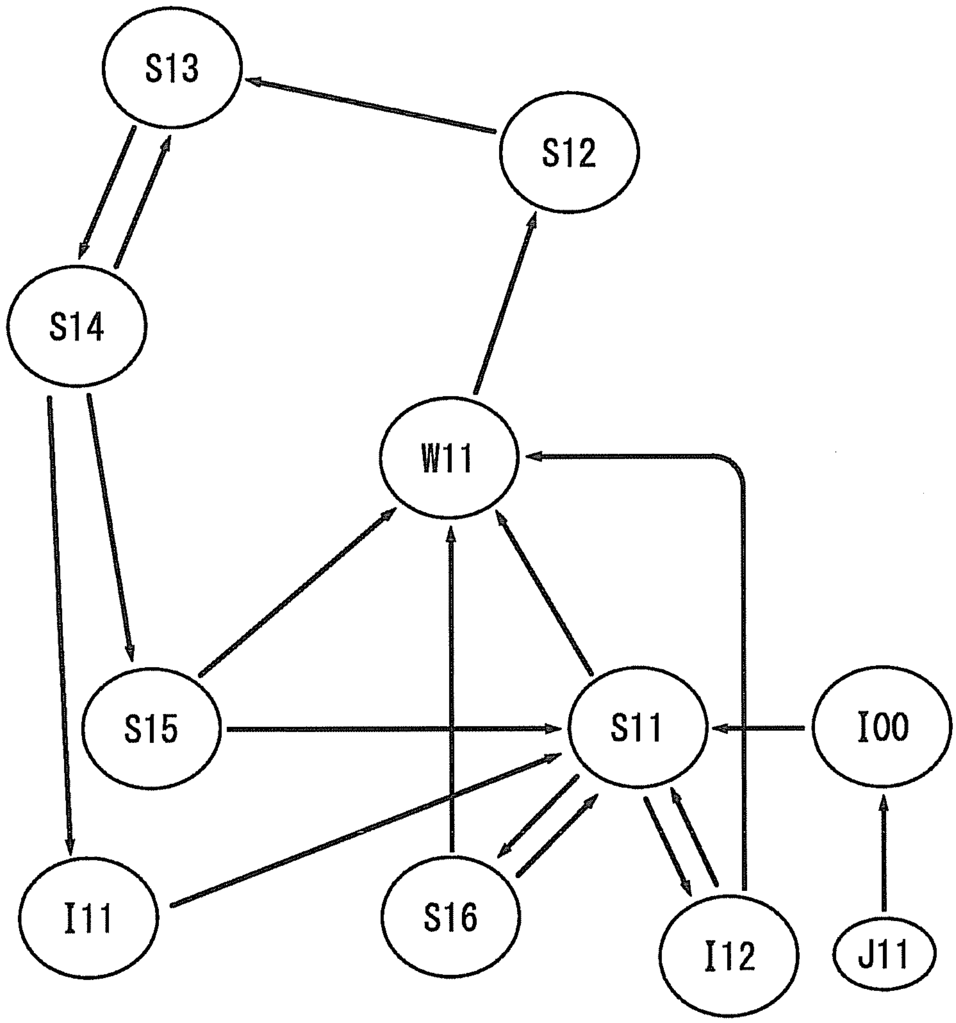

FIG. 45

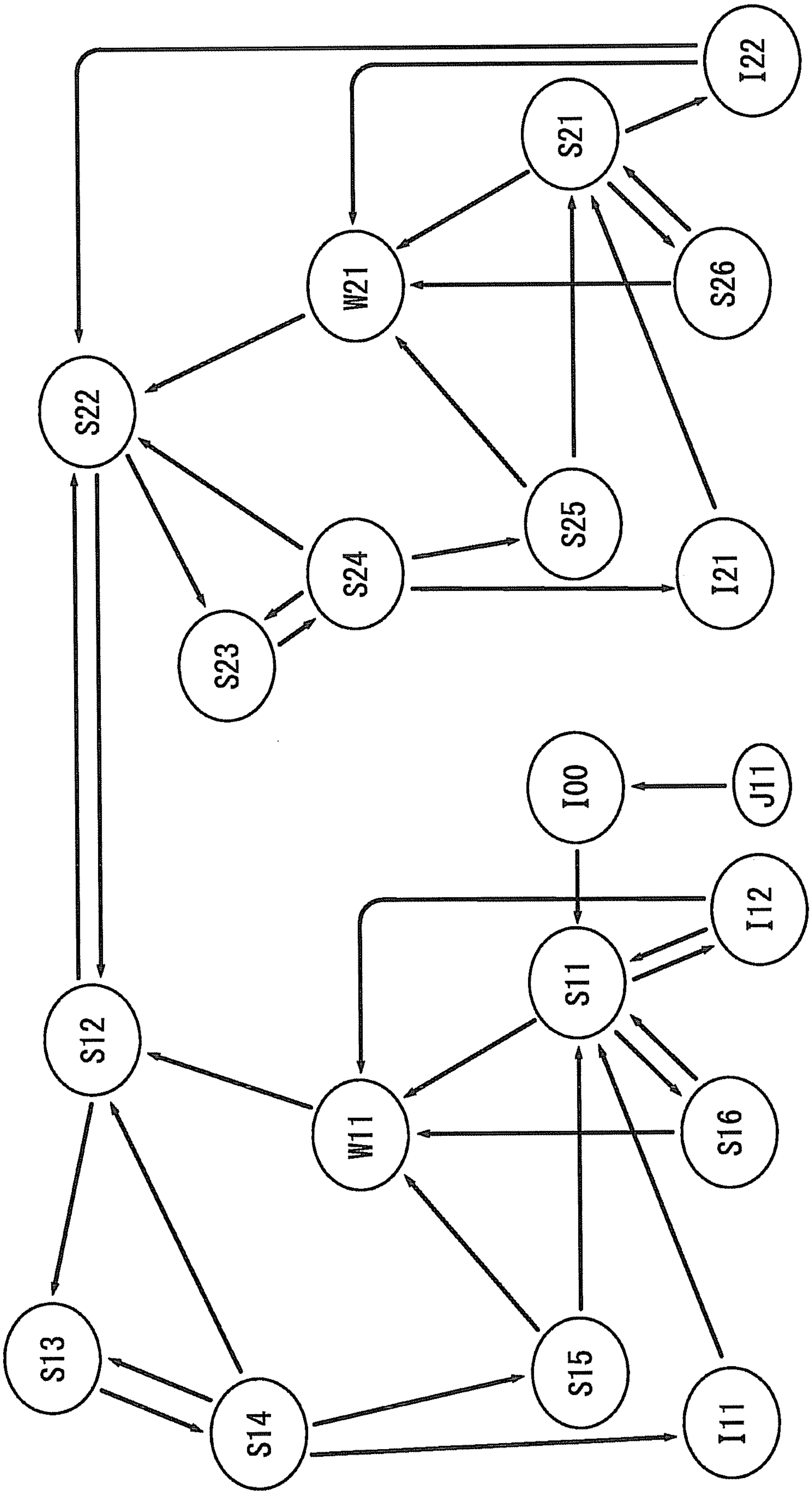

S11
S12
S13
S14
S15
S16
W11
I11
I12
I00
J11
S21
S22
S23
S24
S25
S26
W21
I21
I22

FIG. 46

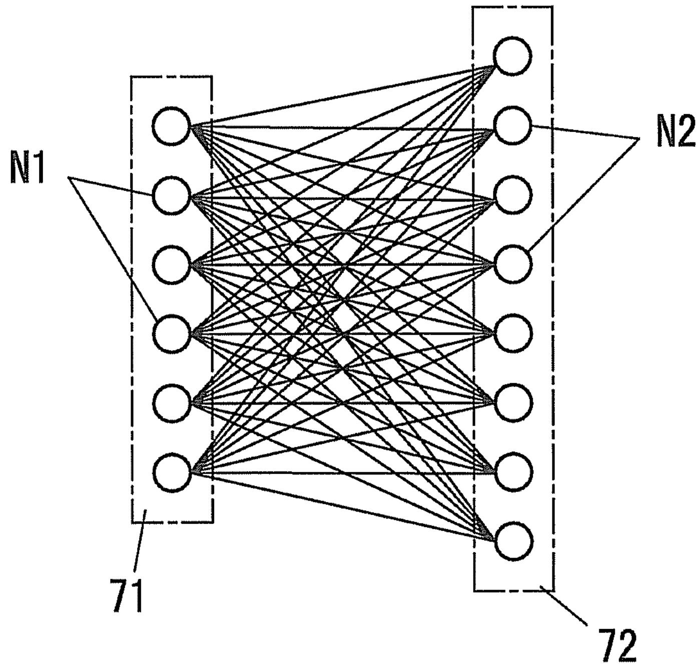

FIG. 47

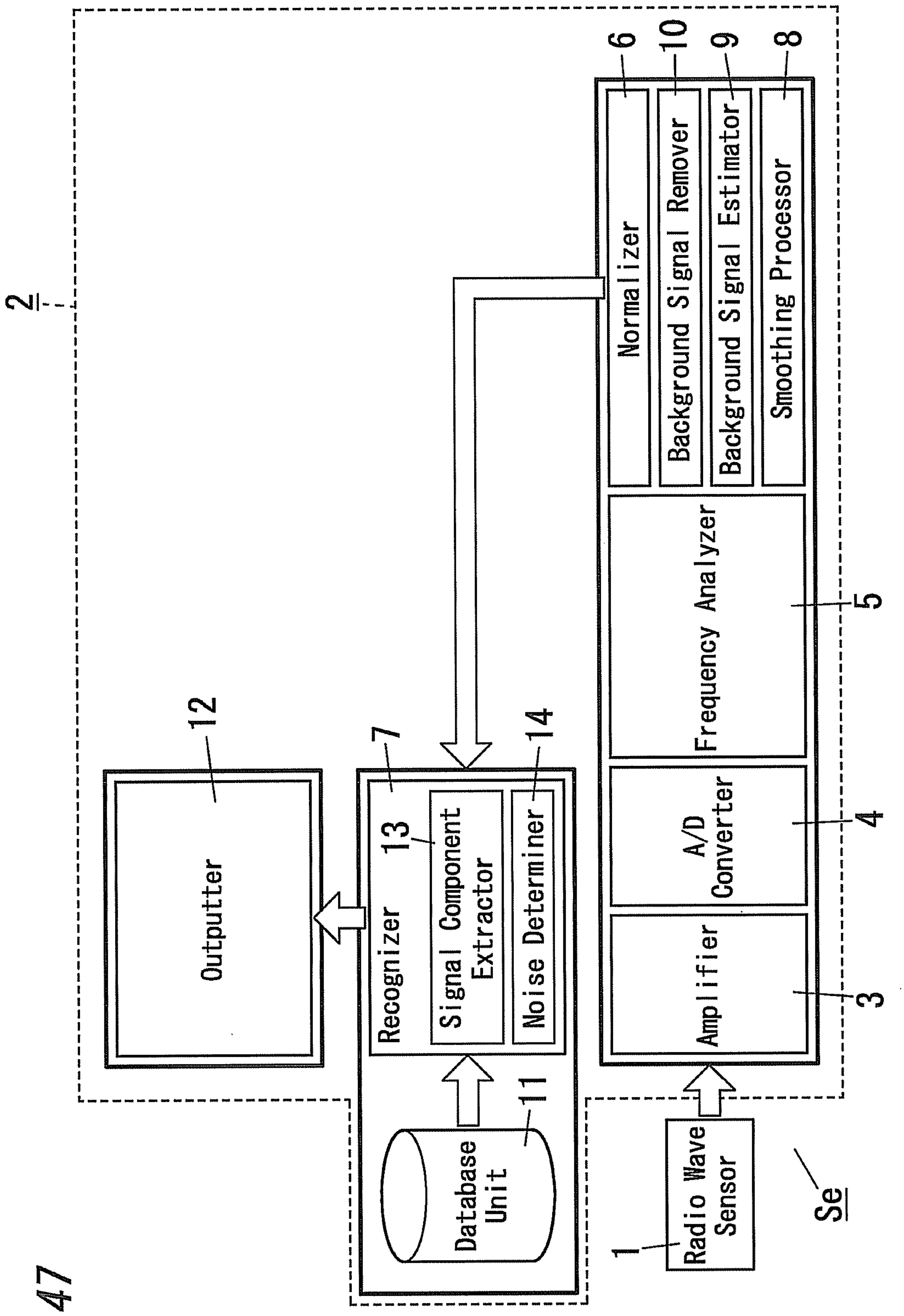
2
Outputter
12
Recognizer
7
13
Signal Component Extractor
Noise Determiner
14
Database Unit
11
Normalizer
6
Background Signal Remover
10
Background Signal Estimator
9
Smoothing Processor
8
Frequency Analyzer
5
A/D Converter
4
Amplifier
3
Radio Wave Sensor
1
Se

FIG. 48

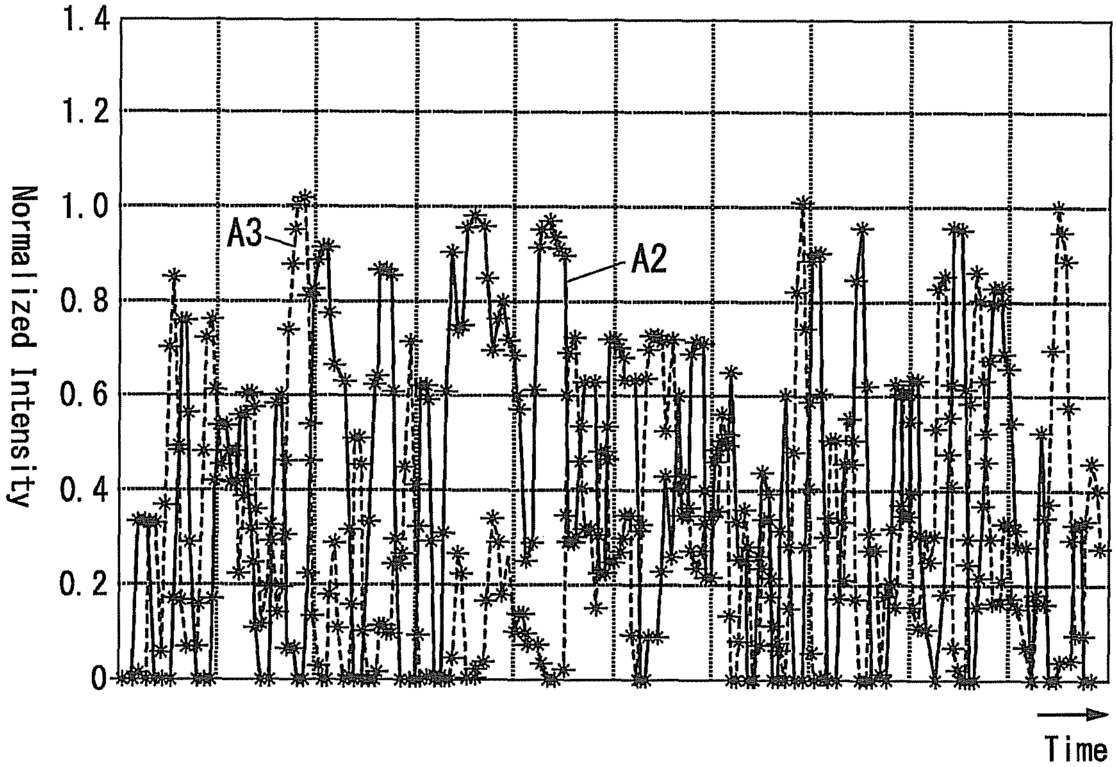

FIG. 49

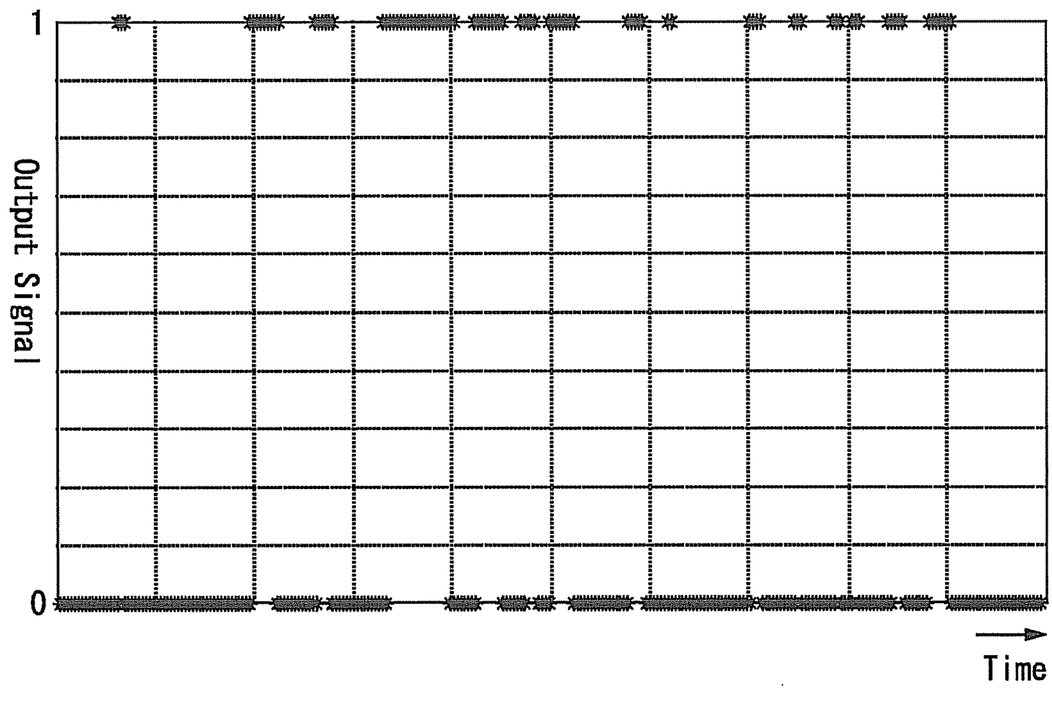

FIG. 50

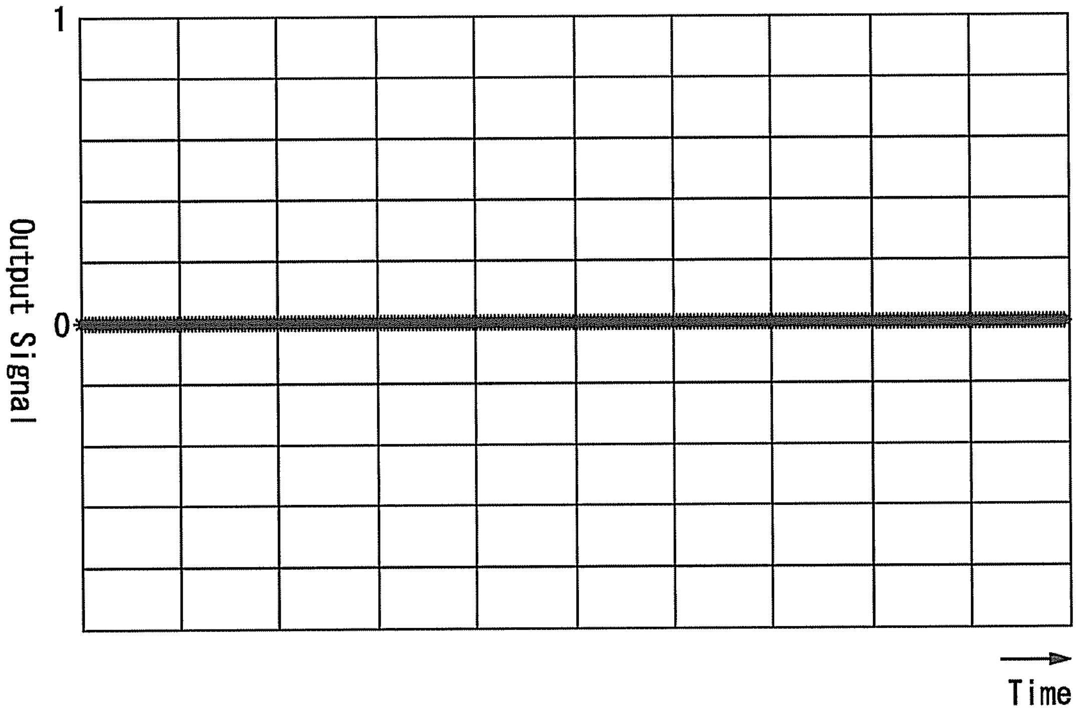

FIG. 51

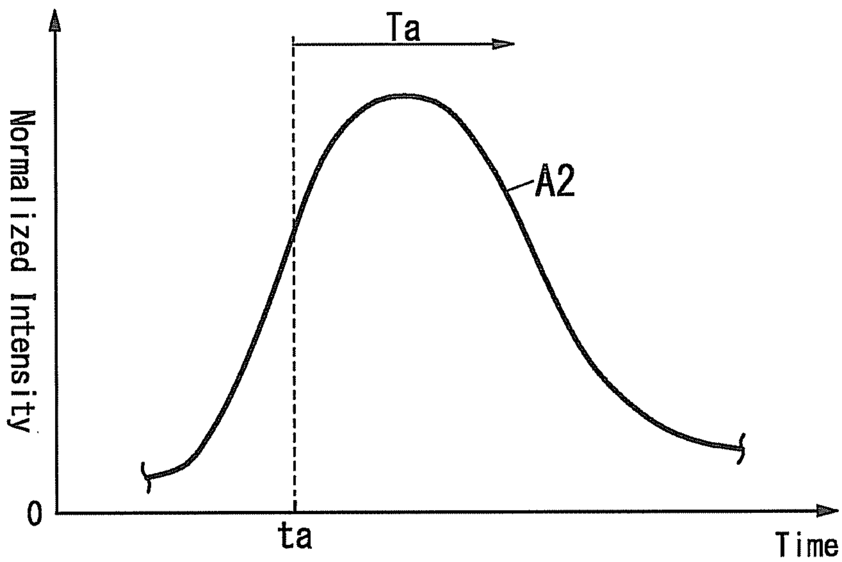

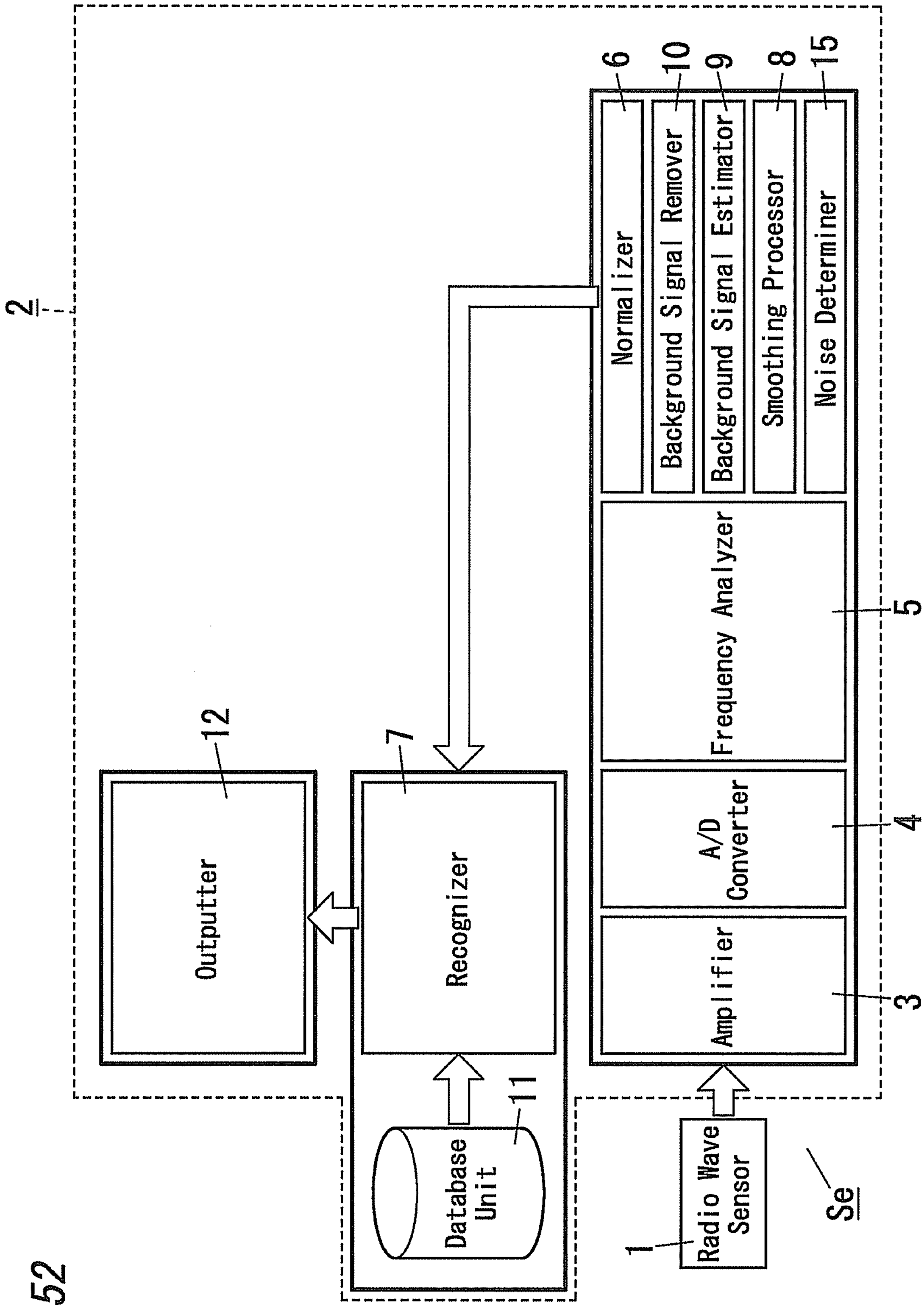
2
Normalizer
Background Signal Remover
Background Signal Estimator
Smoothing Processor
Noise Determiner
6
10
9
8
15
Frequency Analyzer
5
A/D Converter
4
Amplifier
3
Recognizer
7
Outputter
12
Database Unit
11
Radio Wave Sensor
1
Se

FIG. 52

FIG. 53

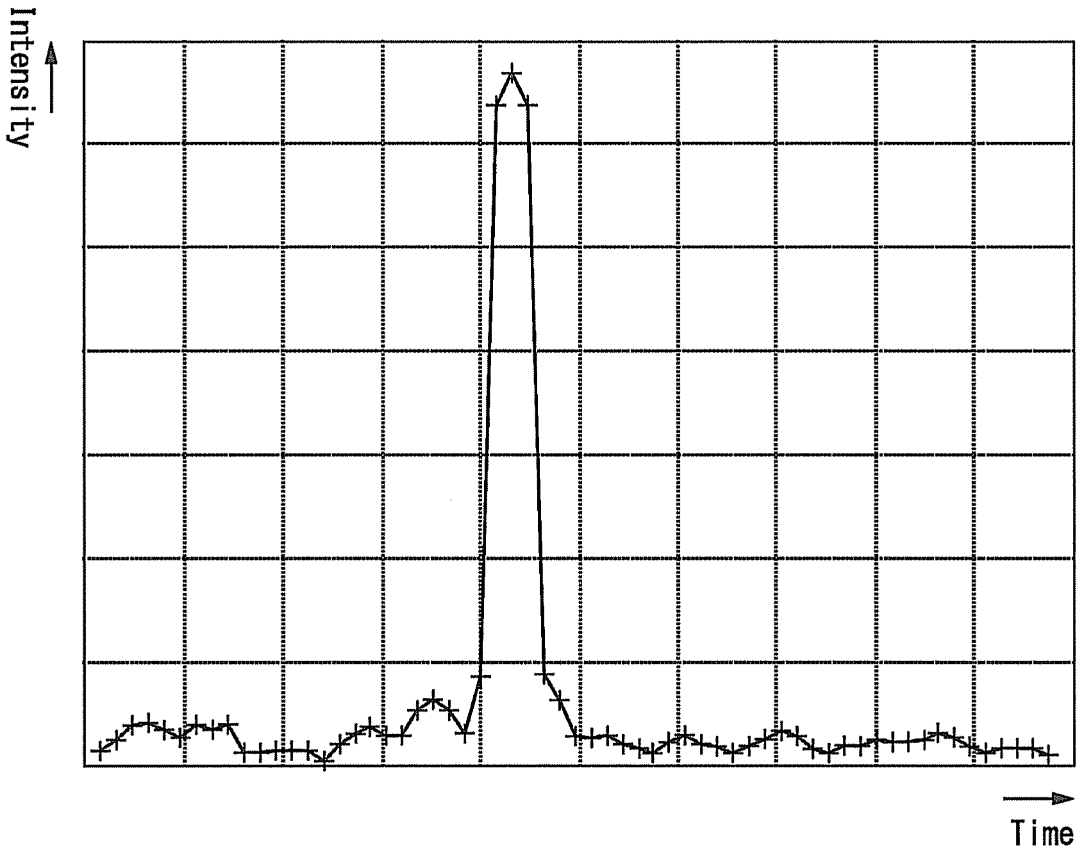

FIG. 54

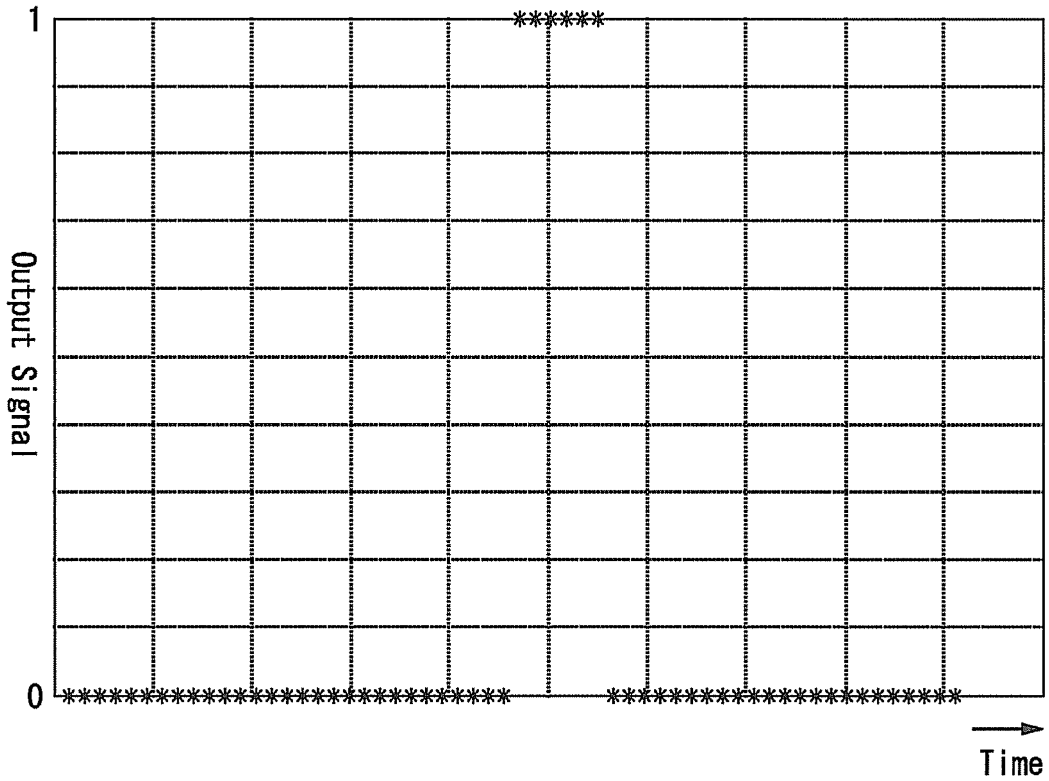

FIG. 55

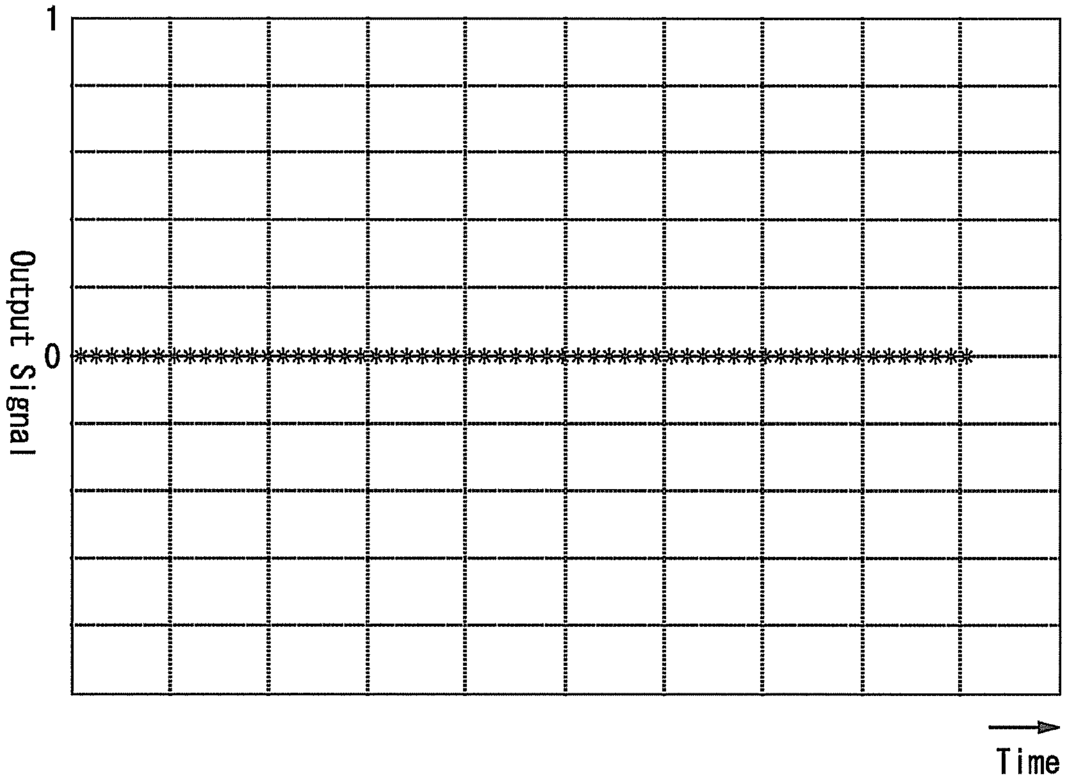

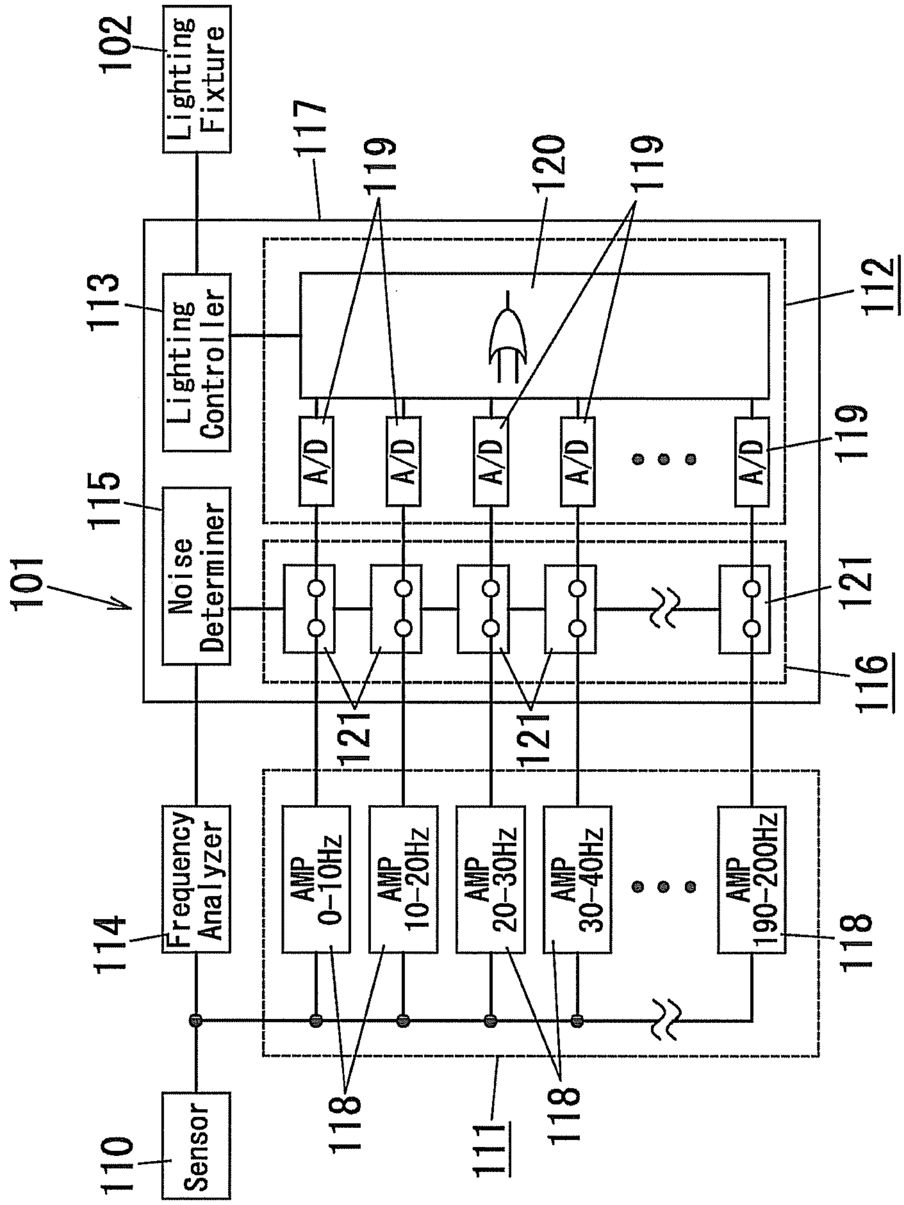
102
Lighting Fixture
117
119
120
119
113
Lighting Controller
112
115
Noise Determiner
A/D
A/D
A/D
A/D
A/D
119
101
121
121
121
116
114
Frequency Analyzer
AMP 0-10Hz
AMP 10-20Hz
AMP 20-30Hz
AMP 30-40Hz
AMP 190-200Hz
118
110
Sensor
118
111
118

FIG. 56

**INTERNATIONAL SEARCH REPORT**

International application No.
PCT/JP2013/003477

A. CLASSIFICATION OF SUBJECT MATTER
*G01S7/41*(2006.01)i, *G01S13/52*(2006.01)i, *G01S13/58*(2006.01)i

According to International Patent Classification (IPC) or to both national classification and IPC

B. FIELDS SEARCHED

Minimum documentation searched (classification system followed by classification symbols)
G01S7/00-7/42, G01S13/00-13/95, G01V3/00-3/40, G08B13/00-15/02, G01R23/00-23/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2010-191857 A (Ibaraki University),<br>02 September 2010 (02.09.2010),<br>paragraphs [0014] to [0045]; fig. 1 to 3<br>(Family: none) | 1-19<br>20-25 |
| Y<br>A | JP 2004-239845 A (Toshiba Corp.),<br>26 August 2004 (26.08.2004),<br>paragraphs [0009] to [0021]; fig. 1 to 3<br>(Family: none) | 1-19<br>20-25 |
| Y<br>A | JP 2002-65640 A (Hitachi, Ltd.),<br>05 March 2002 (05.03.2002),<br>paragraphs [0040] to [0051]; fig. 3 to 4<br>(Family: none) | 1-19<br>20-25 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 August, 2013 (23.08.13) | 03 September, 2013 (03.09.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2013/003477

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2007-271559 A (Secom Co., Ltd.), 18 October 2007 (18.10.2007), paragraphs [0011] to [0070]; fig. 1 to 6 (Family: none) | 2-11<br>1,12-25 |
| Y<br>A | JP 5-333138 A (Mitsubishi Heavy Industries, Ltd.), 17 December 1993 (17.12.1993), paragraphs [0011] to [0020]; fig. 1 to 3 (Family: none) | 12-15<br>1-11,16-25 |
| A | JP 2008-249405 A (Mitsubishi Motors Corp.), 16 October 2008 (16.10.2008), paragraph [0022] (Family: none) | 1-25 |
| A | JP 2007-33155 A (Secom Co., Ltd.), 08 February 2007 (08.02.2007), paragraphs [0019] to [0077]; fig. 1 to 9 (Family: none) | 1-25 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011047779 A